(19)

Europäisches
Patentamt
European
Patent Office
Office européen
des brevets

(11) **EP 4 202 732 A1**

(12) **EUROPEAN PATENT APPLICATION**

(43) Date of publication:
**28.06.2023 Bulletin 2023/26**

(21) Application number: **21383209.0**

(22) Date of filing: **23.12.2021**

(51) International Patent Classification (IPC):
***G06F 17/16*** *(2006.01)*

(52) Cooperative Patent Classification (CPC):
**G06F 17/16**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Multiverse Computing S.L.
20009 Donostia (ES)**

(72) Inventors:
• **ESKISAN, Soydan
Rochester (GB)**
• **MUGEL, Samuel
Toronto (FR)**
• **PALMER, Samuel
Toronto (GB)**
• **ORUS, Roman
San Sebastián (ES)**

(74) Representative: **Balder IP Law, S.L.
Paseo de la Castellana 93
5ª planta
28046 Madrid (ES)**

(54) **SYSTEM AND METHOD OF TENSOR CONTRACTION FOR TENSOR NETWORKS**

(57)     Systems and methods for performing tensor contractions are provided. The system includes a processing system and a programmable logic in communication with the processing system via a controller. The processing system includes a processing unit and a memory for storing tensors. The programmable logic includes an input data arbitrator for routing a first input tensor and a second input tensor from the controller to a tensor contraction block; the tensor contraction block that includes a network of arrays of processing elements for performing matrix multiplication operations on the first and second input tensor; and an output data arbitrator for routing an output of the tensor contraction block to the processing system. The network of arrays of processing elements may include N arrays of processing elements, where N corresponds to the rank of the output tensor.

EP 4 202 732 A1

**Description**

<u>FIELD</u>

Various embodiments are described herein that generally relate to a system for performing tensor contractions, as well as the methods.

**BACKGROUND**

The following paragraphs are provided by way of background to the present disclosure. They are not, however, an admission that anything discussed therein is prior art or part of the knowledge of persons skilled in the art.

Tensor contraction is a computer operation performed for a variety of reasons, such as artificial intelligence (AI) and machine learning applications. One example of an AI application is a neural network. The neural network may be represented by a systolic array and have components that are represented by tensors.

Tensors can be used in a variety of applications to solve complex problems as they can be operated on to solve equations. One such type of operation is the binary tensor contraction. In a binary tensor contraction, a pair of tensors is contracted. Binary tensor contraction can be recast as matrix multiplication.

However, while current systems can perform matrix multiplications on tensors of rank 2, they are not configured to perform multiplications on higher rank tensors. Providing support for higher rank tensors using current systems would result in dramatic increases in size and energy requirements.

There is accordingly a need for a system and method that addresses the challenges and/or shortcomings described above.

**SUMMARY OF VARIOUS EMBODIMENTS**

Various embodiments of a system and method for performing tensor contractions, and computer products for use therewith, are provided according to the teachings herein.

According to one aspect of the invention, there is disclosed a system for performing tensor contractions comprising: a processing system, the processing system comprising: a processing unit; and a memory for storing tensors; and a programmable logic in communication with the processing system via at least one controller, the programmable logic comprising: an input data arbitrator for routing a first input tensor and a second input tensor from the at least one controller to a tensor contraction block; the tensor contraction block comprising a network of arrays of processing elements for performing matrix multiplication operations on the first input tensor and the second input tensor; and an output data arbitrator for routing an output of the tensor contraction block to the processing system.

In at least one embodiment, the processing unit is configured to process each of the first input tensor and the second input tensor to obtain a corresponding first flattened array and a second flattened array

In at least one embodiment, the processing unit is further configured to insert at least one buffer zero in each of the first flattened array and the second flattened array.

In at least one embodiment, the processing unit is further configured to interleave the first flattened array and the second flattened array to obtain an interleaved array; and the routing the first input tensor and the second input tensor from the at least one controller to the tensor contraction block comprises transmitting the interleaved array to the tensor contraction block.

In at least one embodiment, the processing unit is configured to: determine whether the programmable logic is configured; when the programmable logic is not configured, provide first instructions for configuring the programmable logic, where the first instructions are based on at least one of dimensions of the output tensor, and a data width of each element of each of the first input tensor and the second input tensor; and when the programmable logic is configured, provide second instructions for partially reconfiguring the programmable logic using an archive of pre-generated instructions or generating new instructions, based on dimensions of the first input tensor and the second input tensor.

In at least one embodiment, the input data arbitrator is configured to: instantiate a demultiplexer for each array of processing elements in the network of arrays of processing elements; and wherein the routing the first input tensor and the second input tensor from the at least one controller to the tensor contraction block comprises: operating the demultiplexer to transmit one element of each of the first input tensor and the second input tensor to the corresponding array of processing elements at each clock cycle.

In at least one embodiment, the input arbitrator is further configured to: instantiate a zero generator for each array of processing elements in the network of processing elements; and operate the zero generator to generate at least one buffer zero when transmitting each of the first input tensor and the second input tensor to the tensor contraction block.

In at least one embodiment, the routing the output of the tensor contraction block to the processing system comprises: instantiating a multiplexer for each array of processing elements in the network of arrays of processing elements; transmitting the output of the tensor contraction block to the multiplexer at each clock cycle; and transmitting an output of the multiplexer to the processing system.

In at least one embodiment, the network of arrays of processing elements comprises NK arrays of processing elements, where NK corresponds to a rank of the output of the tensor contraction block.

In at least one embodiment, the processing unit is configured to: divide at least one of the first input tensor and the second input tensor into at least two arrays; and assign each of the at least two arrays to a separate controller of the at least one controller.

According to another aspect of the invention, there is disclosed a method of performing tensor contractions, the method comprising: routing, by an input data arbitrator, a first input tensor and a second input tensor from at least one controller to a tensor contraction block; performing matrix multiplication operations, by a tensor contraction block comprising a network of arrays of processing elements, on the first input tensor and the second input tensor; and routing, by an output data arbitrator, an output of the tensor contraction block to a processing system.

In at least one embodiment, the method further comprises: processing, by the processing system, each of the first input tensor and the second input tensor to obtain a corresponding first flattened array and second flattened array.

In at least one embodiment, the method further comprises: inserting, by the processing system, at least one buffer zero in each of the first flattened array and the second flattened array.

In at least one embodiment, the method further comprises: interleaving, by the processing system, the first flattened array and the second flattened array to obtain an interleaved array; and the routing the output of the tensor contraction block to the processing system comprises transmitting the interleaved array to the tensor contraction block.

In at least one embodiment, the method further comprises: determining, by the processing system, whether the programmable logic is configured; when the programmable logic is not configured, providing, by the processing system, first instructions for configuring the programmable logic, where the first instructions are based on at least one of dimensions of the output tensor, and a data width of each element of each of the first input tensor and the second input tensor; and when the programmable logic is configured, providing, by the processing system, second instructions for partially reconfiguring the programmable logic using an archive of pre-generated instructions or generating new instructions, based on dimensions of the first input tensor and the second input tensor.

In at least one embodiment, the method further comprises: instantiating, by the input data arbitrator, a demultiplexer for each array of processing elements in the network of processing elements; and the routing the first input tensor and the second input tensor from the at least one controller to the tensor contraction block comprises operating the demultiplexer to transmit one element of each of the first input tensor and the second input tensor to the corresponding array of processing elements at each clock cycle.

In at least one embodiment, the method further comprises: instantiating, by the input data arbitrator, a zero generator for each array of processing elements; and operating the zero generator to generate at least one buffer zero when transmitting each of the first input tensor and the second input tensor.

In at least one embodiment, the routing the output of the tensor contraction block to the processing system comprises: instantiating a multiplexer for each array of processing elements in the network of arrays of processing elements; transmitting the output of the tensor contraction block to the multiplexer at each clock cycle; and transmitting an output of the multiplexer to the processing system.

In at least one embodiment, the network of arrays of processing elements comprises NK arrays of processing elements, where NK corresponds to a rank of the output of the tensor contraction block.

In at least one embodiment, the method further comprises: dividing, by the processing system, at least one of the first input tensor and the second input tensor into at least two arrays; and assigning, by the processing system, each of the at least two arrays to a separate controller of the at least one controller.

Other features and advantages of the present application will become apparent from the following detailed description taken together with the accompanying drawings. It should be understood, however, that the detailed description and the specific examples, while indicating preferred embodiments of the application, are given by way of illustration only, since various changes and modifications within the spirit and scope of the application will become apparent to those skilled in the art from this detailed description.

## BRIEF DESCRIPTION OF THE DRAWINGS

For a better understanding of the various embodiments described herein, and to show more clearly how these various embodiments may be carried into effect, reference will be made, by way of example, to the accompanying drawings which show at least one example embodiment, and which are now described. The drawings are not intended to limit the scope of the teachings described herein.

FIG. 1 shows a block diagram of an example embodiment of a system for performing tensor contractions.
FIG. 2 shows a block diagram of another example embodiment of a system for contracting tensors.

FIG. 3 shows a block diagram of the details of an example processing unit as used in FIGS. 1-2.

FIG. 4 shows a block diagram of another example embodiment of a system for contracting tensors.

FIG. 5 shows a flowchart of an example embodiment of a method for performing tensor contractions.

FIG. 6 shows a flowchart of another example embodiment of a method for performing tensor contractions.

FIG. 7 shows a flowchart of another example embodiment of a method for performing tensor contractions.

FIG. 8 shows a flowchart of an example embodiment of a method for decimal to unsigned 32-bit integer conversion.

FIG. 9A shows a diagram of an example embodiment of a method of processing an input tensor of type A.

FIG. 9 B shows a diagram of an example embodiment of a method of processing an input tensor of type B.

FIGS. 10A-10B show a flowchart of an example embodiment of a method of generating an input string without zeros for an input tensor of type A, as shown in FIG. 9A.

FIGS. 11A-11E show flowcharts of an example embodiment of a method of generating an input string with zeros for an input tensor of type A as shown in FIG. 9A.

FIGS. 12A-12B show flowcharts of an example embodiment of a method of generating an input string without zeros for an input tensor of type B, as shown in FIG. 9B.

FIGS. 13A-13E show flowcharts of another example embodiment of a method of generating an input string with zeros for an input tensor of type B, as shown in FIG. 9B.

FIG. 14 shows a flowchart of an example embodiment of a method of interleaving input tensors.

FIG. 15 shows a block diagram of an example embodiment of an input data arbitrator block.

FIG. 16 shows a block diagram of another example embodiment of an input data arbitrator block.

FIGS. 17A-17D show block diagrams of another example embodiment of an input arbitrator.

FIG. 18 shows a block diagram of an example embodiment of a rank 3 demultiplexer.

FIG. 19 shows a diagram of the internals of an example embodiment of a rank 3 or above demultiplexer.

FIG. 20 shows a diagram of the internals of an example embodiment of a rank 2 demultiplexer with a zero generator.

FIG. 21 shows a diagram of the internals of an example embodiment of a rank 2 demultiplexer without a zero generator.

FIG. 22 shows a screenshot of a pseudocode of an example method of routing tensors to an input arbitrator block.

FIG. 23 shows a block diagram of an example embodiment of a two-dimensional array of processing elements.

FIG. 24 shows a block diagram of the internals of an example embodiment of a processing element.

FIG. 25 shows a flowchart of an example method of transmitting tensors by an output arbitrator block.

FIG. 26 shows a flowchart of another example method of transmitting tensors by an output arbitrator block.

FIGS. 27A-27B show detailed flowcharts of the example method of transmitting tensors shown in FIG. 25.

FIG. 28 shows a diagram of an example embodiment of a method of ordering an output tensor.

FIG. 29 shows a block diagram of an example embodiment of an output data arbitrator.

FIG. 30 shows a block diagram of another example embodiment of an output arbitrator.

FIG. 31 shows a block diagram of another example embodiment of an output arbitrator.

FIG. 32 shows a block diagram of an example embodiment of a rank 3 multiplexer.

FIG. 33 shows a simplified block diagram of an example embodiment of an output arbitrator block.

FIG. 34 shows a simplified block diagram of another example embodiment of an output arbitrator block.

FIGS. 35A-35D show detailed block diagrams of an example embodiment of an output arbitrator block, as shown in FIG. 34.

FIG. 36 shows a visual representation of a rank N tensor expressed as an array of rank 2 tensors.

FIG. 37 shows a block diagram of an example embodiment of an N-dimensional network of arrays of processing elements.

Further aspects and features of the example embodiments described herein will appear from the following description taken together with the accompanying drawings.

## DETAILED DESCRIPTION OF THE EMBODIMENTS

Various embodiments in accordance with the teachings herein will be described below to provide an example of at least one embodiment of the claimed subject matter. No embodiment described herein limits any claimed subject matter. The claimed subject matter is not limited to devices, systems, or methods having all of the features of any one of the devices, systems, or methods described below or to features common to multiple or all of the devices, systems, or methods described herein. It is possible that there may be a device system, or method described herein that is not an embodiment of an claimed subject matter. Any subject matter that is described herein that is not claimed in this document may be the subject matter of another protective instrument, for example, a continuing patent application, and the applicants, inventors, or owners do not intend to abandon, disclaim, or dedicate to the public any such subject matter by its disclosure in this document.

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures, and components have not been described in detail so as not to obscure the embodiments described herein. Also, the description is not to be considered as limiting the scope of the embodiments described herein.

It should also be noted that the terms "coupled" or "coupling" as used herein can have several different meanings depending in the context in which these terms are used. For example, the terms coupled or coupling can have a mechanical or electrical connotation. For example, as used herein, the terms coupled or coupling can indicate that two elements or devices can be directly connected to one another or connected to one another through one or more intermediate elements or devices via an electrical signal, electrical connection, or a mechanical element depending on the particular context.

It should also be noted that, as used herein, the wording "and/or" is intended to represent an inclusive-or. That is, "X and/or Y" is intended to mean X or Y or both, for example. As a further example, "X, Y, and/or Z" is intended to mean X or Y or Z or any combination thereof.

It should be noted that terms of degree such as "substantially", "about" and "approximately" as used herein mean a reasonable amount of deviation of the modified term such that the end result is not significantly changed. These terms of degree may also be construed as including a deviation of the modified term, such as by 1%, 2%, 5%, or 10%, for example, if this deviation does not negate the meaning of the term it modifies.

Furthermore, the recitation of numerical ranges by endpoints herein includes all numbers and fractions subsumed within that range (e.g., 1 to 5 includes 1, 1.5, 2, 2.75, 3, 3.90, 4, and 5). It is also to be understood that all numbers and fractions thereof are presumed to be modified by the term "about" which means a variation of up to a certain amount of the number to which reference is being made if the end result is not significantly changed, such as 1%, 2%, 5%, or 10%, for example.

It should also be noted that the use of the term "window" in conjunction with describing the operation of any system or method described herein is meant to be understood as describing a user interface for performing initialization, configuration, or other user operations.

The example embodiments of the devices, systems, or methods described in accordance with the teachings herein may be implemented as a combination of hardware and software. For example, the embodiments described herein may be implemented, at least in part, by using one or more computer programs, executing on one or more programmable devices comprising at least one processing element and at least one storage element (i.e., at least one volatile memory element and at least one non-volatile memory element). The hardware may comprise input devices including at least one of a touch screen, a keyboard, a mouse, buttons, keys, sliders, and the like, as well as one or more of a display, a printer, and the like depending on the implementation of the hardware.

It should also be noted that there may be some elements that are used to implement at least part of the embodiments described herein that may be implemented via program code that is written in hardware description language. For example, the program code may be written in Verilog, VHDL, Bluespec, or any other suitable high level hardware description language, as is known to those skilled in the art of hardware description language. Alternatively, or in addition thereto, at least part of the embodiments described herein may be implemented using high level synthesis techniques using high level synthesis compatible programming languages such as C, C++ or any other suitable high level synthesis compatible language known to those skilled in high level synthesis-compatible programming languages. Alternatively, the program code may be written in a high-level procedural language such as object-oriented programming. The program code may be written in $C^{++}$, C#, JavaScript, Python, or any other suitable programming language and may comprise modules or classes, as is known to those skilled in object-oriented programming. Alternatively, or in addition thereto, some of these elements implemented via software may be written in assembly language, machine language, or firmware as needed. In either case, the language may be a compiled or interpreted language.

At least some of these software programs may be stored on a computer readable medium such as, but not limited to, a ROM, a magnetic disk, an optical disc, a USB key, and the like that is readable by a device having a processor, an operating system, and the associated hardware and software that is necessary to implement the functionality of at least one of the embodiments described herein. The software program code, when read by the device, configures the device to operate in a new, specific, and predefined manner (e.g., as a specific-purpose computer) in order to perform at least one of the methods described herein.

At least some of the programs associated with the devices, systems, and methods of the embodiments described herein may be capable of being distributed in a computer program product comprising a computer readable medium that bears computer usable instructions, such as program code, for one or more processing units. The medium may be provided in various forms, including non-transitory forms such as, but not limited to, one or more diskettes, compact disks, tapes, chips, and magnetic and electronic storage. In alternative embodiments, the medium may be transitory in nature such as, but not limited to, wire-line transmissions, satellite transmissions, internet transmissions (e.g., downloads), media, digital and analog signals, and the like. The computer useable instructions may also be in various formats, including compiled and non-compiled code.

In accordance with the teachings herein, there are provided various embodiments for performing tensor contractions using reconfigurable logic and computer products for use therewith. At least some embodiments may be configured to perform tensor contractions by performing matrix multiplication.

At least one embodiment of the systems described herein may be integrated within a larger network of tensor contractors, such as for performing tensor network calculations, machine learning calculations, or other similar scientific applications.

The embodiments of the systems described herein can be configured to compute tensor contractions of tensors having a rank of 1 or more. For example, the system can compute tensor contractions of rank N tensors by reducing rank 3 or more tensors into arrays of rank 2 tensors.

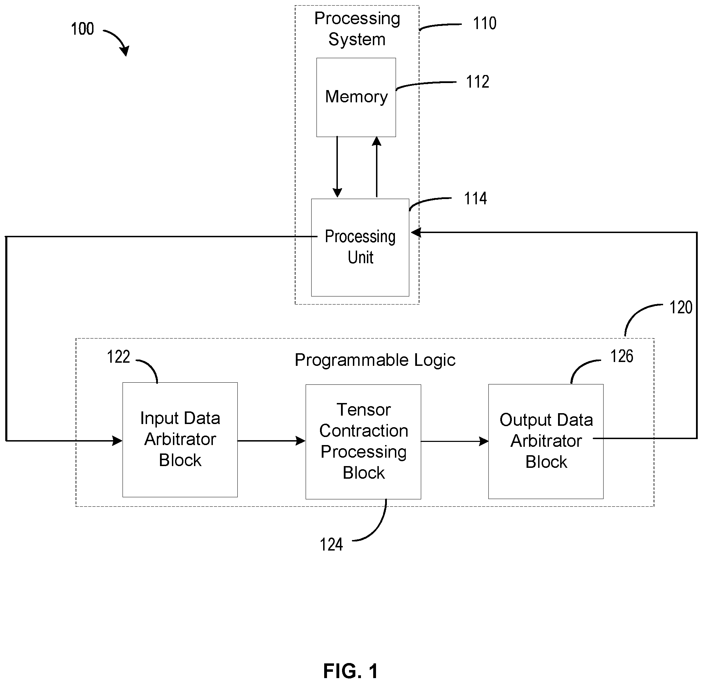

Referring now to FIG. 1, shown therein is a block diagram of an example embodiment of a system 100 for performing tensor contractions. The system includes a processing system 110 and a programmable logic 120. The processing system 110 includes a memory 112 and a processing unit 114. The programmable logic 120 includes an input data arbitrator block 122, a tensor contraction processing block 124, and an output data arbitrator block 126. The elements of the system may be modular in nature and may be replaced without affecting the functioning of the system.

The system 100 may be implemented on programmable hardware such as at least one field-programmable gate array (FPGA) or System on Chip (SoC), such as the Intel Stratix 10, the Xilinx Zynq 7020, the Zynq Ultrascale, or the Zynq Ultrascale+, or on a combination of programmable hardware and peripherals, such as the Avnet ZedBoard or the Xilinx Alveo u280 hardware accelerator card.

The memory 112 can be in communication with the processor 114 and may be a shared system memory. The memory 112 may store tensors that are to be contracted. The tensors may originate from an external process. For example, tensors may be stored in a header file external to the system 100 and may be transferred to the memory 112 of the system using a communication peripheral. The communication peripheral may be any peripheral supported by the system (e.g., a memory card), and the header file may be transmitted to the communication peripheral using standard communication protocols (e.g., Ethernet). Alternatively, or in addition, the tensors stored in memory 112 may correspond to previously contracted tensors.

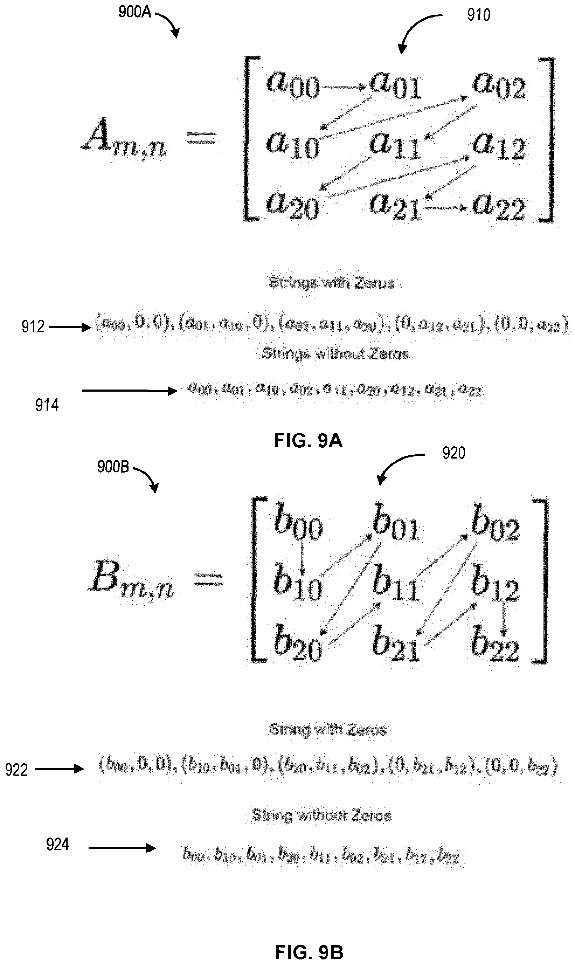

The memory 112 may store the tensors that are to be contracted in serialized form. The processing unit 114 may convert the tensors into serialized form, as will be explained in further detail below, with reference to FIGS. 9-14. Alternatively, the tensors may be converted into serialized form by a processor external to the system and received by the memory 112 in serialized form. The tensors may be stored in the memory 112 in an 8-bit, a 16-bit, a 32-bit, or a 64-bit format, though it should be noted that other formats may be supported by the memory 112. The format can depend on the type of processing unit 114 used.

The processing unit 114 may include one or more processors. Alternatively, or in addition, the one or more processors may include one or more processing cores. The one or more processing cores may operate using symmetrical multicore processing, which can reduce memory transfer latency.

The processing unit 114 may include a memory management unit, a global interrupt controller, and a cache memory. The processing unit 114 may include an ARM processor, such as the ARM Cortex-A9 processor.

The processing unit 114 may be programmed (or wired) to configure the programmable logic 120. For example, the processing unit may configure the programmable logic 120 before each tensor contraction operation. The processing unit 114 may also store the operating system used to initiate tensor contractions.

The operating system may be a light-weight operating system, such as, but not limited to, an embedded Linux system, that may be developed using tools such as PetaLinux and may be customizable by the user. The operating system may provide a virtual memory, which can allow large tensors to be stored externally.

Alternatively, a bare metal approach may be taken. A bare metal approach can reduce boot time and reduce storage space requirements.

The processing system 110 may communicate with the programmable logic 120 via at least one controller. For example, the programmable logic may communicate directly with the memory 112 of the processing unit via one or more direct memory access controllers to facilitate the transfer of data from the processing system 110 to the programmable logic unit and from the programmable logic 120 to the processing system 110. The processing unit 114 may initialize each controller before performing a contraction. In at least one embodiment, the processing unit 114 may initialize more than one controller at a time. The number of controllers may be determined by a user.

The controller may, for example, be an AXI Direct Memory Access softcore IP block such as the Xilinx® Logi-CORE™ IP. The controller may be an interrupt-based direct memory access (DMA) controller. In an interrupt-based DMA, an interrupt signal is set high by the programmable logic 120 when it is ready to receive data from the processing system 110. A second interrupt signal is set high when the programmable logic has successfully received all the necessary data from the processing system 110. The processing unit 114 may then verify the status of the controller to ensure that the data was transmitted without issues.

Alternatively, the one or more controllers may be polling-based controllers. The use of polling-based controllers can reduce the complexity of the system. In a polling-based controller, the processor continually verifies the status of the controller to ensure its correct operation.

The one or more controllers may transfer data using an AXI stream protocol. In an AXI stream protocol, for a transfer of data to be initiated, the data sent must be valid and the slave device must be ready to receive.

Alternatively, the one or more controllers are configured to use scatter-gather techniques, which can increase throughput.

Alternatively, the one or more controllers may transfer data using memory mapped communication protocols such as, but not limited to, AXI Lite or AXI Full protocols. In memory mapped communication protocols, the programmable logic 120 may include memory elements such as registers or block random accessed memory (BRAM) which can be assigned memory addresses that can be addressed by the processor. In memory mapped operations, central direct memory access controllers as opposed to direct memory access controllers may be used.

In at least one embodiment, the one or more controllers can be connected through a plurality of High Performance (HP) ports, which may be used simultaneously to transfer tensor data to the programmable logic 120. For example, tensor data may be divided into blocks, which may be transmitted in a parallel fashion.

Alternatively, the one or more controllers may be connected through one or more ACP ports. An ACP port can offer the same data width as high-performance ports with increased data coherency. The type of port may depend on the hardware used to implement the systems and methods described herein.

The one or more controllers may be instantiated by the processing system 110 or the programmable logic 220. For example, instantiating the one or more controllers by the processing system 110 can reduce space requirements associated with the programmable logic 120.

The input data arbitrator 122 may be configured to route tensors from the memory of the processing unit to the correct tensor processing element in the tensor contraction block 124.

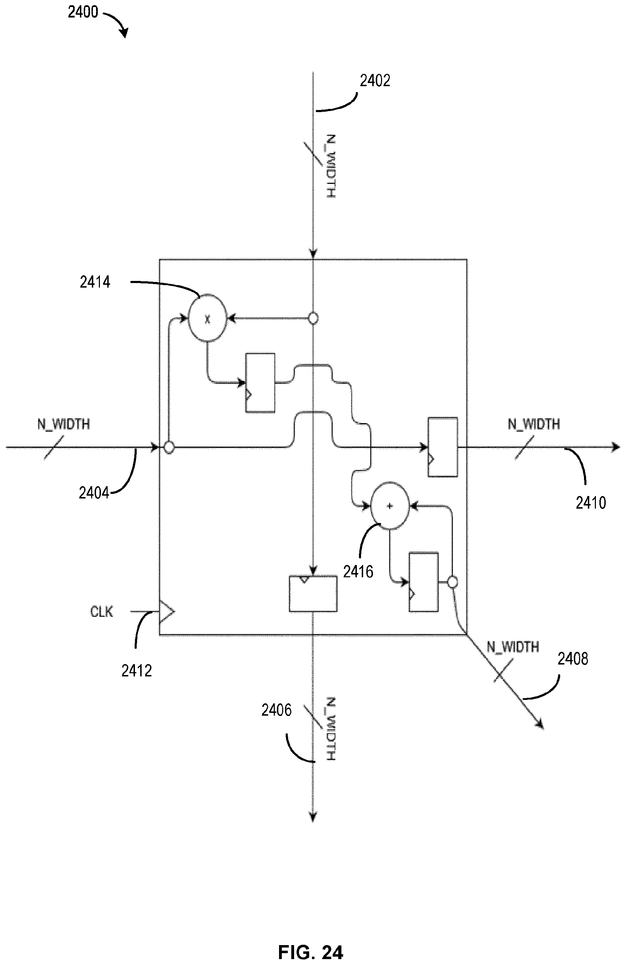

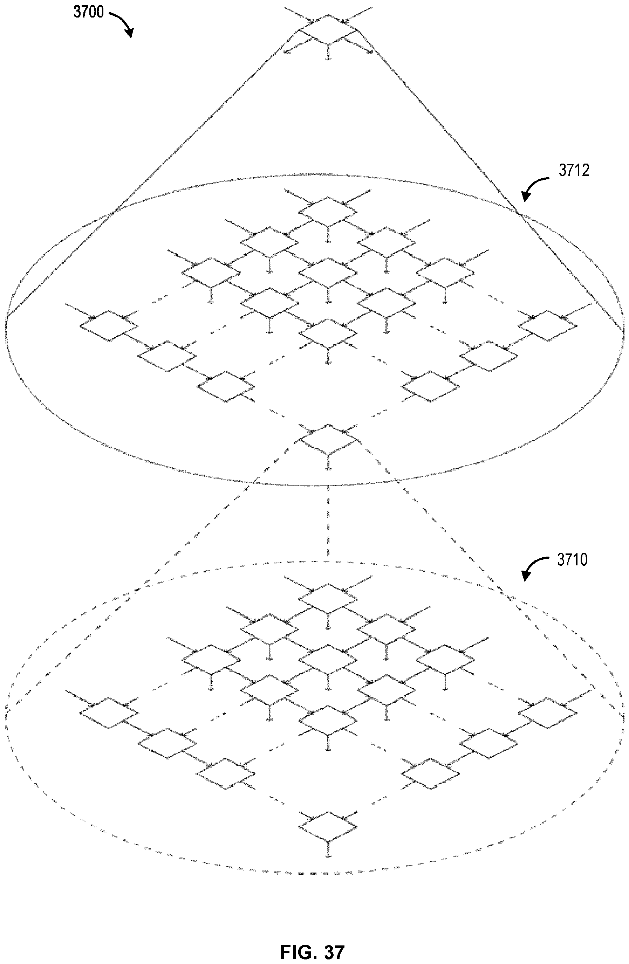

The tensor contraction processing block 124 may consist of a two-dimensional array of processing elements, and each processing element may be capable of performing arithmetic operations such as multiplications and additions. The array of processing elements may be a systolic array of processing elements. An example processing element is shown in FIG. 24, which will be described in further detail below. In at least some embodiments, the tensor contraction processing block 124 consists of a network of systolic arrays, as shown in FIG. 37, and each of the systolic arrays in the network may consist of a two-dimensional array of processing elements. The tensor contraction processing block 124 may be configured to generate an interrupt signal that can be detectable by the processor 114 to indicate that the contraction operation has been completed.

The output arbitrator block 126 may be configured to route output contracted tensors from the tensor contraction processing block 124 to the processing system 110.

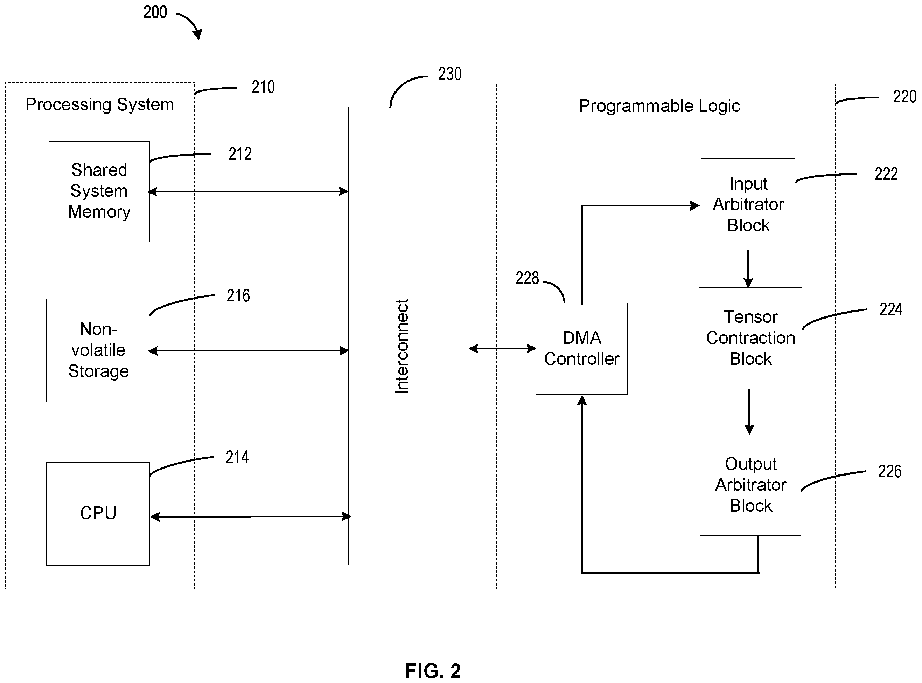

Referring now to FIG. 2, shown therein is a block diagram of another example embodiment of a system for contracting tensors 200. The system 200 can be substantially similar to system 100. The system 200 includes a processing system 210 and a programmable logic 220. The processing system 210 and the programmable logic 220 can communicate with each other via an interconnect 230.

The processing system 210 may include a memory 212, a non-volatile storage 216, and a processing unit 214. Similar to system 100 described above, the memory 212 may be a shared system memory.

The programmable logic 220 may include an input arbitrator block 222, a tensor contraction block 224, and an output arbitrator block 226. The programmable logic 220 may also include at least one controller 228 in communication with the interconnect 230. The at least one controller 228 may be a direct memory access (DMA) controller. The at least one controller 228 may be configured to send data to the input arbitrator block 22 and may be configured to receive data from the output arbitrator block 226.

The memory 212, the processing unit 214, the input arbitrator block 222, the tensor contraction block 224, the output arbitrator block 226, and the at least one controller 228 may perform the same functions as the memory 112, the processing unit 114, the input arbitrator block 122, the tensor contraction block 124, the output arbitrator block 126 and the at least one controller of system 100.

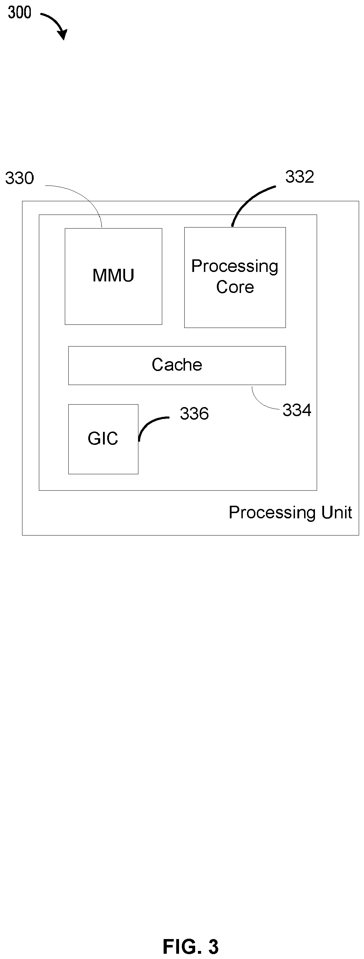

Referring now to FIG. 3, shown therein is a block diagram showing details of a processing unit 300 used in a system for contracting tensors. The processing unit 300 may correspond to either of processing units 114 or 214.

The processing unit may include at least one processing core 332, a cache 334, a general interrupt controller (GIC) 336, and a memory management unit (MMU) 330. The GIC 336 handles and processes any hardware or software generated interrupts, which may or may not be used in communication protocols. The MMU 330 may be used to handle memory operations such as paging.

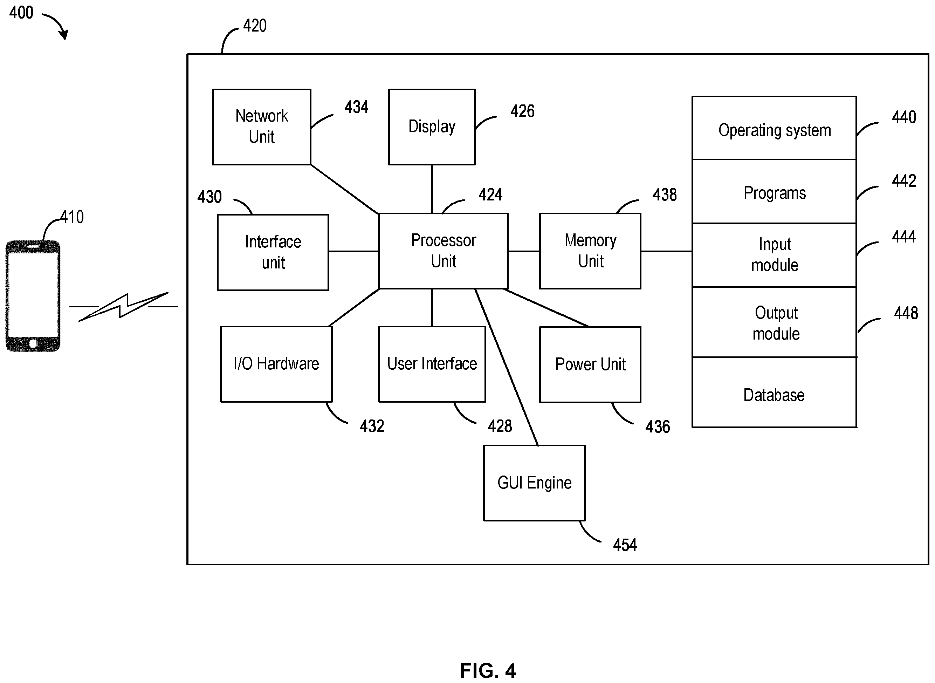

Referring now to FIG. 4, shown therein is a block diagram of another example of a system 400 for contracting tensors. The system 400 includes at least one user device 410 and at least one server 420. The user device 410 and the server 420 may communicate, for example, through wired computing technologies, or wirelessly such as over the Internet.

The user device 410 may be a computing device that is operated by a user. The user device 410 may be, for example, a personal computer, a tablet computer or a laptop, a smartphone, a smartwatch, a virtual reality (VR) device, or an augmented reality (AR) device. The user device 410 may be configured to run an application (e.g., a mobile app) that communicates with other parts of the system 400, such as the server 420.

The server 420 may run on a single computer, including a processor unit 424, a display 426, a user interface 428, an interface unit 430, input/output (I/O) hardware 432, a network unit 434, a power unit 436, and a memory unit (also referred to as "data store") 438. In other embodiments, the server 420 may have more or less components but generally function in a similar manner. For example, the server 420 may be implemented using more than one computing device.

The processor unit 424 may include a standard processor, such as the Intel Xeon processor, for example. Alternatively, there may be a plurality of processors that are used by the processor unit 424, and these processors may function in parallel and perform certain functions. The display 426 may be, but not limited to, a computer monitor or an LCD display such as that for a tablet device. The user interface 428 may be an Application Programming Interface (API) or a web-based application that is accessible via the network unit 434. The network unit 434 may be a standard network adapter such as an Ethernet or 802.1 1x adapter.

The processor unit 424 can also execute a graphical user interface (GUI) engine 454 that is used to generate various GUIs. The GUI engine 454 provides data according to a certain layout for each user interface and also receives data input or control inputs from a user. The GUI then uses the inputs from the user to change the data that is shown on the current user interface, or changes the operation of the server 420 which may include showing a different user interface.

The memory unit 438 may store the program instructions for an operating system 440, program code 442 for other applications, an input module 444, an output module 448, and a database 450. The database 450 may be, for example, a local database, an external database, a database on the cloud, multiple databases, or a combination thereof.

The programs 442 comprise program code that, when executed, configures the processor unit 424 to operate in a particular manner to implement various functions and tools for the system 400.

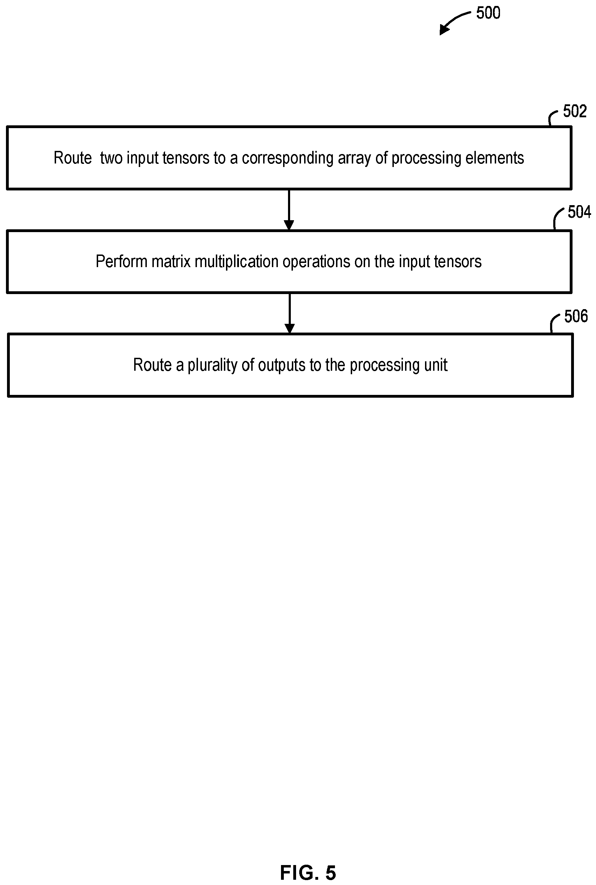

Referring now to FIG. 5, shown therein is a flowchart of an example embodiment of a method 500 for performing tensor contractions. The method 500 may be used by either of the systems 100 and 200 to contract tensors.

At 502, the processing system 110 routes a first input tensor and a second input tensor to a corresponding array of processing elements. For example, the first and second input tensors may be retrieved from the memory 112 and routed from the memory 112 to the appropriate processing element via the one or more controllers. In some embodiments, the first and second input tensors may be transmitted to an input arbitrator block 126, which may then transmit the tensor elements to the array of processing elements.

At 504, the tensor contraction processing block 124 performs matrix multiplication operations on the first and second input tensors to contract the tensors.

At 506, the plurality of outputs of the tensor contraction processing block 124 are routed to the processing system 110. The outputs correspond to elements of a contracted tensor and may be routed to the memory 112 of the processing system 110.

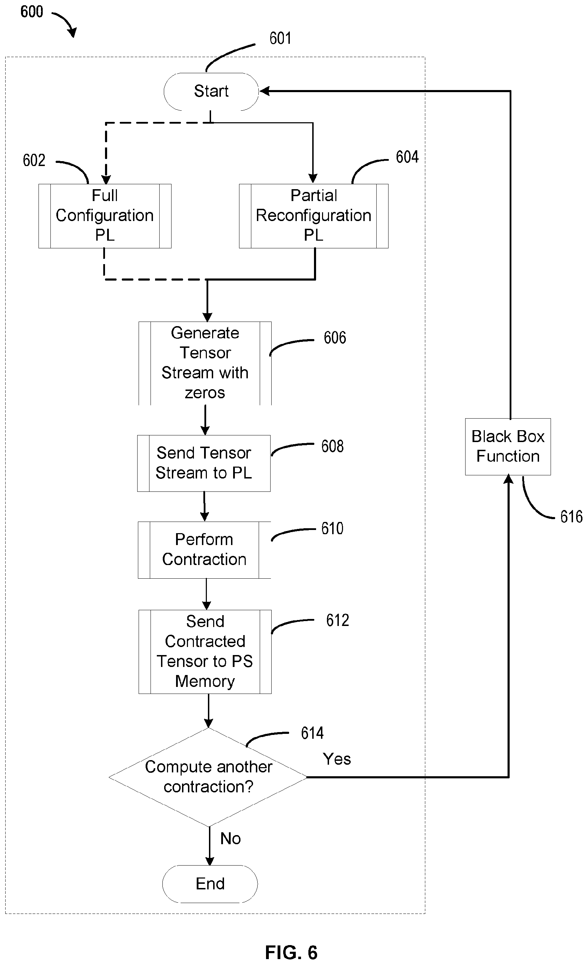

Referring now to FIG. 6, shown therein is a flowchart of another embodiment of a method 600 of contracting tensors. The method 600 may be used by the system 100 to contract tensors.

At 601, the processing unit 114 determines whether a full configuration of the programmable logic 120 or a partial reconfiguration of the programmable logic 120 is required. For example, the processing unit 114 can determine that the programmable logic has not been previously configured and may require a full configuration. If a full configuration is required, the method proceeds to 602. If a partial reconfiguration is required, the method proceeds to 604.

To fully configure the programmable logic, the processing unit 114 may generate instructions for configuring the programmable logic 120. For example, the instructions may correspond to instructions for connecting logic gates of the programmable logic 120. Alternatively, the instructions may be generated by a processor external to the system and may be transmitted to the processing unit 114 before being transmitted to the programmable logic 120. The instructions may be generated as a binary file, such as a bitstream file, and may be generated for every possible tensor contraction. For example, a contraction of a rank 3 tensor with dimensions 4x4x4 may require different configuration instructions than a contraction of a rank 4 tensor with dimensions 6x6x6x6.

Alternatively, the instructions may be generated by a processor external to the system and transmitted directly to the programmable logic 220. For example, the instructions may be loaded via a Joint Test Action Group (JTAG). Alternatively, an ICAP soft-core block may be used for partial reconfiguration and the partial reconfiguration may be initiated by a processor external to the system. Alternatively, an MCAP interface may be used, which can offer transfer rates of up to 800MB/s. The process may be initiated by a processor external to the system.

Alternatively, a PCAP interface may be used, and the configuration may be controlled by the processing unit 114.

These instructions may be stored in memory; for example, an external memory and the processing unit 114 may search a directory of instructions in the external memory to retrieve the correct instructions during reconfiguration.

For example, the instructions may be stored on an external memory card. Alternately, the instructions may be stored on a separate device, and retrieved using standard protocols such as USB, Ethernet, or PCI Express.

In some cases, the programmable logic may only require partial reconfiguration. For example, partial reconfiguration may be appropriate when the programmable logic has previously been configured with the desired static region. The static region can correspond to a region of the system that is independent of varying tensor contraction sizes. For example, the one or more controllers may correspond to a static region. Partial reconfiguration may involve lower configuration times than full configuration. The processing unit 114 may generate instructions for reconfiguring the programmable logic 120 by retrieving pre-generated instructions from an external memory. However, in contrast to the full configuration, the processing unit 114 may generate instructions only for the region to be reconfigured. The instructions may depend on at least some of the dimensions of the output tensor formed after contraction, the rank of the output tensor, the number of controllers available, and the data width of each element of the input tensors.

At 606, the processing unit 114 processes the tensors stored in memory and generates a tensor stream for each of the input tensors to be contracted. The tensors may be processed as described in FIGS. 9-14, which will be described in further detail below. The tensor stream may be generated with zeros.

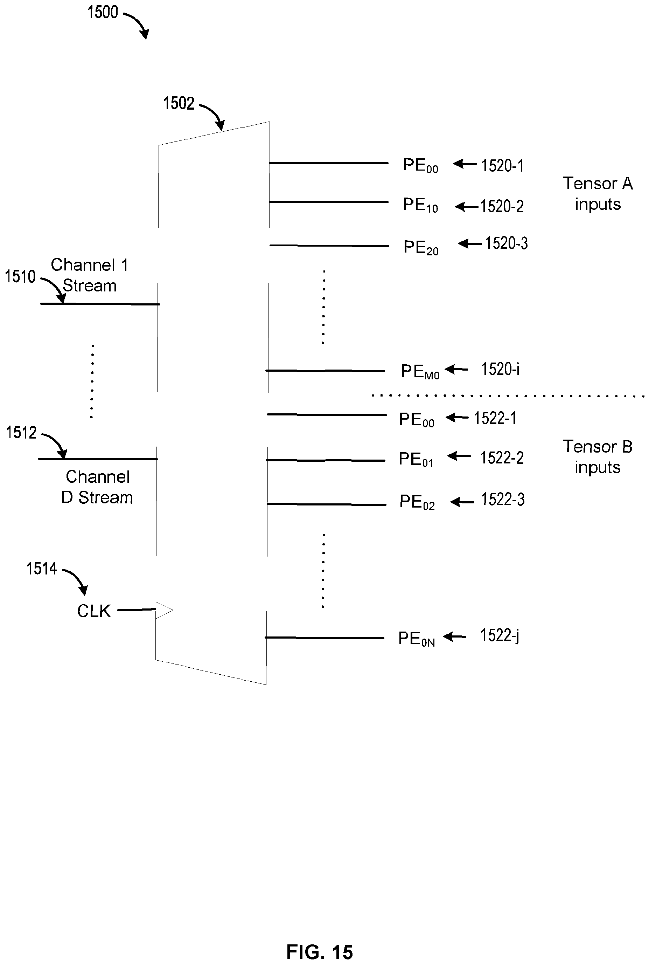

At 608, the processing unit 114 routes the processed tensors obtained at 606 to the programmable logic 120 for contraction. The process of routing tensors will be described in further detail below, with reference to FIGS. 15-20.

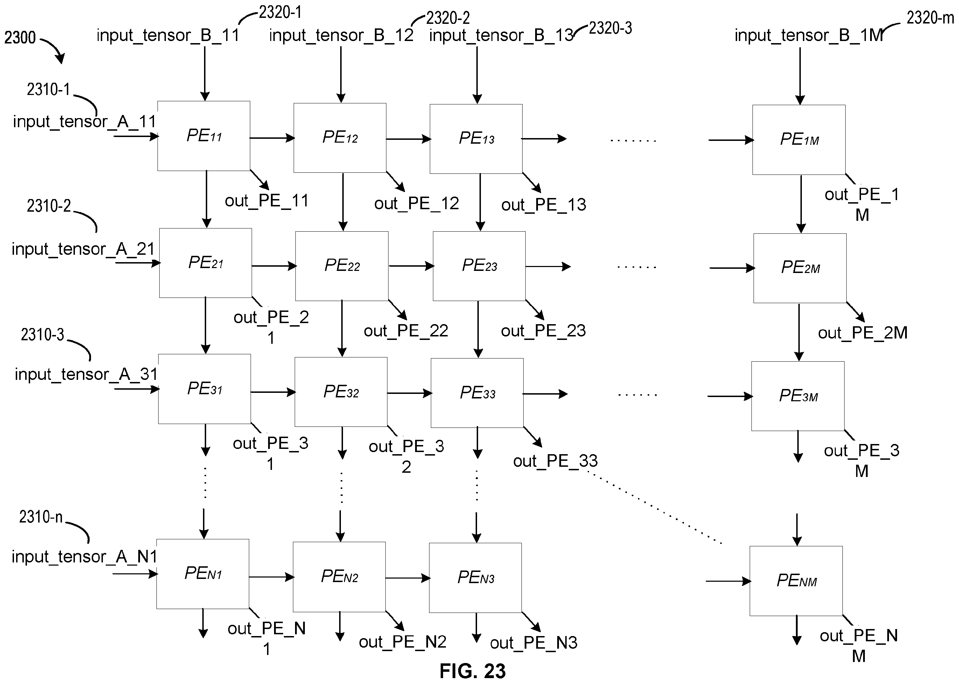

At 610, the programmable logic 120 contracts the processed tensors. For example, the tensor contraction may be performed as described in further detail below with reference to FIGS. 23-24.

At 612, the contracted output tensor obtained at 610 is routed to the memory 112 of the processing system 110.

At 614, the processing unit 114 determines if another tensor contraction is to be performed. If another contraction is to be performed, the method proceeds to 616. At 616, the contracted tensor may be sent for further processing. For example, the contracted tensor may be sent to an external process for further processing to generate new tensors for contraction, which may be transmitted to the processing system memory 112 for additional contraction.

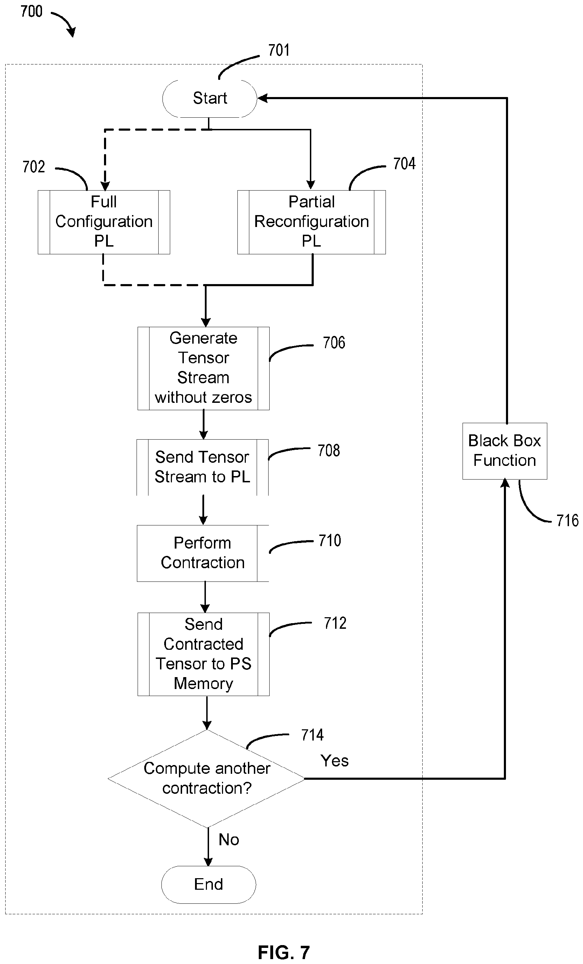

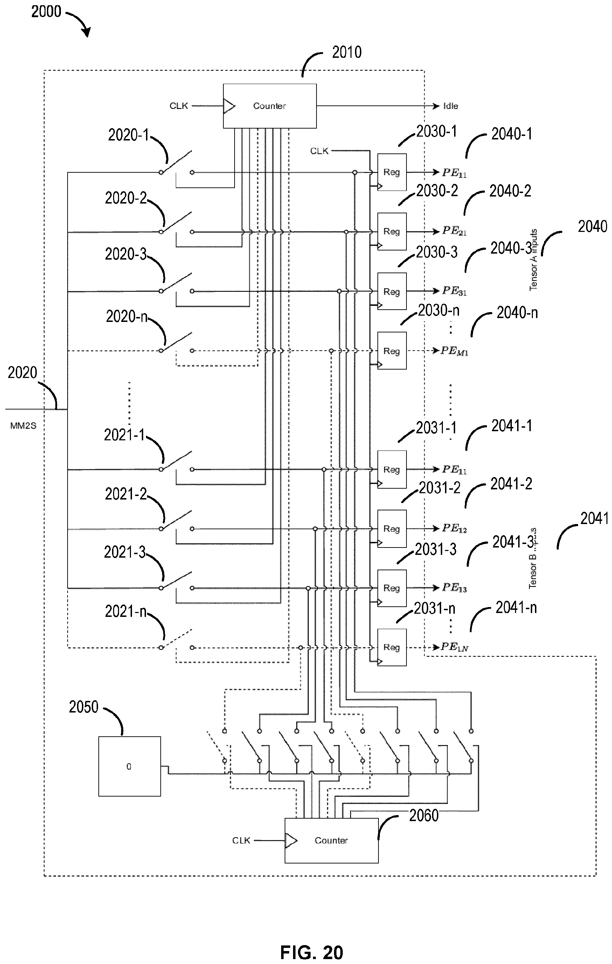

Referring now to FIG. 7, shown therein is a flowchart of another example method of contracting tensors 700. The method 700 may be substantially analogous to method 600. However, unlike method 600, at 706, the processing unit 114 can generate a tensor stream without zeros. For example, the zeros may instead be generated by the programmable logic 220 as will be described in further detail below with reference to FIG. 20.

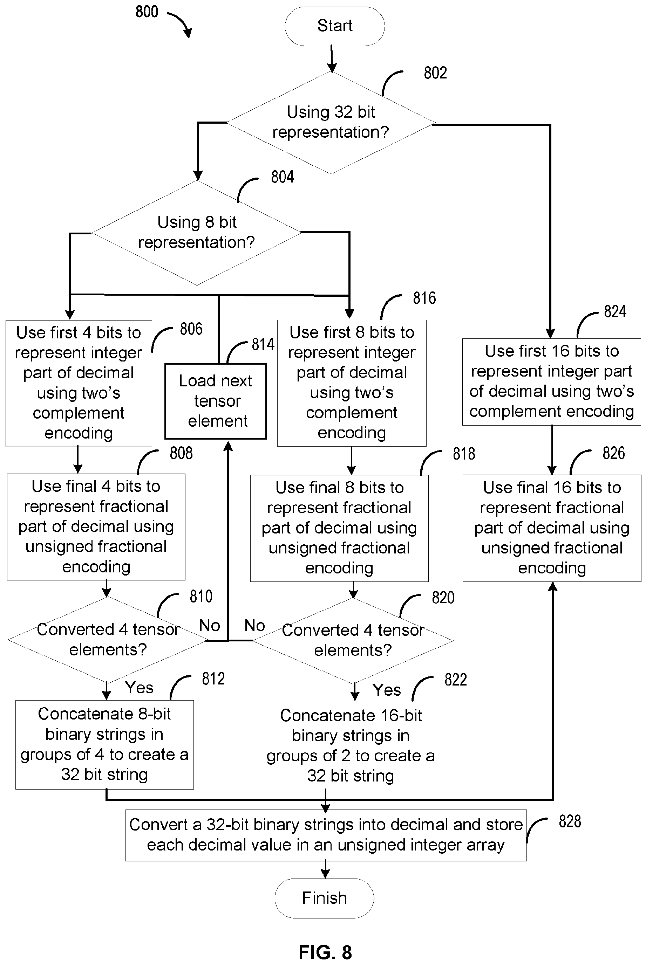

Referring now to FIG. 8, shown therein is a flowchart of an example embodiment of a method for decimal to 32-bit integer conversion 800. In some embodiments, generating a tensor stream as described at 606 and 706 may include converting the tensors into unsigned integer form before contraction. Alternatively, tensors may be converted into unsigned integer form as they are received in memory 114. The unsigned integer form tensors may be stored in memory 114. Though FIG. 8 shows a 32-bit conversion, it should be understood that other data formats may be used. For example, the data width of each unsigned integer may be determined by the processing unit 114 and can be, for example, 8 bits, 16 bits, 32 bits, 64 bits, or any other greater (e.g., $2^n$, where n is an integer) number of bits.

At 802, the system 100 determines if an 8-bit, or a 32-bit representation is used. If an 8-bit representation is used, the method proceeds to 804. If a 32-bit representation is used, the method proceeds to 824.

At 804, the system 100 determines if an 8-bit representation is used. If an 8-bit representation is used, the method proceeds to 806. If a 16-bit representation is used, the method proceeds to 816.

At 806, the system 100 uses, for example, the first four bits to represent the integer part of the decimal number. For example, twos complement may be used. At 808, the final four bits may be used to represent the fractional part of the decimal number using, for example, unsigned fractional encoding. The system 100 may use a different number of bits for the integer part and the fractional part.

At 810, the system 100 determines if four tensor elements have been converted. If four tensor elements have not been converted, the method proceeds to 814. At 814, a next tensor is loaded. The method then proceeds again to 816 if an 8-bit representation is used. If four tensor elements have been converted, the method proceeds to 812.

At 812, the system 100 concatenates in groups of four the 8-bit strings obtained by the combination of 806 and 808 to generate a 32-bit string. Concatenating these smaller binary strings can allow the method to be extended to other data widths with minimal changes to the software. The method then proceeds to 828.

Alternatively, if a 16-bit representation is used, at 816 the system 100 may use, for example, the first eight bits to represent the integer part of the decimal number. For example, twos complement may be used. At 818, the processing unit 114 may use the final eight bits to represent the fractional part of the decimal number using, for example, unsigned fractional encoding. The system 100 may use a different number of bits for the integer part and the fractional part.

At 820, the system 100 determines if four tensor elements have been converted. If four tensor elements have not been converted, the method proceeds to 814. At 814, a next tensor element is loaded. The method then proceeds to 806 again, if a 16-bit representation is used. If four tensor elements have been converted, the method proceeds to 822.

At 822, the 16-bit binary strings obtained by the combination of 816 and 808 are concatenated in groups of two by the system 100 to generate a 32-bit string. The method then proceeds to 828.

At 828, the 32-bit binary strings are converted by the system 100 into decimal form and stored as arrays of unsigned integers.

For example, method 800 may be used to convert the following matrix.

$$\begin{bmatrix} 1 & 2 & 3.5 \\ -4 & 0 & 7 \\ 3 & 6.25 & 5 \end{bmatrix}$$

Assuming an 8-bit representation is used, the elements of the matrix are converted into binary form where, for example, the first four bits represent the integer part of the number and the last four bits represent the fractional part of the number as described at 806 and 808:

$$\begin{bmatrix} 0001\,0000 & 0010\,0000 & 0011\,1000 \\ 1100\,0000 & 0000\,0000 & 0111\,0000 \\ 0011\,0000 & 0110\,1100 & 0101\,0000 \end{bmatrix}$$

Optionally, the 8-bit strings may be converted into unsigned integers as follows:

$$\begin{bmatrix} 16 & 32 & 56 \\ 192 & 0 & 112 \\ 48 & 108 & 80 \end{bmatrix}$$

The 8-bit strings are then concatenated in groups of four to form a 32-bit string as described at 812. Incomplete groups of four may be concatenated with 0s, as shown below:

$$[\{0001\ 0000\ 0010\ 0000\ 0011\ 1000\ 1100\ 0000\},$$

$$\{0000\ 0000\ 0111\ 0000\ 0011\ 0000\ 0110\ 1100\},$$

$$0101\ 0000\ 0000\ 0000\ 0000\ 0000\ 0000\ 0000\}]$$

The 32-bit binary strings are converted into unsigned integers as described at 828:

$$[\{270547136\},\ \{7352428\},\ \{1342177280\}]$$

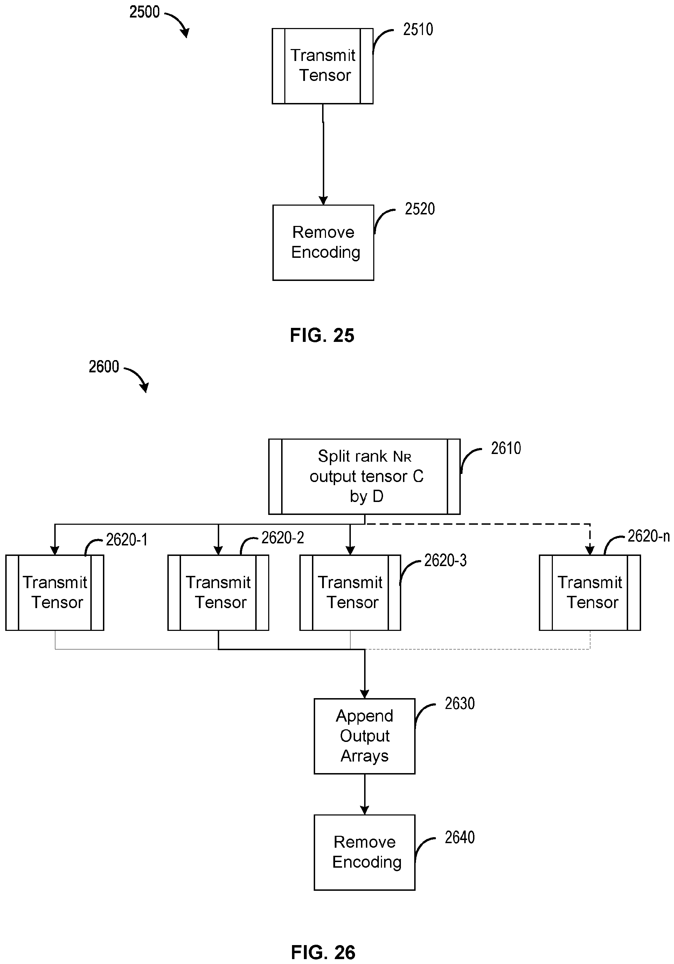

The encoding scheme described may be reversed after the tensor contraction operation is completed as will be described in further detail with reference to FIGS. 25-26.

These concatenated numbers can then be split into their respective constituents, corresponding to the elements of the tensor by the processor and/or the input data arbitrator.

Referring now to FIGS. 9A-9B, shown therein are diagrams of an embodiment of an example method of processing the tensors prior to contraction. In at least one implementation, generating the tensor stream as described at 606 and 706 can include reorganizing the elements of the input tensors. The process of processing the tensors can be described as flattening the tensors. In at least one implementation, the process of flattening the tensor can be performed either before or after the process for conversion of the numerical values of the tensor to unsigned integers.

FIG. 9A shows a diagram of a method 900A of reorganizing a tensor of type A. Tensor A corresponds to a first input tensor and can be to the left of the contraction operator. The elements of the first input tensor may be reorganized in the order described by the diagonal pattern 910 shown.

FIG. 9B shows a method 900B of reorganizing a tensor of type B. Tensor B corresponds to a second input tensor in a matrix multiplication operation and can be to the right of the contraction operator. The elements of the second input tensor may be reorganized in the order described by the diagonal pattern 920 shown. The diagonal pattern 920 may correspond to the mirror pattern of diagonal pattern 910.

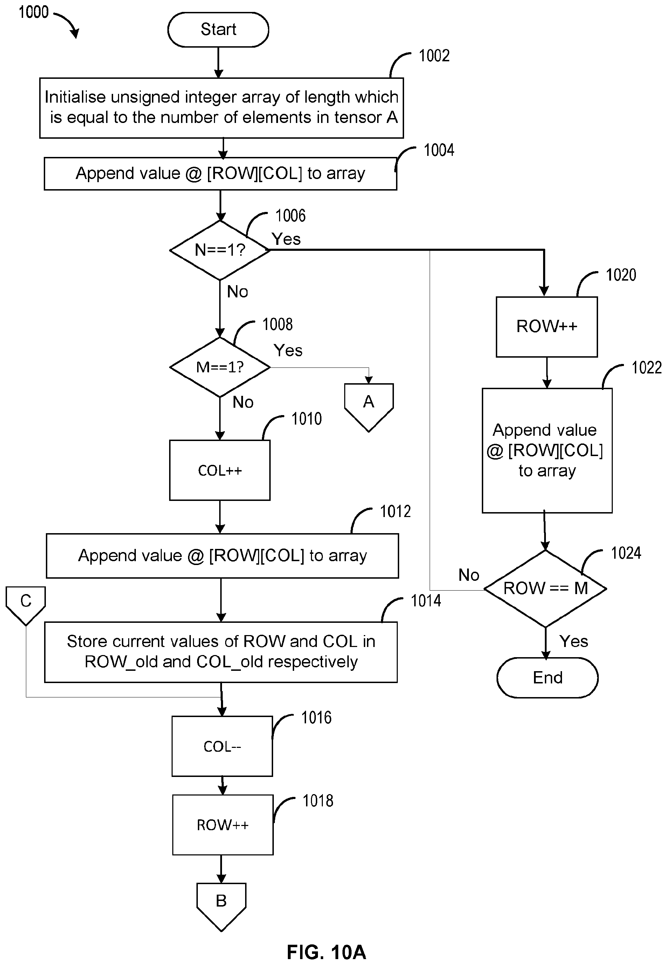

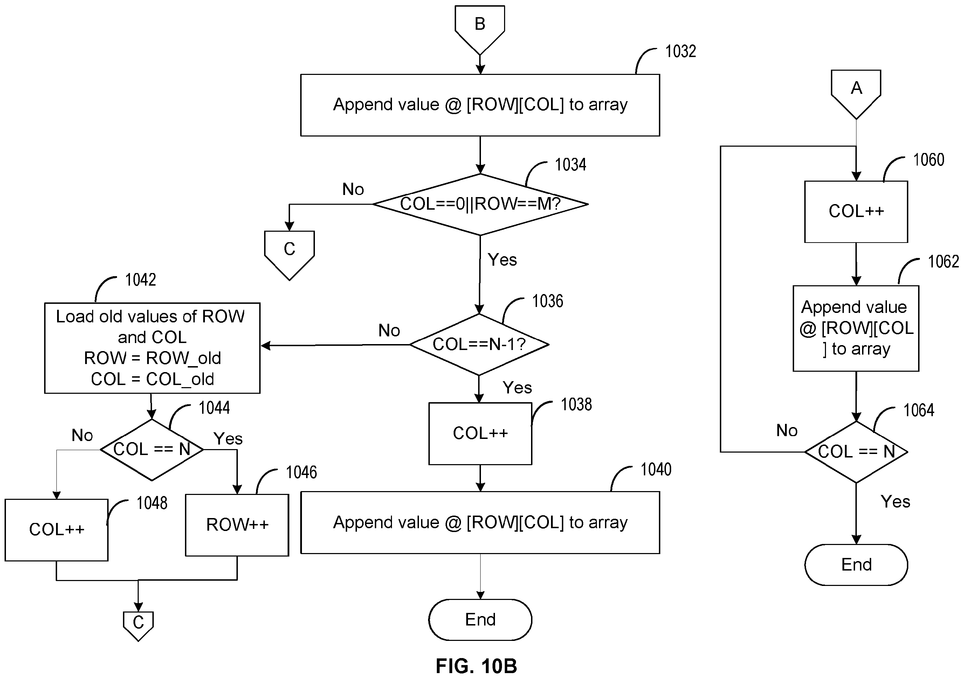

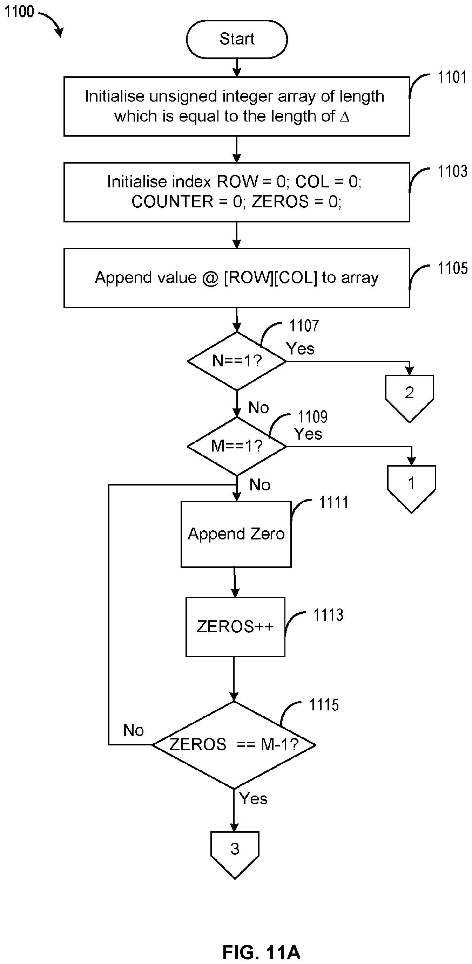

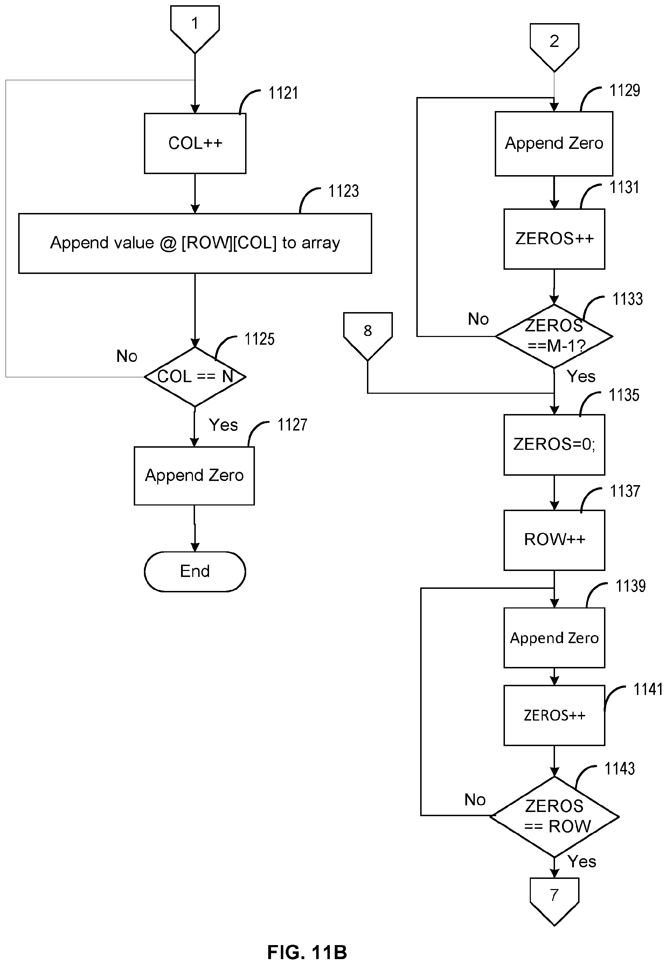

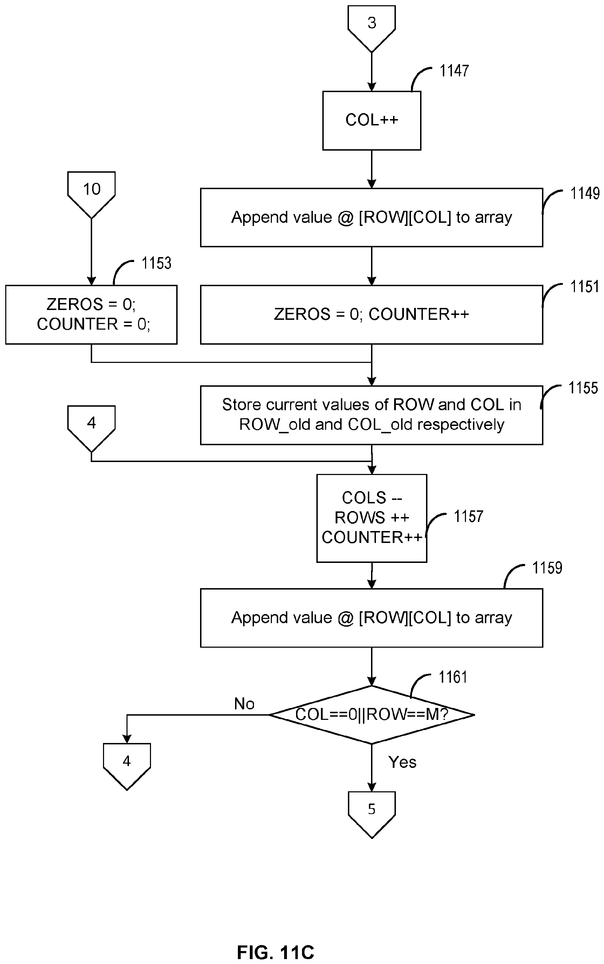

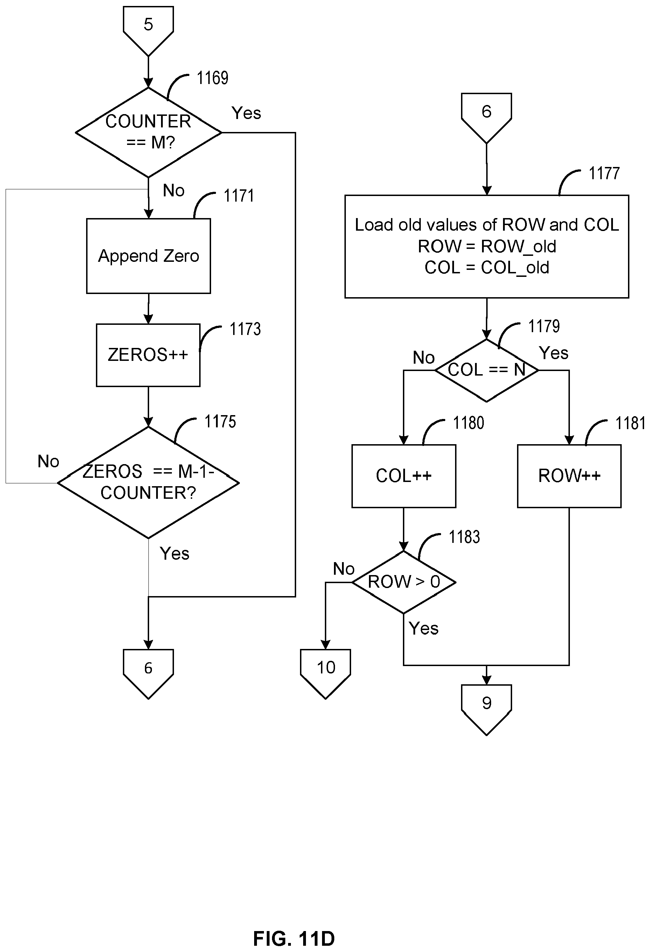

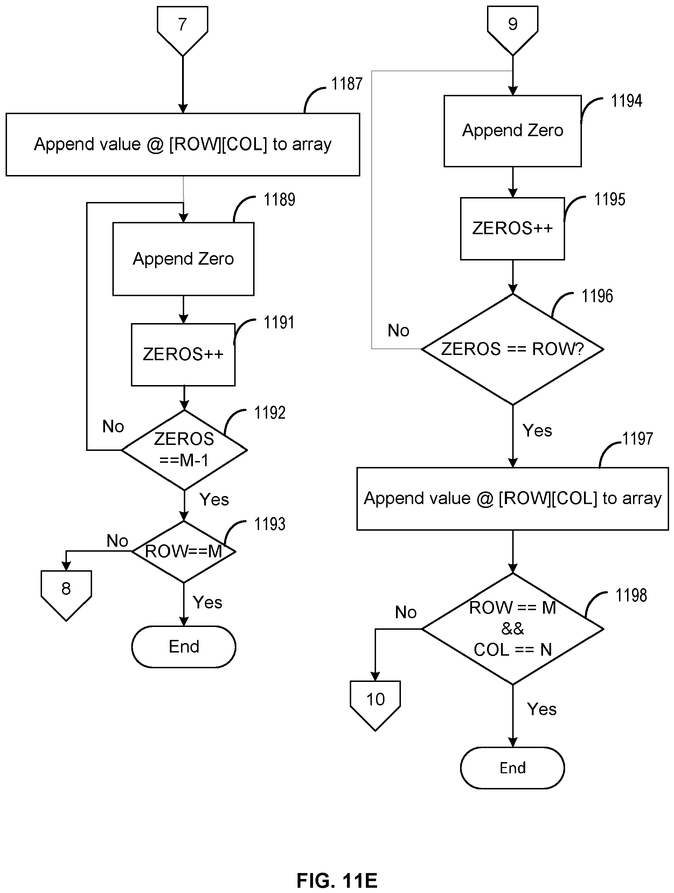

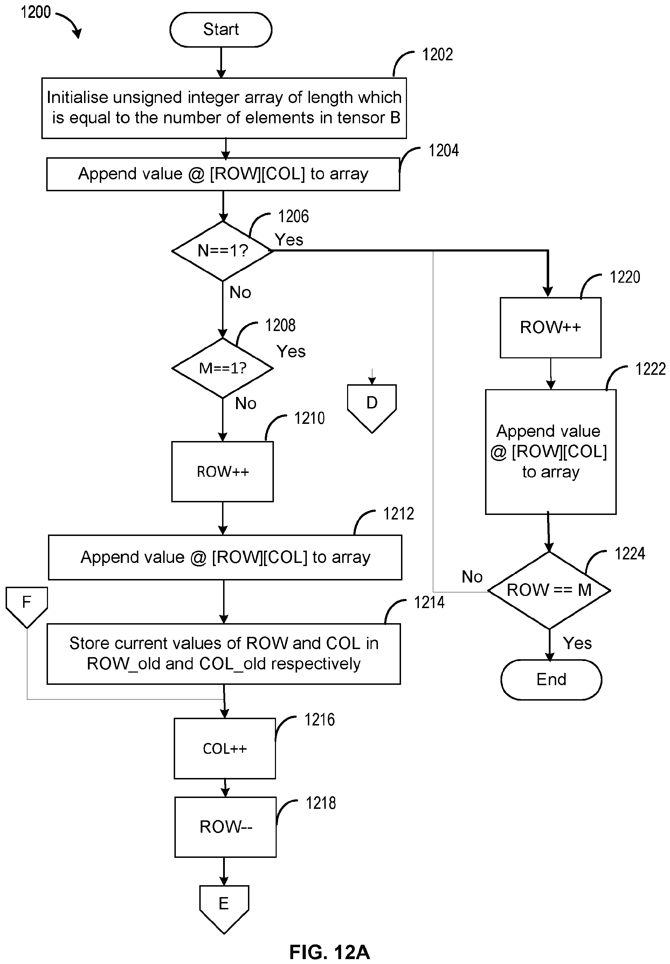

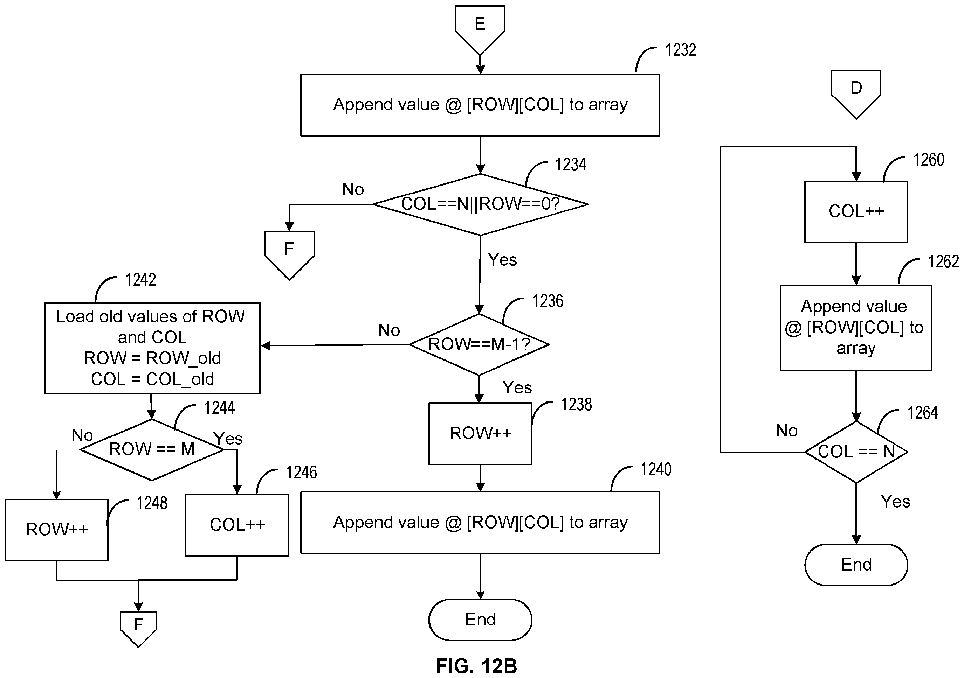

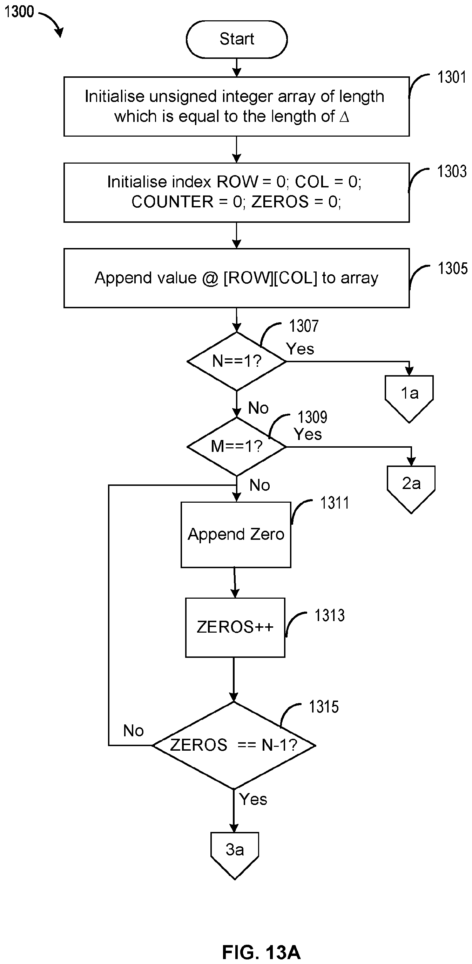

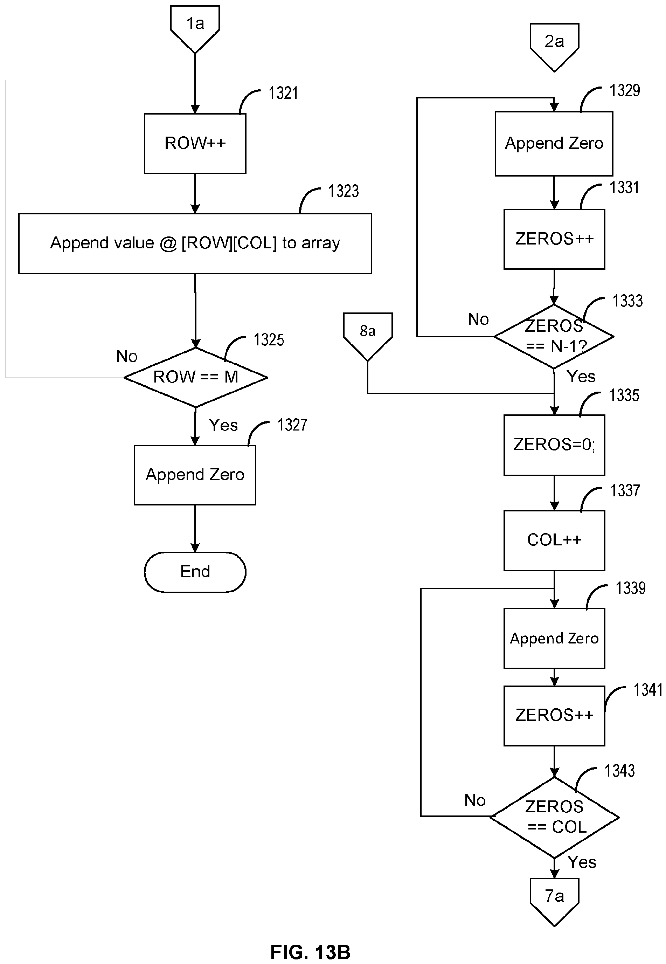

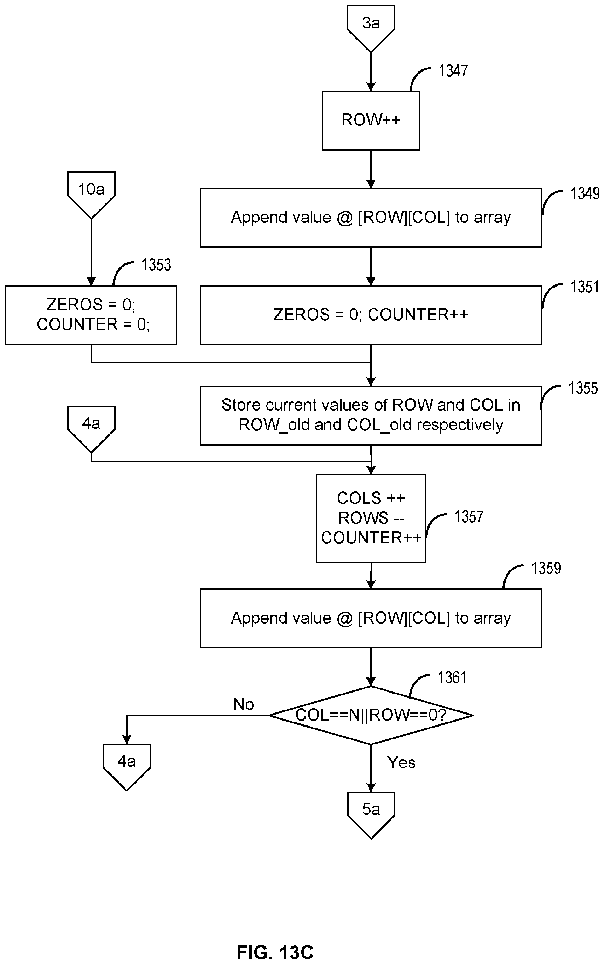

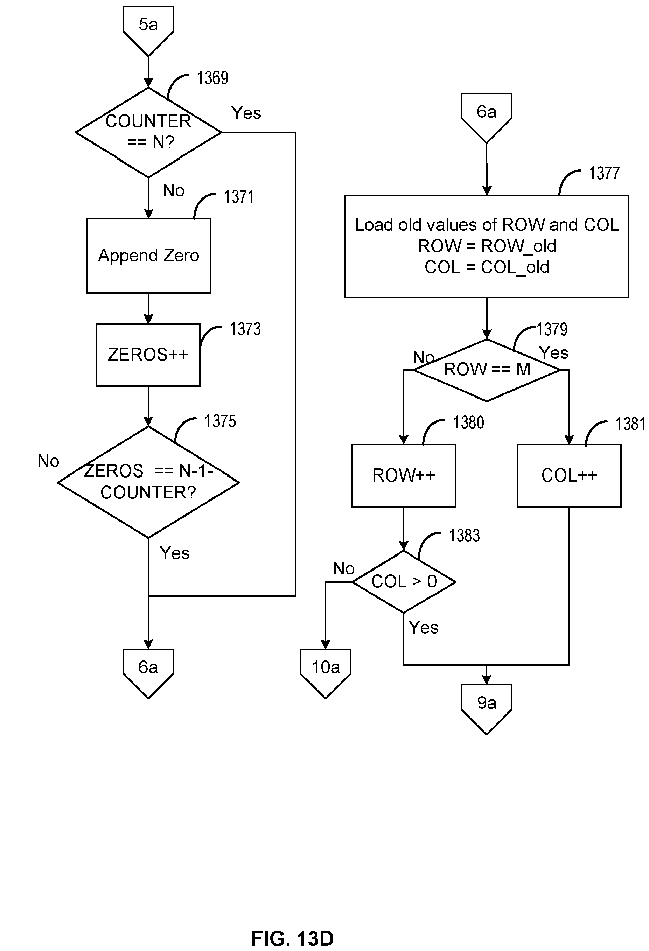

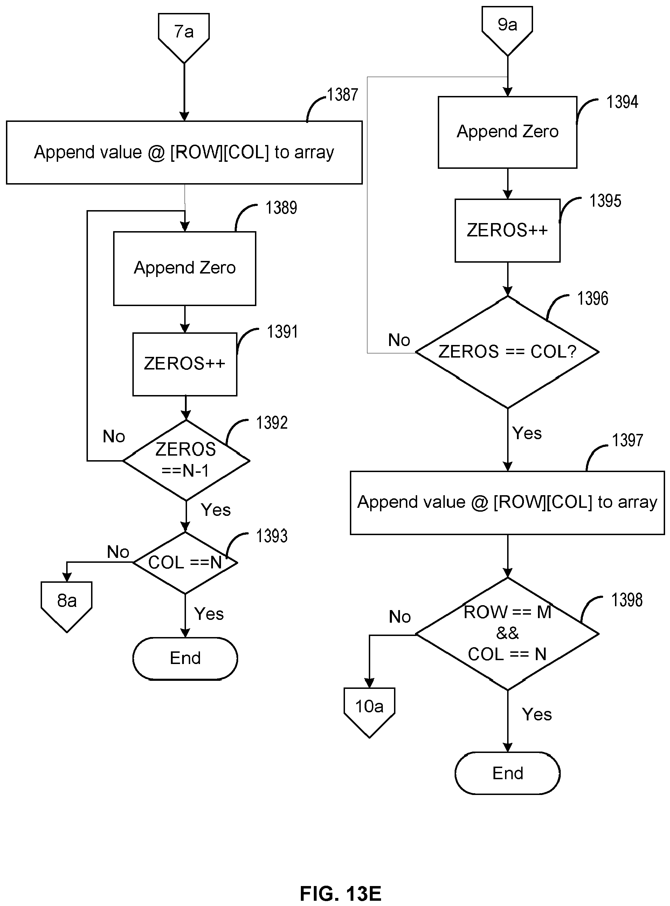

As described at 606, the processing unit 114 may generate zeros in the correct positions, as shown at 912 and 922, to ensure that the correct elements of the tensors are transmitted at the correct. A method of generating a string with zeros for a type A tensor will be described in further detail below, with reference to FIGS. 11A-11E. A method of generating a string with zeros for a type B tensor will be described in further detail below, with reference to FIGS. 13A-13E. Alternatively, as described at 706, the processor may generate a string without adding zeros as shown at 914 and 924, and the zeros may be added by the input data arbitrator 122 of the programmable logic 120 as will be described in further detail with reference to FIG. 20. A method of generating a string without zeros for a type A tensor will also be described in further detail below, with reference to FIGS. 10A-10B. Similarly, a method of generating a string without zeros for a type B tensor will be described in further detail below, with reference to FIGS. 12A-12B.

Referring now to FIGS. 10A-10B, shown therein are flowcharts of a method of processing a tensor of type A to obtain a string without zeros 1000, as shown at 914. The tensor can be processed and stored in memory 112 as an array. M refers to the number of rows in the rank 2 tensor. N refers to the number of columns in the rank 2 tensor. ROW is an index variable which tracks which row of the rank 2 tensor the algorithm is pointing to. COL is similar to ROW but points to the columns. ROW and COL are used to keep track of the current tensor element being flattened. The method 1000 describes how to select the elements as seen in FIG. 9A without zeros.

At 1002, the processing system 110 initializes an unsigned integer array of length equal to the number of elements in the tensor. For example, a 9-element array can be initialized for a tensor containing 9 elements. The number of elements in the tensor can be calculated by multiplying the dimensions of the tensor.

At 1004, the processing system 110 appends the value of the element at [ROW][COL], where [ROW] represents the row index and [COL] represents the column index in the tensor to the array. For example, during the first iteration, the value of the first element in the tensor is appended to the array.

At 1006, the processing system 110 determines if the tensor is a column vector. If the tensor is a column vector, the method proceeds to 1020. If the tensor is not a column vector, the processing system 110 determines if the tensor is a row vector. If the tensor is a row vector, the method proceeds to 1060. If the tensor is not a row vector, the method proceeds to 1008.

At 1008, the processing system 110 determines if the tensor is a row vector. If the tensor is not a row vector, the method proceeds to 1010. If the tensor is a row vector, the method proceeds to 1060.

At 1010, the column index is incremented by 1, and the value of the tensor element in the next column of the same row is appended to the array. The method then proceeds to 1012.

At 1012, the value of the tensor element at [ROW][COL] is appended to the array, and the method proceeds to 1014.

At 1014, the current row index and the current column index are stored, and the method proceeds to 1016.

At 1016, the column index is decreased by 1, and the method proceeds to 1018.

At 1018, the row index is incremented by 1, and the method proceeds to 1032.

If at 1006, the tensor was determined to be a column vector, at 1020, the row index is incremented by 1, and the method proceeds to 1022.

At 1022, the value of the tensor element located at the [ROW][COL] is appended to the array, and the method proceeds to 1024.

At 1024, the processing system 110 determines if the entire column vector has been traversed. If the entire column vector has not been traversed, the method returns to 1020. If the entire column vector has been traversed, the flattening process is completed.

At 1032, the processing system 110 appends the value of the tensor element at [ROW][COL] to the array, and the method proceeds to 1034.

At 1034, the processing system 110 determines if the last element of the first column of the tensor has been reached. If the last element of the first column of the tensor has not been reached, the method returns to 1016. If the last element of the first column of the tensor has been reached, the method proceeds to 1036.

At 1036, the processing system 110 determines if the second to last column of the tensor is being processed. If the second to last column of the tensor is being processed, the method proceeds to 1038. If the second to last column of the tensor is not being processed, the method proceeds to 1042.

At 1038, the column index is incremented, and the method proceeds to 1040.

At 1040, the value of the tensor element at [ROW][COL] is appended to the array, and the flattening process is completed.

At 1042, the old row and column index values are loaded, and the method proceeds to 1044.

At 1044, the processing system 110 determines if the last column of the tensor is being processed. If the last column is not being processed, the method proceeds to 1048, whereas if the last column is being processed, the method proceeds to 1046.

At 1046, the row index is incremented by 1, and the method returns to 1016.

At 1048, the column index is incremented by 1, and the method returns to 1016.

If, at 1008, the tensor was determined to be a row vector and the method proceeded to 1060, at 1060, the column index is incremented by 1, and the method proceeds to 1062.

At 1062, the value of the tensor element at [ROW][COL] is appended to the array, and the method proceeds to 1064.

At 1064, the processing system 110 determines if the last column of the row vector has been traversed. If the last column of the row vector has been traversed, the flattening process is completed. If the last column of the row vector has not been traversed, the method returns to 1060.

Referring now to FIGS. 11A-11E, shown therein are flowcharts of a method of a tensor of type A to obtain a string with zeros 1100, as shown at 912. The tensor can be processed and stored in memory 112 as an array.

At 1101, similar to 1002, the processing system 110 initializes an unsigned integer array. However, at 1101, the array has a length equal to the sum of the number of elements in the tensor and the number of zeros is required. The size of the array can be determined using the following equation:

$$\Delta_A = M + 2\sum_{i=1}^{M}(M - i) + M \times N$$

where M and N correspond to the dimensions of the tensor.

At 1103, the processing system 110 initializes the row index, the column index, the counter, and the number of zeros.

At 1105, the processing system 110 appends the value of the element in the tensor at index [ROW][COL], where [ROW] corresponds to the row index and [COL] corresponds to the column index.

At 1107, the processing system 110 determines if the tensor is a column vector. If the tensor is a column vector, the method proceeds to 1129. If the tensor is not a column vector, the method proceeds to 1109.

At 1109, the processing system 110 determines if the tensor is a row vector. If the tensor is a row vector, the method proceeds to 1121. If the tensor is not a row vector, the method proceeds to 1111.

At 1111, a zero is appended to the array initialized at 1101.

At 1113, the zero counter is incremented by 1.

At 1115, the processing system 110 determines if the number of zeros is equal to the number of rows in the tensor less 1. If the number of zeros is equal to the number of rows in the tensor less 1, the method proceeds to 1147. Otherwise, the method returns to 1111.

If the tensor is a row vector and the method proceeded to 1121, at 1121, the column index is incremented by 1.

At 1123, the value of the tensor element at index [ROW][COL] is appended to the array, and the method proceeds to 1125.

At 1125, the processing system 110 determines if the last column of the row vector has been reached. In other words, the processing system 110 determines if the entire row vector has been parsed. If the last column of the vector has been reached, the method proceeds to 1127. Otherwise, the method returns to 1121.

At 1127, a zero is appended to the array, and the flattening process is completed.

If, at 1107, the tensor was determined to be a row vector, and the method proceeded to 1129, at 1129, a zero is appended to the array and at 1131, the zero counter is incremented.

At 1133, the processing system 110 determines if the number of zeros is equal to the number of rows in the tensor less 1. If the number of zeros is equal to the number of rows less 1, the method proceeds to 1135. Otherwise, the method returns to 1129. ZEROS is a variable which tracks the number of zeros appended in that row of tensor elements which will be sent to the processing elements. This is required to decide if the next row of tensor elements need to be processed. In FIG. 9A, an arrow changes direction if

ZEROS == M-1.

At 1135, the zero counter is reset, and the method proceeds to 1137.

At 1137, the row index is incremented by 1, and the method proceeds to 1139.

At 1139, a zero is appended to the array, and the method proceeds to 1141.

At 1141, the zero counter is incremented, and the method proceeds to 1143.

At 1143, the processing system 110 determines if the number of zeros is equal to the row index. If the number of zeros is equal to the row index, the method proceeds to 1187. If the number of zeros is not equal to the row index, the method returns to 1139.

At 1187, the value of the tensor element at index [ROW][COL] is appended to the array, and the method proceeds to 1189.

At 1189, a zero is appended to the array, and at 1191 the zero counter is incremented.

At 1192, the processing system 110 determines if the number of zeros corresponds to the number of rows in the tensor less 1. ZEROS is a variable which tracks the number of zeros appended in that row of tensor elements which will be sent to the processing elements. This is required to decide if the next row of tensor elements need to be processed. In FIG. 9A, an arrow changes direction if ZEROS == M-1.

If the number of zeros corresponds to the number of rows less 1, the method proceeds to 1193. Otherwise, the method returns to 1189.

At 1193, the processing system 110 determines if all rows of the tensor have been traversed. If the rows have been traversed, the flattening process is completed. Otherwise, the method returns to 1135.

If, at 1115, the method proceeded to 1147, at 1147, the column index is incremented.

At 1149, the value of the tensor element at index [ROW][COL] is appended to the array, and the method proceeds to 1151.

At 1151, the zero counter is reset and the counter is incremented by 1, and the method proceeds to 1155.

At 1555, the current row and column index values are stored, and the method proceeds to 1157.

At 1157, the processing system 110 decreases the column index by 1, increments the row index by 1, and increments the counter by 1, and the method proceeds to 1159.

At 1159, the value of the tensor element at index [ROW][COL] is appended to the array, and the method proceeds to 1161.

At 1161, the processing system 110 determines if the first element of the last row of the tensor is being traversed. If the first element of the last row of the tensor is being traversed, the method proceeds to 1169. Otherwise, the method returns to 1157.

At 1169, the processing system 110 determines if the counter is equal to the number of rows in the tensor. If the counter is equal to the number of rows in the tensor, the method proceeds to 1177. Otherwise, the method proceeds to 1171.

At 1171, the processing system 110 appends a zero to the array, and the method proceeds to 1173.

At 1173, the zero counter is incremented by 1, and the method proceeds to 1175.

At 1175, the processing system 110 determines if the number of zeros is equal to the number of rows in the tensor less 1, less the counter. If the number of zeros is equal to the number of rows in the tensor, less 1, less the counter, the method proceeds to 1177. Otherwise, the method returns to 1171.

At 1177, the processing system 110 loads old row and column index values, and the method proceeds to 1179.

At 1179, the processing system 110 determines if the last column of the tensor has been reached. If the last column of the tensor has been reached, the method proceeds to 1181. Otherwise, the method proceeds to 1180.

At 1180, the processing system 110 increments the column index, and the method proceeds to 1183.

At 1181, the processing system 110 increments the row index, and the method proceeds to 1194.

At 1183, the processing system 110 determines if the first row of the tensor is currently being traversed. If the first row is currently being traversed, the method proceeds to 1194. Otherwise, the method proceeds to 1153.

At 1153, the processing system 110 resets the zero counter and the counter, and the method proceeds to 1155.

At 1194, the processing system 110 appends a zero to the array.

At 1195, the processing system 110 increments the zero counter.

At 1196, the processing system 110 determines if the number of zeros corresponds to the current row index. If the number of zeros corresponds to the current row index, the method proceeds to 1197. Otherwise, the method returns to 1194.

At 1197, the processing system 110 appends the value of the tensor element at index [ROW][COL] to the array.

At 1198, the processing system 110 determines if the last element of the tensor has been reached. If the last element of the tensor has been reached, the flattening process is completed. Otherwise, the method returns to 1153.

Referring now to FIGS. 12A-12B, shown therein are flowcharts of a method of processing a tensor of type B to obtain a string without zeros 1200, as shown at 924. The tensor may be processed and stored in memory 112 as an array. The method of processing a tensor of type B may correspond to a mirror image of the method of processing a tensor of type A described with reference to FIGS. 10A-10B.

At 1202, the processing system 110 initializes an unsigned integer array of length equal to the number of elements in the tensor. For example, a 9-element array can be initialized for a tensor containing 9 elements. The number of elements in the tensor may be calculated by multiplying the dimensions of the tensor.

At 1204, the processing system 110 appends the value of the element at [ROW][COL], where [ROW] represents the row index and [COL] represents the column index in the tensor to the array. For example, during the first iteration, the value of the first element in the tensor is appended to the array.

At 1206, the processing system 110 determines if the tensor is a column vector. If the tensor is a column vector, the method proceeds to 1220. If the tensor is not a column vector, the method proceeds to 1208.

At 1208, the processing system 110 determines if the tensor is a row vector. If the tensor is not a row vector, the method proceeds to 1210. If the tensor is a row vector, the method proceeds to 1260.

At 1210, the row index is incremented by 1, and the method proceeds to 1212.

At 1212, the value of the tensor element at [ROW][COL] is appended to the array, and the method proceeds to 1214.

At 1214, the current row index and the current column index are stored, and the method proceeds to 1216.

At 1216, the column index is incremented by 1, and the method proceeds to 1218.

At 1218, the row index is decreased by 1, and the method proceeds to 1232.

If, at 1206, the tensor was determined to be a column vector, at 1220, the row index is incremented by 1, and the method proceeds to 1222.

At 1222, the value of the tensor element located at the [ROW][COL] is appended to the array, and the method proceeds to 1224.

At 1224, the processing system 110 determines if the entire column vector has been traversed. If the entire column vector has not been traversed, the method returns to 1220. If the entire column vector has been traversed, the flattening process is completed.

At 1232, the processing system 110 appends the value of the tensor element at [ROW][COL] to the array, and the method proceeds to 1234.

At 1234, the processing system 110 determines if the last element of the first column of the tensor has been reached. If the last element of the first column of the tensor has not been reached, the method returns to 1216. If the last element of the first column of the tensor has been reached, the method proceeds to 1236.

At 1236, the processing system 110 determines if the second to last column of the tensor is being processed. If the second to last column of the tensor is being processed, the method proceeds to 1238. If the second to last column of the tensor is not being processed, the method proceeds to 1242.

At 1238, the column index is incremented, and the method proceeds to 1240.

At 1240, the value of the tensor element at [ROW][COL] is appended to the array, and the flattening process is completed.

At 1242, the old row and column index values are loaded, and the method proceeds to 1244.

At 1244, the processing system 110 determines if the last row of the tensor is being processed. If the last row is not being processed, the method proceeds to 1248, whereas if the last column is being processed, the method proceeds to 1246.

At 1246, the column index is incremented by 1, and the method returns to 1216.

At 1248, the column index is incremented by 1 and the method returns to 1216.

If, at 1208, the tensor was determined to be a row vector and the method proceeded to 1260, at 1260, the column index is incremented by 1, and the method proceeds to 1262.

At 1262, the value of the tensor element at [ROW][COL] is appended to the array, and the method proceeds to 1264.

At 1264, the processing system 110 determines if the last column of the row vector has been traversed. If the last column of the row vector has been traversed, the flattening processed is completed. If the last column of the row vector has not been traversed, the method returns to 1260.

Referring now to FIGS. 13A-13E, shown therein are flowcharts of an example method of processing a tensor of type B to obtain a string with zeros 1300 as shown at 922. The tensor may be processed and stored in memory 112 as an array. The method of processing a tensor of type B may be substantially similar to the method of processing a tensor of type A.

At 1301, similar to 1202, the processing system 110 initializes an unsigned integer array of length equal to the sum of the number of elements in the tensor and the number of zeros required. The size of the array can be determined using the following equation:

$$\Delta_B = N + 2\sum_{i=1}^{N}(N-i) + M \times N$$

where M and N correspond to the dimensions of the tensor.

The method may be substantially similar to the method described with reference to FIGS. 11A-11E. Specifically, the method 1300 may be the mirror image of the method 1100.

However, at 1315, the processing system 110 determines if the number of zeros is equal to the number of columns in the tensor less 1 instead of the number of rows. If the number of zeros is equal to the number of columns in the tensor less 1, the method proceeds to 1347. Otherwise, the method returns to 1311.

At 1325, the processing system 110 determines if the last row of the tensor is being processed, rather than the last column. If the last row is being processed, the method proceeds to 1327. Otherwise, the method proceeds to 1321.

At 1333, the processing system 110 determines if the number of zeros is equal to the number of columns less 1, instead of determining if the number of zeros is equal to the number of rows less 1. If the number of zeros is equal to the number of columns less 1, the method proceeds to 1335. Otherwise, the method returns to 1329.

At 1337, the column index rather than the row index is incremented by 1.

At 1343, the processing system 110 determines if the number of zeros is equal to the column index rather than the row index. If the number of zeros is equal to the column index, the method proceeds to 1387. If the number of zeros is not equal to the column index, the method returns to 1339.

At 1392, the processing system 110 determines if the number of zeros corresponds to the number of columns in the tensor less 1 rather than the number of rows in the tensor less 1. If the number of zeros corresponds to the number of columns less 1, the method proceeds to 1393. Otherwise, the method returns to 1389.

At 1393, the processing system 110 determines if all columns, rather than the rows, of the tensor have been traversed. If the columns have been traversed, the flattening process is completed. Otherwise, the method returns to 1335.

If, at 1315, the method proceeded to 1347, at 1347, the row index, rather than the column index, is incremented.

At 1357, the processing system 110 increments the column index by 1, decreases the row index by 1, and increments the counter by 1.

At 1361, the processing system 110 determines if the last element of the first row of the tensor is being traversed. If the last element of the first row of the tensor is being traversed, the method proceeds to 1369. Otherwise, the method returns to 1357.

At 1369, the processing system 110 determines if the counter is equal to the number of columns in the tensor. If the counter is equal to the number of columns in the tensor, the method proceeds to 1377. Otherwise, the method proceeds to 1371.

At 1375, the processing system 110 determines if the number of zeros is equal to the number of columns in the tensor less 1, less the counter. If the number of zeros is equal to the number of columns in the tensor less 1, less the counter, the method proceeds to 1377. Otherwise, the method returns to 1371.

At 1379, the processing system 110 determines if the last row of the tensor has been reached. If the last row of the tensor has been reached, the method proceeds to 1381. Otherwise, the method proceeds to 1380.

At 1380, the processing system 110 increments the row index, and the method proceeds to 1383.

At 1381, the processing system 110 increments the column index, and the method proceeds to 1394.

At 1383, the processing system 110 determines if a column other than the first column of the tensor is currently being traversed. If the first row is currently being traversed, the method proceeds to 1394. Otherwise, the method proceeds to 1353.

At 1353, the processing system 110 resets the zero counter and the counter, and the method proceeds to 1355.

At 1394, the processing system 110 appends a zero to the array.

At 1395, the processing system 110 increments the zero counter.

At 1396, the processing system 110 determines if the number of zeros corresponds to the current column index. If the number of zeros corresponds to the current column index, the method proceeds to 1397. Otherwise, the method returns to 1394.

At 1397, the processing system 110 appends the value of the tensor element at index [ROW][COL] to the array.

At 1398, the processing system 110 determines if the last element of the tensor has been reached. If the last element of the tensor has been reached, the flattening process is completed. Otherwise, the method returns to 1353.

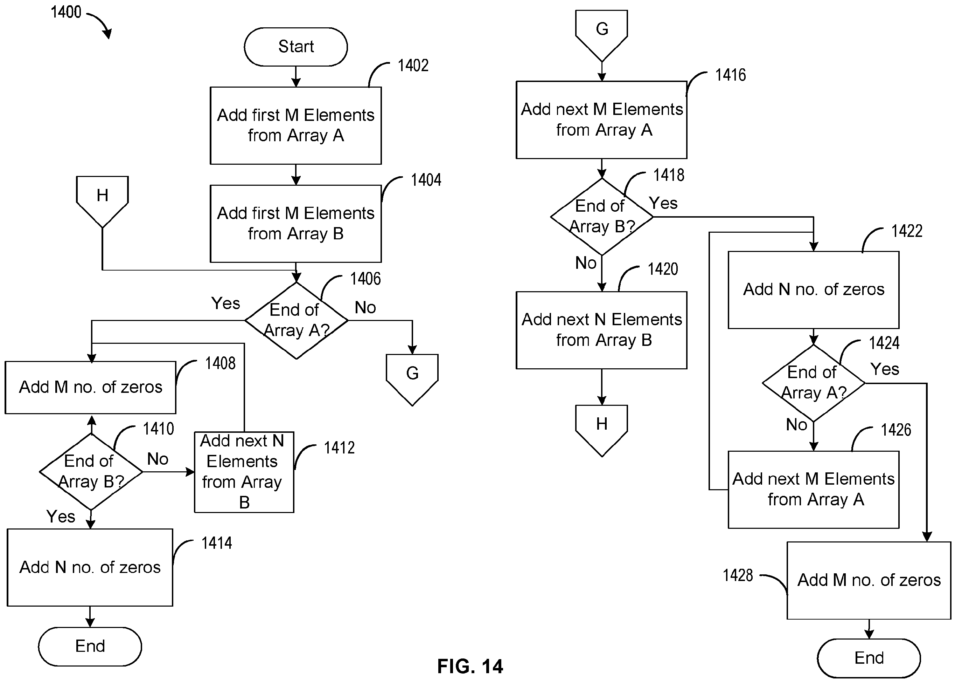

Referring now to FIG. 14, shown therein are flowcharts of a method of interleaving input tensors 1400. For example, the flattened input tensors obtained above, with reference to FIGS. 10A-13E, may be interleaved by the processing system 110 prior to being transmitted to the programmable logic 120. In at least one implementation, sending the tensor stream to the programmable logic as described at 608 and 708 can include interleaving the input tensors. The input tensors may be interleaved such that a set of row and column tensor elements transmitted to boundary processing elements of the tensor contraction block 124 are adjacent. Interleaving can decrease latency.

For example, the following two arrays:

$$Array\ A\colon a_{00}, a_{01}, a_{10}, a_{02}, a_{11}, a_{20}, \cdots, a_{MN}$$
$$Array\ B\colon b_{00}, b_{10}, b_{01}, b_{20}, b_{11},, b_{02} \cdots, b_{MN}$$

may be interleaved to obtain the following array:

$$Interleaved\ Array\colon a_{00}, b_{00}, a_{01}, a_{10}, b_{10}, b_{01}, a_{02}, a_{11}, a_{20}, b_{20}, b_{11}, b_{20}, \cdots, a_{MN}, b_{MN}$$

Similarly, input tensor arrays containing zeros as obtained above, with reference to FIGS. 11A-11E and 13A-13E, may be interleaved as follows:

$$Array\ A: a_{00}, \cdots, 0, a_{01}, a_{10}, \cdots, 0, a_{02}, a_{11}, a_{20}, \cdots, 0, \cdots, 0, \cdots, a_{MN}$$
$$Array\ B: b_{00}, \cdots, 0, b_{10}, b_{01}, \cdots, 0, b_{20}, b_{11}, b_{02} \cdots, 0, \cdots, 0, \cdots, b_{MN}$$

*Interleaved Array*:

$$a_{00}, \cdots, 0, b_{00}, \cdots, 0, a_{01}, a_{10}, \cdots, 0, b_{10}, b_{01}, \cdots, 0, a_{02}, a_{11}, a_{20}, \cdots, 0,$$
$$b_{20}, b_{11}, b_{20}, \cdots, 0, \cdots, 0, \cdots, a_{MN}, 0, \cdots, b_{MN}$$

M refers to the number of rows in a rank 2 tensor. N refers to the number of columns in the rank 2 tensor.

At 1402, the first M elements from the first tensor array are inserted into an initialized interleaved array, where M corresponds to the number of rows in the initial first input tensor.

At 1404, the first M elements from the second tensor array are inserted into the interleaved array, where M corresponds to the number of rows in the initial second input tensor.

At 1406, the processing system 110 determines if the entire contents of the first tensor array have been inserted into the interleaved array. If the entire contents of the first tensor array have been inserted into the interleaved array, the method proceeds to 1408. Otherwise, the method proceeds to 1416.

At 1408, the processing system 110 adds M number of zeros to the interleaved array, and the method proceeds to 1410.

At 1410, the processing system 110 determines if the entire contents of the second tensor array have been inserted into the interleaved array. If the entire contents of the second tensor array have been inserted into the interleaved array, the method proceeds to 1414. Otherwise, the method proceeds to 1412.

At 1412, the processing system 110 adds the next N elements from the second tensor array into the interleaved array. The method then returns to 1408.

At 1414, the processing system 110 adds N number of zeros to the interleaved array, and the interleaving process is completed.

If, at 1406, the processing system 110 determined that the entire contents of the first tensor array have not been inserted into the interleaved array and proceeded to 1416, at 1416, the processing system 110 inserts the next M elements into the interleaved array.

At 1418, the processing system 110 determines if the entire contents of the second tensor array have been inserted into the interleaved array. If the entire contents have been inserted into the interleaved array, the method proceeds to 1422. Otherwise, the method proceeds to 1420.

At 1420, the processing system 110 adds the next N elements from the second tensor array into the interleaved array, and the method proceeds to 1406.

At 1422, the processing system 110 adds N number of zeros to the interleaved array, and the method proceeds to 1424.

At 1424, the processing system 110 determines if the entire contents of the first tensor array have been inserted into the interleaved array. If the entire contents have been inserted into the interleaved array, the method proceeds to 1428. Otherwise, the method proceeds to 1426.

At 1426, the processing system 110 adds the next M elements from the first tensor array to the interleaved array. The method then returns to 1422.

At 1428, the processing system 110 adds M number of zeros to the interleaved array, and the interleaving process is completed.

Referring now to FIG. 15, shown therein is an example of an input data arbitrator 1500. The input data arbitrator block 1500 may correspond to input data arbitrator block 122. The input data arbitrator can transmit data from the processing system 110 to the tensor contraction processing block 124. The data arbitrator 1500 may be a clock controlled 1514 demultiplexer 1502 configured to receive data from the memory 112 via the at least one controller 1510, 1512 and transmit the elements of the input tensors to the tensor contraction block in a serial manner. The demultiplexer 1502 may be a collection of demultiplexers, and the inputs received from the at least one controller 1510, 1512 may be propagated through the collection of demultiplexers. The input data arbitrator block 1500 may receive the input tensors as an interleaved tensor, as described above. The input data arbitrator 1500 may transmit input tensor data to the inputs of corresponding processing elements, as shown by outputs 1520-1 to 1502-i, 1522-1 to 1522-j.

The input data arbitrator 1500 may transmit tensor elements to the arrays of processing elements based on the number of clock cycles that have elapsed. In at least one implementation, the input arbitrator block includes registers (not shown), and tensor data can be temporarily stored in the registers of the input arbitrator block before being transmitted to a processing element of the tensor contraction processing block 124.

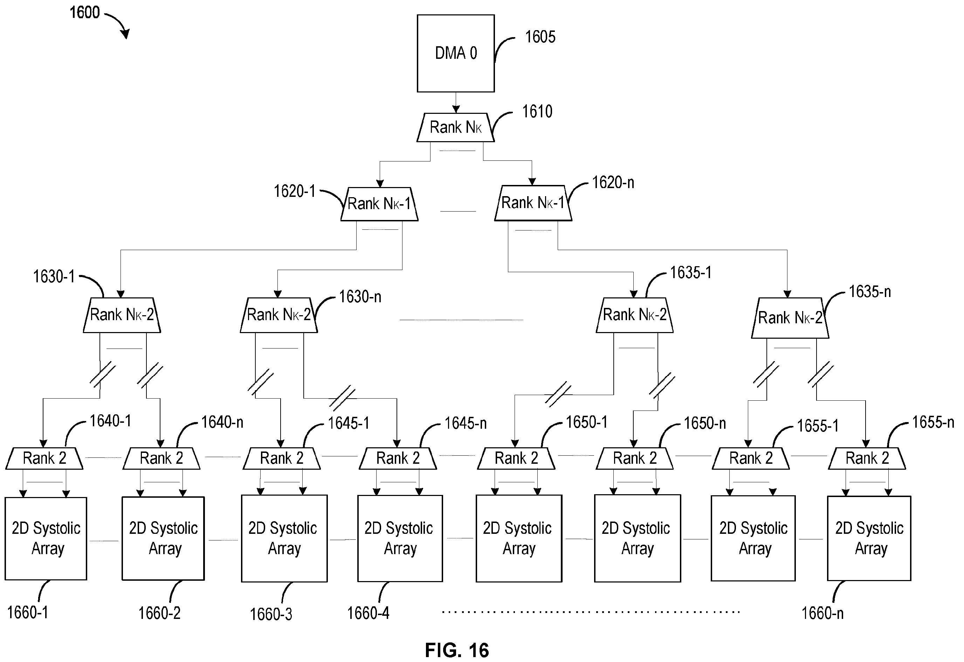

Referring now to FIG. 16, shown therein is a diagram of another example of an input data arbitrator block 1600.

The input data arbitrator block 1600 may correspond to input data arbitrator block 122. Input data arbitrator block 1600 can be in communication with the processing system 110 via a controller 1605.

In at least one embodiment, as described above, the tensor contraction system can contract tensors of rank higher than 2. In such embodiments, the input arbitrator block may include a plurality of demultiplexers arranged in a tree-like fashion. Each demultiplexer may be associated with its own counter module. Input data arbitrator block 1600 includes a rank $N_k$ demultiplexer 1610, and can be connected to a plurality of rank $N_{k-1}$ demultiplexers 1620-1 to 1620-n, each of which can in turn be connected to rank $N_{k-2}$ demultiplexers 1630-1 to 1630-n and 1635-1 to 1635-n, and each rank $N_{k-2}$ demultiplexer can in turn connected to a plurality of rank 2 demultiplexers 1640-1 to 1640-n, 1645-1 to 1645-n, 1650-1 to 1650-n, 1655-1 to 1655-n. Though FIG. 16 shows four levels, it will be understood that the number of levels depends on the rank of the input tensors. For example, a contraction of rank 2 tensors may require only rank 2 demultiplexers. For example, a contraction of rank 3 tensors, which may be decomposed into a collection of rank 2 tensors, may require a rank 3 demultiplexer to route the collection of rank 2 tensors to their relevant rank 2 demultiplexer. Similarly, to contract rank 6 tensors, 5 levels of demultiplexers may be used.

The system 100 can be configured to include and instantiate one demutiplexer for every two-dimensional array of processing elements 1660-1 to 1660-n. For example, for a network of arrays of processing elements that contains 3 arrays of processing elements, three demultiplexers may be instantiated. The number of two-dimensional arrays of processing elements instantiated may correspond to the dimensions of the output tensor.

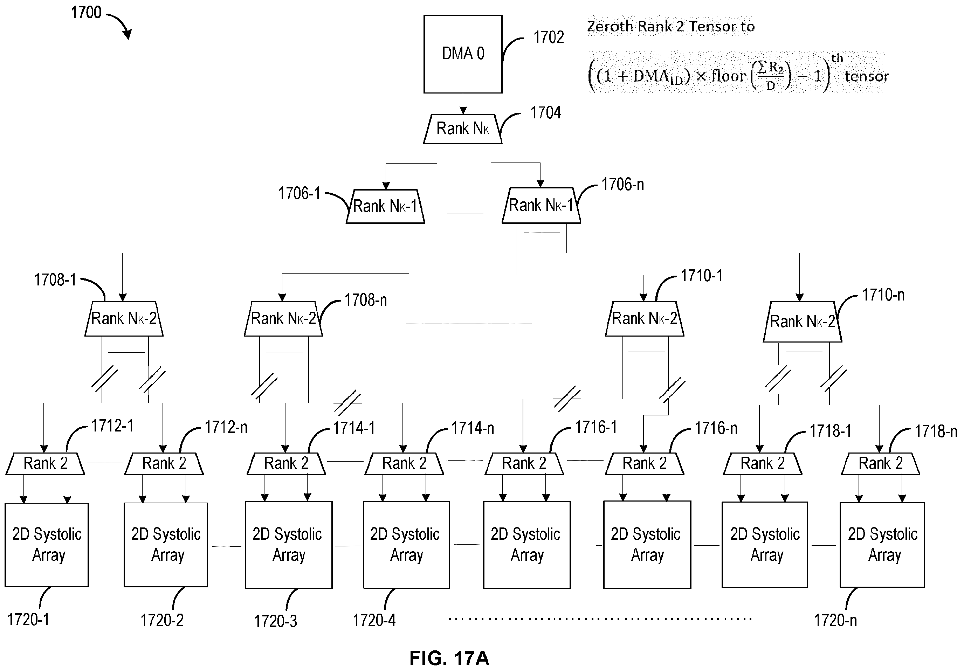

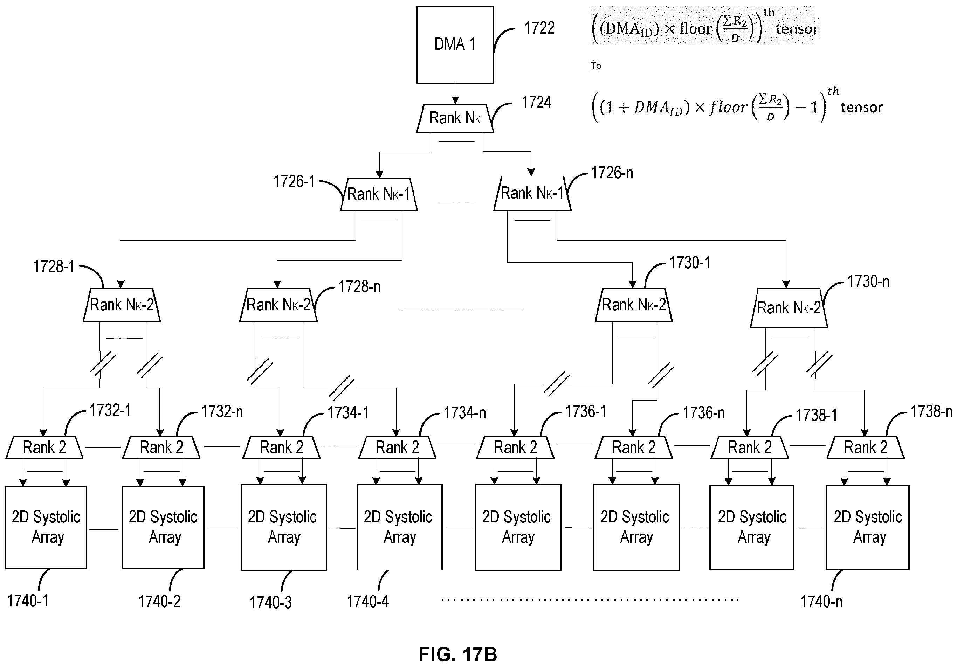

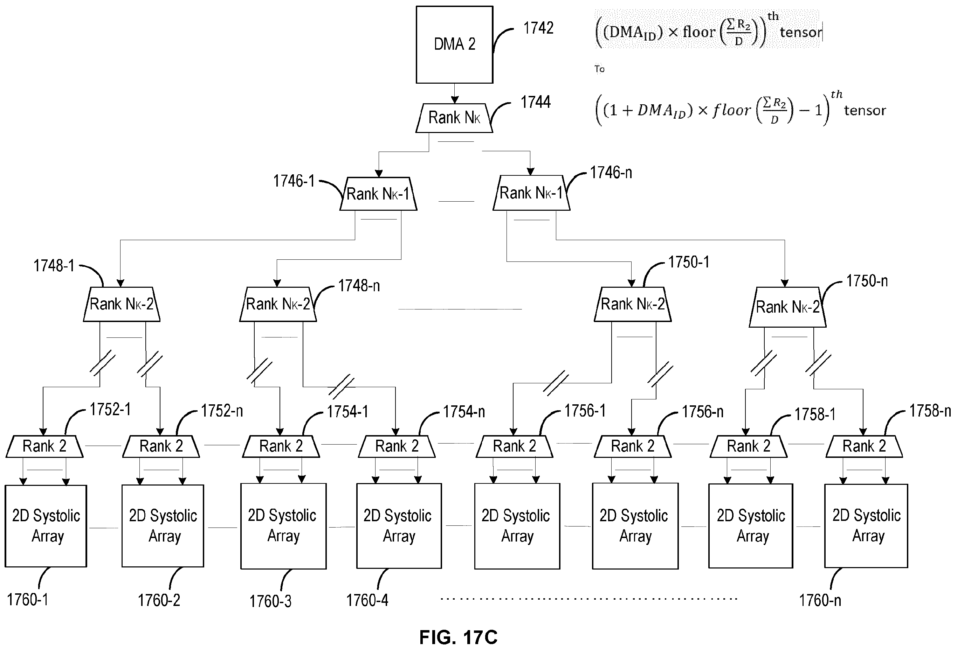

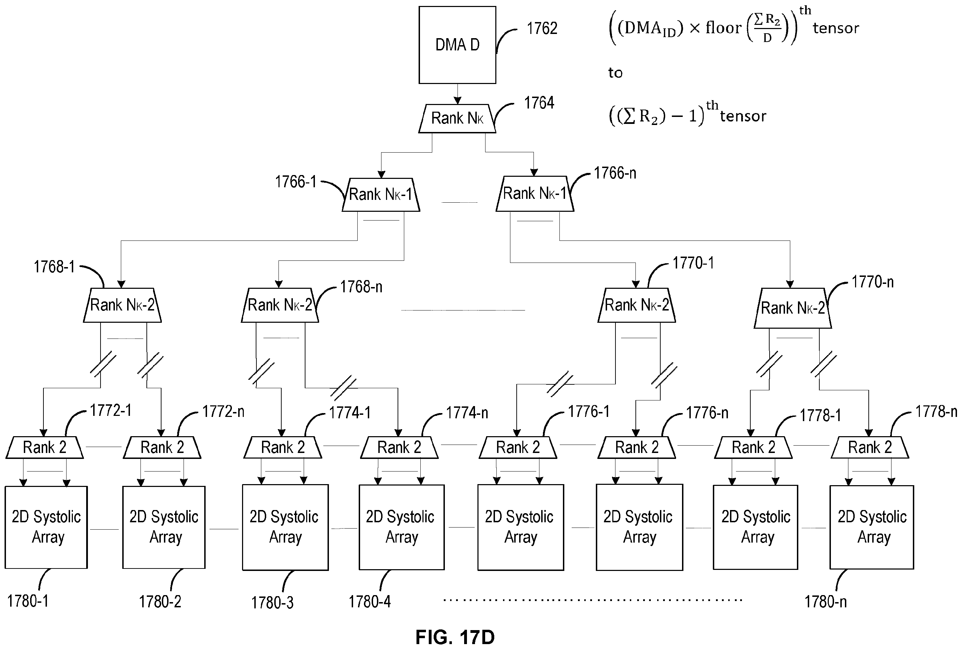

Referring now to FIGS. 17A-17D, shown therein are diagrams of another example of an input data arbitrator block 1700. Input data arbitrator block 1700 may correspond to the input data arbitrator block 112. In at least one implementation, as shown in FIGS.17A-17D, the input data arbitrator may be in communication with the processing system 110 via several controllers 1702, 1722, 1742, 1762. Similar to FIG. 16, each of the controllers may be connected to a collection of demultiplexers, arranged in a tree-like fashion, and each demultiplexer may be associated with its own counter module (not shown).

Each of the demultiplexers may operate independently of each other. Similarly, the collections of demultiplexers may operate independently of each other.

Each controller may transmit a portion of the input tensors to a corresponding collection of demultiplexers. For example, each controller may transmit a portion of the interleaved array described above with reference to FIG. 14 to a collection of demultiplexers.

For example, as described above, in at least some embodiments, the system may be configured to contract tensors of rank higher than 2 by decomposing the input tensors into an array of rank 2 tensors. In such cases, the input tensors may be transmitted to the collections of demultiplexers according to the following equations:

First controller 1702: Zeroth tensor to $\left(\left(1 + DMA_{ID}\right)x\ floor\ \left(\frac{\Sigma R_2}{D} - 1\right)\right)^{th}$ tensor;

Second controller 1722: $\left(\left(1 + DMA_{ID}\right)x\ floor\ \left(\frac{\Sigma R_2}{D}\right)\right)^{th}$ tensor to $\left(\left(1 + DMA_{ID}\right)x\ floor\ \left(\frac{\Sigma R_2}{D} - 1\right)\right)^{th}$ tensor

Third controller 1742: $\left(\left(1 + DMA_{ID}\right)x\ floor\ \left(\frac{\Sigma R_2}{D}\right)\right)^{th}$ tensor to $\left(\left(1 + DMA_{ID}\right)x\ floor\ \left(\frac{\Sigma R_2}{D} - 1\right)\right)^{th}$ tensor

Last controller 1762: $\left(\left(DMA_{ID}\right)x\ floor\ \left(\frac{\Sigma R_2}{D}\right)\right)^{th}$ tensor to $((\Sigma R_2) - 1))^{th}$ tensor where $DMA_{ID}$ corresponds to the number assigned to the controller, $\Sigma R_2$ corresponds to the number of rank 2 tensors to be transmitted, D corresponds to the number of controllers available, and floor corresponds to the function rounding down the value of the argument to the nearest integer value.

Though FIGS.17A-17D show four controllers, it will be understood that any number of controllers may be used, depending on the hardware used to implement the system 100.

Alternatively, controllers 1702, 1722, 1742, and 1762 can be the same controller, and data can be transmitted serially. For example, the controller can first be connected to demultiplexer 1704 and transmit a first set of tensor data to demultiplexer 1704. Once the data transfer is completed, the controller can be disconnected from demultiplexer 1704 and connected to demultiplexer 1724, which may receive a second set of tensor data. The process can be repeated with demultiplexers 1744 and 1764 and any other additional rank $N_k$ demultiplexers, until all tensor data has been transmitted.

Alternatively, demultiplexers 1704, 1724, 1744, and 1764 can be the same demultiplexer, and the demultiplexer can be connected to controllers 1702, 1722, 1742, and 1762 in a serial manner. For example, demultiplexer 1704 may be connected to a first controller 1702, which can transmit tensor input data to the demultiplexer 1704. Once the transfer of data has been completed, the first controller 1702 may be disconnected from the demultiplexer 1704, and a second controller 1722 may be connected to the demultiplexer 1704. The controller connection and data transmission operations may be repeated until all input tensor data has been received.

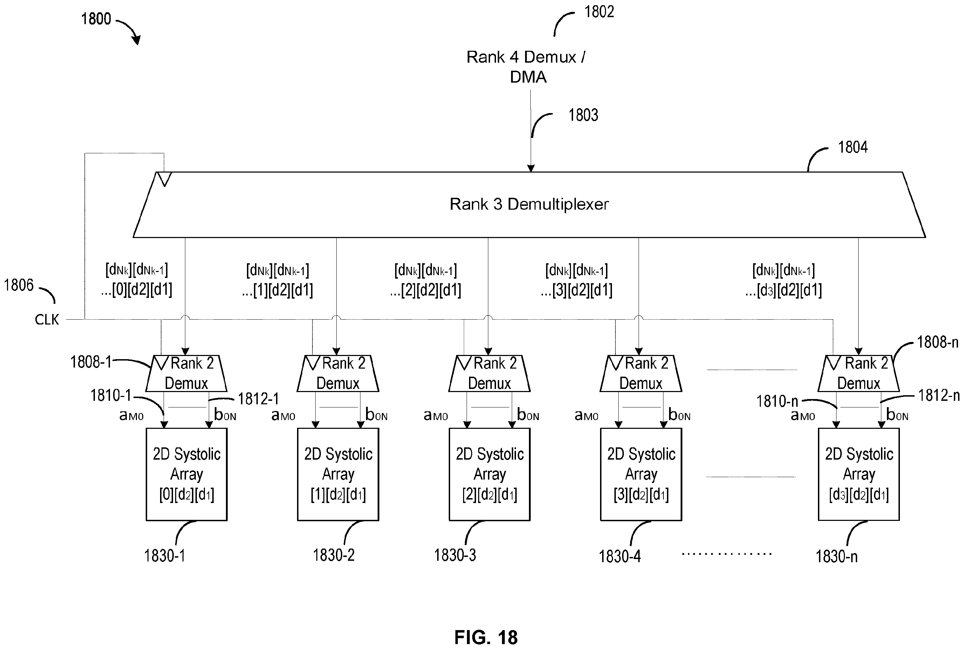

Referring now to FIG. 18, shown therein is a diagram of an example embodiment of a rank 3 demultiplexer 1804. The rank 3 demultiplexer may correspond to a demultiplexer $N_{k-2}$ shown in FIGS. 16-17. Similar to the demultiplexer shown in FIGS. 16-17, the demultiplexer 1804 may be connected to a demultiplexer of a higher rank 1802, and may be connected to a plurality of rank 2 demultiplexers 1808-1 to 1808-n, which may, in turn, each be connected to a corresponding array of processing elements 1830-1 to 1830-n. A clock 1806 may be connected to each of the rank 2 demultiplexers 1808-1 to 1808-n to control the timing. Boundary input connections 1810, 1812 are the set of connections which connect the outputs of the rank 2 demultiplexer to the inputs of the boundary processing elements. (For ease of reference, the boundary processing elements are the processing elements which are to the left and/or top of the 2D systolic array.) The boundary processing elements can be seen, for example, in FIGS. 20, 21, and 23.

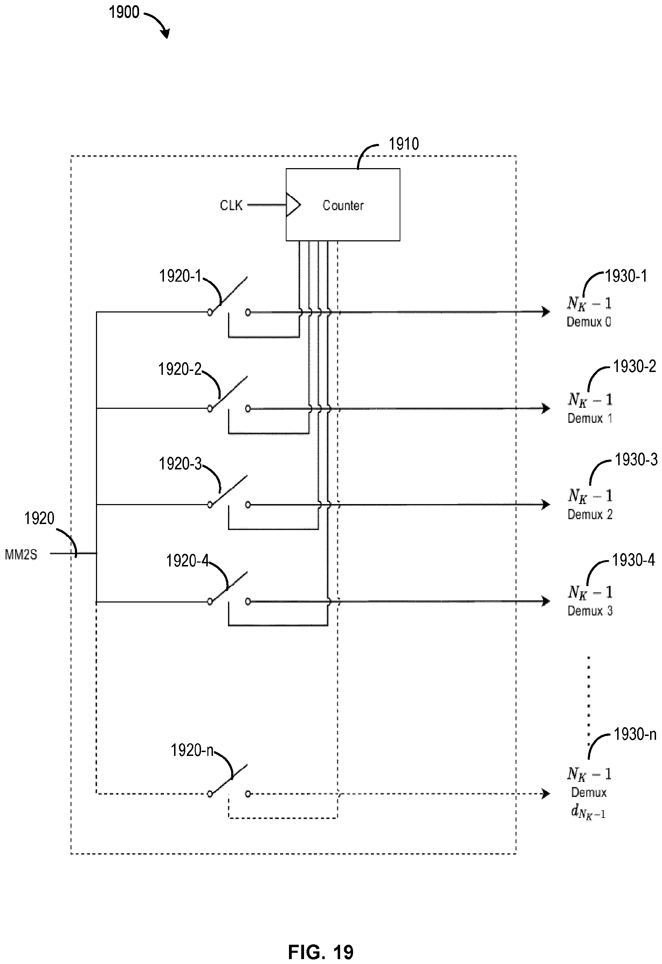

In at least one implementation, the rank 3 demultiplexer 1804 is configured to route its input 1803 to each of the arrays of processing elements in a serial manner as will be described in further detail with reference to FIG. 19.

While FIG. 18 shows a rank 3 demultiplexer, the same configuration may be used for a demultiplexer of any rank higher than 2.

Similarly, in at least one implementation, for rank 2 tensor contractions, each rank 2 demultiplexer is connected to the controller in a serial manner. For example, the controller may be connected such that a first rank 2 demultiplexer receives data from the controller. The controller may then be disconnected from the first demultiplexer and connected to a second demultiplexer, and the data transmission operation may be repeated. The process may be repeated until all demultiplexers and all networks of processing elements have received a first set of data. Subsequent sets of data may then be transmitted, in the same manner, until the tensor contraction process is completed.

Alternatively, the demultiplexers 1808-1 to 1808-n may receive data in a parallel fashion. For example, it is possible to transmit data in parallel when generating zeros on the PL. Continuing this example, the demultiplexer routes its input or internally generated zeros to the relevant outputs which are the boundary input connections depending on the number of clock cycles that have elapsed since transmission of tensor elements have begun.

Referring now to FIG. 19, shown therein is a diagram of the internals of an example embodiment of a rank 3 or above demultiplexer 1900. The demultiplexer 1900 may correspond to demultiplexer 1804, or any of demultiplexers 1708-1 to 1708-n, 1710-1 to 1710-n, 1706-1 to 1706-n, 1704, 1728-1 to 1728-n, 1730-1 to 1730-n, 1726-1 to 1726-n, 1724, 1748-1 to 1748-n, 1750-1 to 1750-n, 1746-1 to 1746-n, 1744, 1768-1 to 1768-n, 1770-1 to 1770-n, 1766-1 to 1766-n, 1764, 1630-1 to 1630-n, 1635-1 to 1635-n, 1620-1 to 1620-n or 1610.

The demultiplexer 1900 may include a counter module 1910 and may receive an input 1920 from one of a controller or a demultiplexer of higher rank. For example, if the demultiplexer 1900 represents a rank 3 demultiplexer, input 1920 may correspond to the output of a rank 4 demultiplexer.

Demultiplexer 1900 may be connected to a plurality of rank $N_K-1$ demultiplexers. For example, if the demultiplexer 1900 represents a rank 3 demultiplexer, $N_K-1$ outputs 1930-1 to 1930-n may correspond to rank 2 demultiplexers.

As described with reference to FIG. 18, the lower rank demultiplexers may receive tensor data from the demultiplexer 1900 in a serial manner. Demultiplexer 1900 may be configured to connect to the first demultiplexer 1930-1 via connection 1920-1. When the switch 1920-1 is activated, the demultiplexer 1900 may route its input 1920 to the first demultiplexer 1930-1. Once all the necessary tensor data has been transmitted, the switch may be deactivated 1920-1. The second switch 1920-2 may then be activated, and data may be routed to the second demultiplexer 1930-2.

This process may be repeated until all tensor elements have been propagated to the arrays of processing elements. The same process may also be repeated for each higher rank demultiplexer. For example, the output of a rank 4 demultiplexer may be connected to the input of demultiplexer 1900.

In at least one implementation, the counter module 1910 of each demultiplexer determines the internal routing of the demultiplexer. For example, the counter module 1910 may count the number of clock cycles that have elapsed. The number of clock cycles may correspond to the number of tensor elements sent. For example, each tensor element may take a maximum of one clock cycle to be transmitted. By determining the number of clock cycles that have elapsed, the input data arbitrator can determine the number of elements that have not been received by the input data arbitrator or sent to the array of processing elements.

Referring now to FIG. 20, shown therein is a diagram of the internals of an example embodiment of a rank 2 demultiplexer 2000 with a zero generator, which may be used by the input data arbitrator block 122. Rank 2 demultiplexer 2000 may correspond to any rank 2 demultiplexer shown in FIGS. 16-18. Demultiplexer 2000 may be used in combination with a processing system 110 that generates tensor streams that do not include zeros, as described at 706. Demultiplexer 2000 may be associated with one array of processing elements, as shown in FIGS. 16-18.

Demultiplexer 2000 may include a counter module 2010, a zero counter 2060, a zero generator 2050, an input 2020, a plurality of register 2030-1 to 2030-n, 2031-1 to 2031-n, and a plurality of outputs that can be connected to a plurality of processing elements 2040-1 to 2040-n, 2041-1 to 2041-n.

Demultiplexer 2000 may operate in substantially the same way as demultiplexer 1900. However, demultiplexer 2000 may include a plurality of registers 2030-1 to 2030-n, 2031-1 to 2031-n. Each register may be configured to store an input value, before propagating the value to a processing element. The registers may also be configured to generate an idle signal. For example, an idle signal may be set high when all registers 2030-1 to 2030-n, 2031-1 to 2031-n of the demultiplexer 2000 have not received new values. The idle signal may inform the processing elements to hold before performing operations on the values received. The idle signal may be set low once all registers 2030-1 to 2030-n, 2031-1 to 2031-n have received values. An idle signal set low may indicate that the processing elements can perform operations on their respective inputs.

Additionally, instead of routing outputs to lower rank demultiplexers, demultiplexer 2000 may route outputs to a specific processing element in a two-dimensional array of processing elements. For example, the first switch 2020-1 may be activated, and a tensor element may be transmitted to a first processing element 2040-1. The first switch 2020-1 may be deactivated, and the second switch 2020-2 may be activated. A tensor element may then be transmitted to a second processing element 2040-2. Demultiplexer 2000 may be configured to transmit tensor elements to boundary processing elements. Additionally, demultiplexer 2000 may be configured to transmit tensor elements to the left boundary of the array of processing elements before transmitting tensor elements to the top boundary of the array of processing elements. For example, as shown in FIG. 20, processing elements 2040-1 to 2040-n correspond to processing elements on the left boundary of the array of processing elements, and processing elements 2041-1 to 2041-n correspond to processing elements on the top boundary of the array of processing elements. Processing elements on the left boundary of the array of processing elements may receive inputs corresponding to an input tensor of type A 2140, and processing elements on the right boundary of the array of processing elements may receive inputs corresponding to an input tensor of type B 2141.

The zero generator 2050 may route zeros to appropriate registers. The appropriate registers may be determined based on the clock cycle. For example, the number of clock cycles that have elapsed may be used to determine which element of the input tensors is currently being received by the demultiplexer 2000. The zero generator 2050 may then be configured to determine the number of zeros required. For example, the number of zeros required may depend on the row and column index values of a tensor element. The number of zeros required may decrement after every data transfer, until all processing elements in the array of processing elements have received inputs.

The zero generator 2050 may reduce the number of data transfers from the processing system 110 to the programmable logic 120 by reducing the number of zeros transmitted from the processing system 110 to the programmable logic 120. In some cases, the number of data transfers can be reduced by up to 50%, which can increase overall throughput and reduce memory requirements.

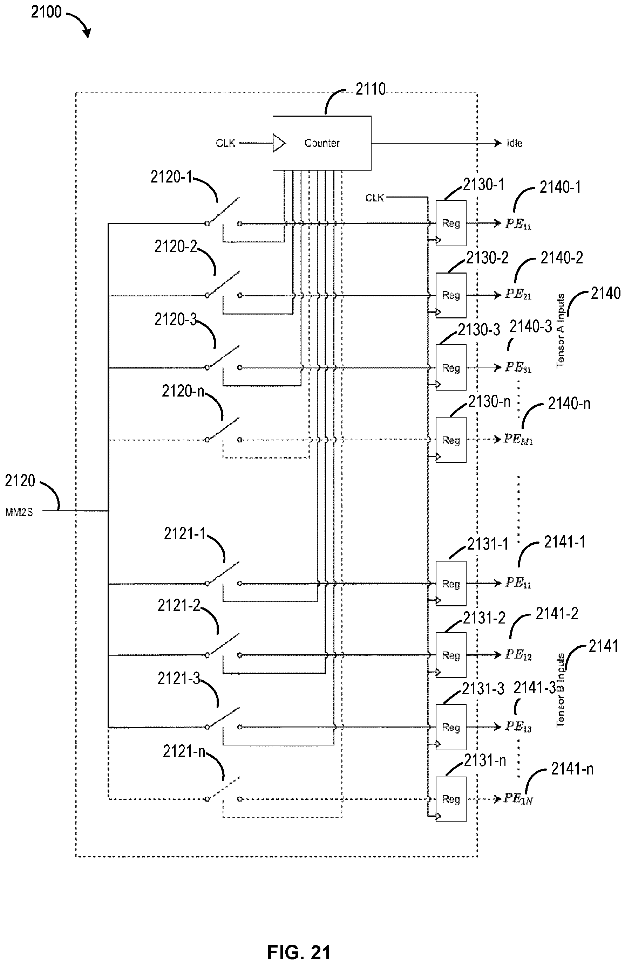

Referring now to FIG. 21, shown therein is a diagram of an example embodiment of a rank 2 demultiplexer 2100 without zero generator that may be used by the input data arbitrator block 122. Similar to demultiplexer 2000, demultiplexer 2100 can correspond to any rank 2 demultiplexer shown in FIGS. 16-18. Demultiplexer 2100 may be substantially similar to demultiplexer 2000. However, demultiplexer 2100 does not include a zero generator. Demultiplexer 2100 may, for example, be used in combination with a processing system 110 that generates tensor streams with zeros, as described at 606.

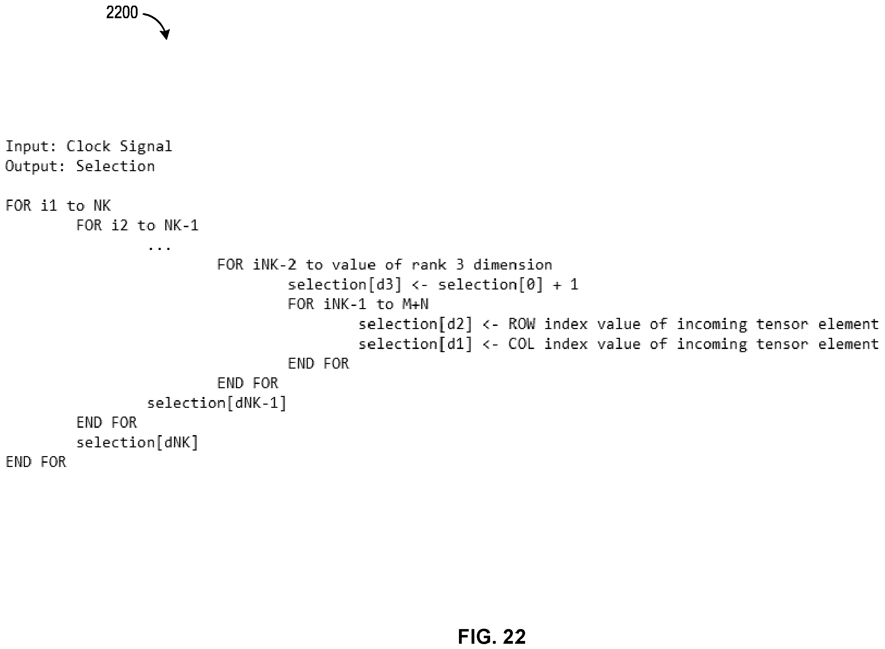

Referring now to FIG. 22, shown therein is an example of a pseudocode of a method of input data arbitrator routing 2200 as described above with reference to FIGS. 16-18. In method 2200, i1 to NK are loop variables which correspond to the dimension of the tensor. M refers to the number of ROWS in the rank 2 tensor, and N refers to the number of columns in the rank 2 tensor. M+N is the number of boundary processing elements that need to be input with tensor elements. NK corresponds to the final dimension value of the tensor. NK-1 corresponds to the next dimension value in the direction heading to the lower dimensions.

The method 2200 has a clock signal as input and a selection as output. The method 2200 is a nested "for loop" as follows:

```
FOR i1 TO NK
  FOR i2 to NK-1
      FOR iNK-2 to value of rank 3 dimension
        selection[d3] <- selection[0] + 1
        FOR 1NK-1 to M+N
             selection[d2] <- ROW index value
             selection[dl] <- COL index value
```

```
        END FOR
      END FOR
    selection[dNK-1]
  END FOR
  selection[dNK]
END FOR
```

In method 2200, ROW index value refers to the row index value of the incoming tensor element and COL index value refers to the column value of the incoming tensor element.

Referring now to FIG. 23, shown therein is a two-dimensional array of processing elements 2300 that may constitute the tensor contraction processing block 124. Each of the processing elements in the network of processing elements may be capable of performing arithmetic operations, such as additions and multiplications. For example, each of the processing elements may be a multiply accumulate (MAC) unit, as will be described in further detail with reference to FIG. 24.

Boundary processing elements correspond to processing elements that receive an input directly from a rank 2 multiplexer, such as multiplexers 2100 and 2200, as described above. For example, processing elements $PE_{11}$, $PE_{21}$, $PE_{31}$ to $PE_{N1}$, may correspond to left boundary processing elements and may receive tensor inputs corresponding to an input tensor of type A.

Processing elements $PE_{11}$, $PE_{12}$, $PE_{13}$ to $PE_{1M}$ may correspond to top boundary processing elements and may receive tensor inputs corresponding to an input tensor of type B.

The array of processing elements 2300 may have NxM dimensions, and the dimensions may correspond to the dimensions of the output tensor. For example, to obtain an output tensor having dimensions 5x5, obtained by the contraction of a first input tensor with dimensions 5x6 and a second input tensor having dimensions 6x5, a network of processing elements having 5x5 dimensions may be used. The dimensions of the network of processing elements may be configured by the processor as described above with reference to FIGS. 6 and 7.

As shown in FIG. 23, the elements of each of the input tensors are propagated in a serial manner to the tensor contraction processing block. The transfer of data may be arbitrated by the input data arbitrator block 122, as described above.

For example, during a first clock cycle, a first element of the first input tensor and a first element of the second input tensor are received by the first processing element $PE_{11}$ 1002 and multiplied. During the next clock cycle, the first element of the first input tensor is propagated to the right, to the next element $PE_{12}$ 1004, while the first element of the second input tensor is propagated downward to $PE_{21}$ 1006. During the same clock cycle, new inputs can be received by the first processing element $PE_{11}$ 1002, and the addition operation is performed. This process is repeated until all inputs have been processed.

Referring now to FIG. 24, shown therein is an example embodiment of a processing element 2400, which may correspond to a processing element in the network of processing elements of FIG. 23. The processing element 2400 may be a multiply accumulate (MAC) unit. The processing element 2400 may be connected to a number of other processing to form a network of processing elements. The processing element may include two inputs lines 2402 and 2404, a clock 2412, and three outputs lines 2406, 2408, 2410. During a first clock cycle, the first input line 2402 and the second input line 2404 may receive inputs which may be multiplied. In the next clock cycle, the first input received at 2402 may be propagated to output line 2406, and the second input received at 2404 may be propagated to output line 2410 to the next processing element (not shown). New inputs may be received at input lines 2402 and 2404. Additionally, the result of the multiplication obtained in the previous clock cycle may be added to the sum obtained in the previous cycle. At the next clock cycle, the result of the addition may be propagated to output line 2408. Output 2408 may be received by the output data arbitrator 126. It should be noted that more than one operation may be performed during the same clock cycle and that the processing elements are not limited to performing one operation at each cycle. For example, the multiplication and addition operations may be performed in one cycle.

Referring now to FIG. 25, shown therein is a flowchart of an example embodiment of a method of transmitting tensors 2500 by the output data arbitrator block 126 to the processing system 110. The method 2500 may correspond to steps 506, 612, or 712 and may correspond to a tensor contraction system that includes one controller.

At 2510, the output tensor is transmitted from the programmable logic 120 to the processing system 110 via the controller.

At 2520, the processing system 110 removes the encoding applied to the tensor. For example, the processing system 110 may reverse the encoding scheme described above, with reference to FIG. 8.

Referring now to FIG. 26, shown therein is a flowchart of another example embodiment of a method of transmitting tensors 2600 by the output data arbitrator block 126 to the processing system 110. The method 2600 may correspond to steps 506, 612, or 712 and may correspond to a tensor contraction system that includes more than one controller. The method 2600 may be substantially similar to method 2500.

At 2610, the output data arbitrator 126 divides the output tensor into a plurality of arrays.

At 2620, each array obtained at 2610 is transmitted to the processing system 110 via a separate controller.

At 2630, the plurality of controllers appends the output arrays transmitted at 2602. For example, the output transmitted at 2620-2 may be appended to the output transmitted at 2620-1.

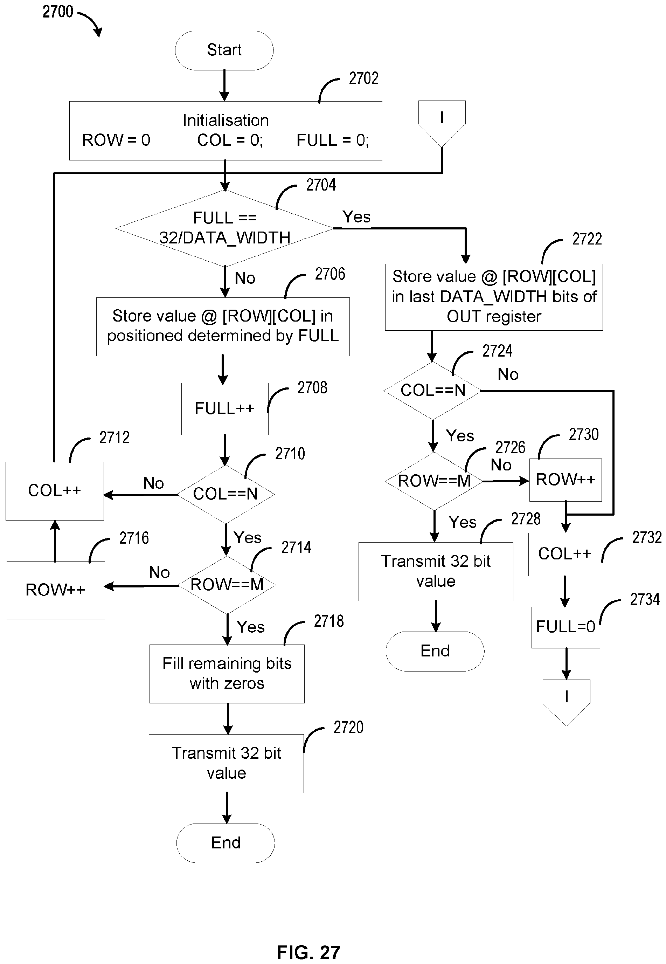

Referring now to FIG. 27, shown therein is a detailed flowchart of an example embodiment of a method of transmitting tensors 2700 by the output data arbitrator block 126 to the processing system 110. The method 2700 may correspond to steps 2510 or 2620. The method 2700 describes how to transmit the output tensor elements from the programmable logic to the processing system via the use of a controller. DATA_WIDTH refers to the number of bits used to represent a single tensor element. ROW is an index variable which refers to the current ROW of the rank 2 tensor the algorithm is pointing to. COL is an index variable which refers to the current COL of the rank 2 tensor the algorithm is pointing to. FULL is a variable which is used to calculate how many elements have been stored in a word which is to be transmitted by the controller. For example, the controller may stream 32-bit words per clock cycle and so to maximize transfer rate of tensor elements, tensor elements which are factors of 32 bits are concatenated until the concatenated length is equal to 32 bits. Once it is equal to 32 bits, the value is streamed to the PS.

At 2702, the system 100 initializes the row and column index values, and a full variable.

At 2704, the system 100 determines if the output tensor is 32 bits in width. If the output tensor is 32 bits in width, the method proceeds to 2722. Otherwise, the method proceeds to 2706.

At 2706, the system 100 stores the value in the input tensor at index [ROW][COL] in a position determined by FULL, and the method proceeds to 2708.

At 2708, the full variable is incremented by one, and the method proceeds to 2710.

At 2710, the system 100 determines if the last column of the output tensor has been transmitted. If the last column of the output tensor has been transmitted, the method proceeds to 2714. Otherwise, the method proceeds to 2712.

At 2712, the column index is incremented by 1, and the method returns to 2704.

At 2714, the system 100 determines if the last row of the output tensor has been transmitted. If the last row of the output tensor has been transmitted, the method proceeds to 2718. Otherwise, the method proceeds to 2716.

At 2716, the row index is incremented by 1, and the method proceeds to 2712.

At 2718, the remaining bits are filled with zeros, and the method proceeds to 2720.

At 2720, the 32-bit value is transmitted.

If, at 2704, the system 100 determines that the data width is equal to 32, and the method proceeds to 2722, at 2722, the value at index [ROW][COL] in the last data width bits out of register is stored. For example, suppose the data width of the output contracted tensor elements are not equal to the stream width of the controller. Then the contracted tensor element widths are a factor of the stream width. To maximize stream efficiency, the contracted tensor elements are concatenated, and the concatenated values may be stored in a register called OUT. Then once the OUT register is full, the controller streams the contents of the OUT register to the PS.

At 2724, the system 100 determines if the last column of the output tensor has been reached. If the last column has been reached, the method proceeds to 2726. Otherwise, the method proceeds to 2732.

At 2726, the system 100 determines in if the last row of the output tensor has been reached. If the last row of the output tensor has been reached, the method proceeds to 2728. Otherwise, the method proceeds to 2730.

At 2728 the system 100 transmits the 32-bit value to the processing system 110.

At 2730, the system 100 increments the row index by 1, and the method proceeds to 2732.

At 2732, the system 100 increments the column index by 1, and the method proceeds to 2734.

At 2734, the system 100 determines sets the full value to zero, and the method returns to 2704.

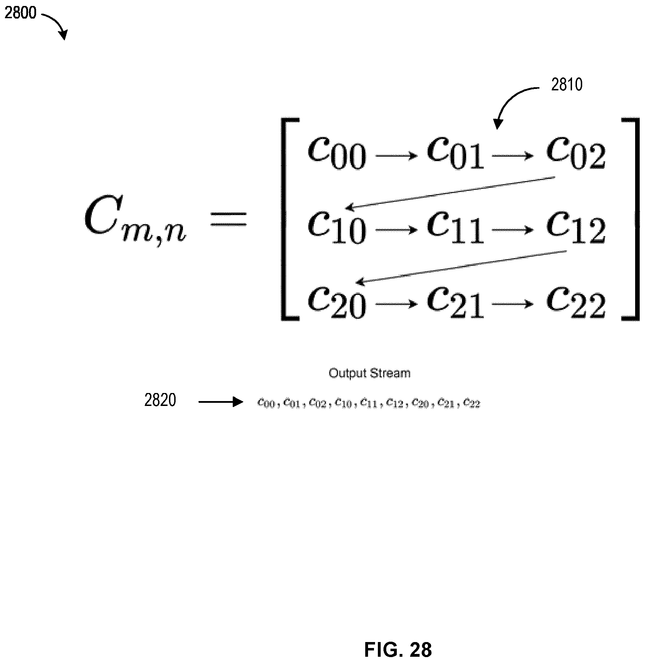

Referring now to FIG. 28, shown therein is a method of reorganizing an output tensor. The elements of the output tensor may be received as output stream 2820 and may be reorganized in the order described by a diagonal pattern 2810. FIG. 27 shows one possible pattern which can be used to stream the output tensors to the processing system. FIG. 27 shows an example of the order of the output stream seen in FIG. 28.

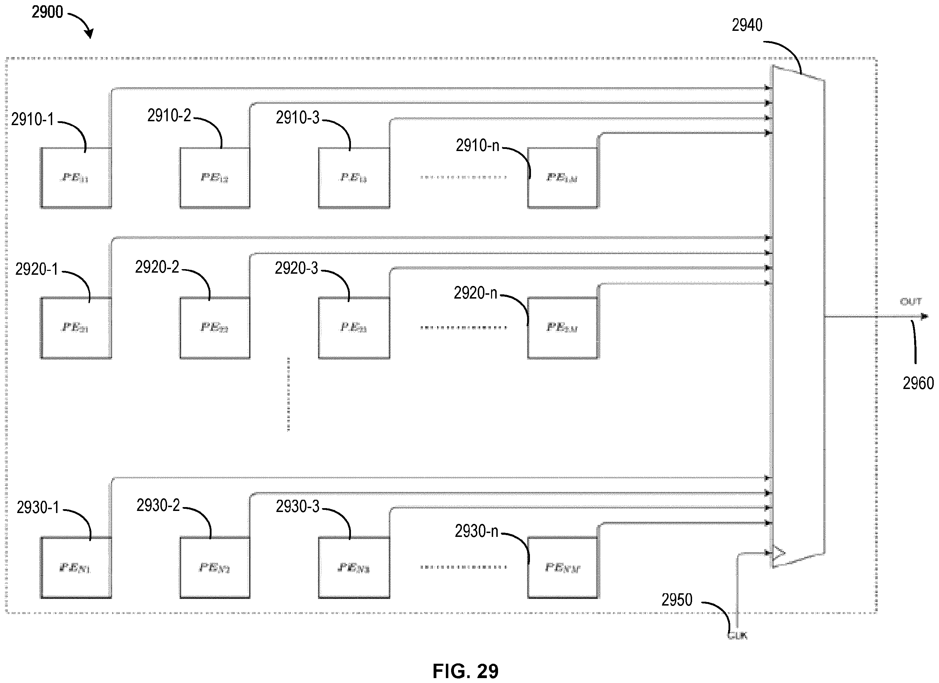

Reference is now made to FIG. 29, shown therein is an example output data arbitrator 2900 that can be used by system 100. Output data arbitrator 2900 may correspond to output data arbitrator 126. The output data arbitrator may be a mirror version of the input data arbitrator 122. In other words, the output data arbitrator may be configured to perform the reverse of the operations performed by the input data arbitrator 122. The output data arbitrator 126 may be configured to transmit data from the tensor processing contraction block 124 to the processing system 110. As shown in FIG. 29, the output of each of the processing elements 2910-1 to 2910-n, 2920-1 to 2920-n, 2930-1 to 2930-n may be collected by a multiplexer 2940, which can reassemble the output tensor. Multiplexer 2940 may include a counter 2950. The multiplexer 2940 may be a collection of multiplexers, and the outputs of the processing elements 2910-1 to 2910-n, 2920-1 to 2920-n, 2930-1 to 2930-n may be transmitted to the output 2960 of the output data arbitrator block 2900 via the collection of multiplexers.

Once the entire contraction is complete, the output data arbitrator 2900 may stream the calculated elements of the output tensor serially to the processing system 110, in which the first element corresponds to the first element of the output tensor and the last value corresponds to the last element in the tensor. For example, the output data arbitrator 2900 may stream the values of the output tensor directly to the memory 112 of the processing system 110, via the one or more controllers.

Similar to the input data arbitrator, the output data arbitrator 2900 may include a clock 2950. The output data arbitrator 2900 may determine that the tensor contraction operation is completed and the output tensor may be transmitted based on the number of clock cycles that have elapsed. For example, the output data arbitrator may determine that a predetermined number of clock cycles have passed. The predetermined number of clock cycles may be determined based on the number of operations required to transmit the input tensors to the programmable logic and perform the contraction. Alternatively, the input data arbitrator may generate a signal when all input tensor data has been received, and the number of clock cycles may be determined based on the number of operations required to perform the contraction.

In at least one embodiment, the system 100 may be configured to include and instantiate a multiplexer for every two-dimensional array of processing elements in the N-dimensional network of processing elements. For example, for a network of arrays of processing elements that contains 3 arrays of processing elements, three multiplexers may be instantiated.

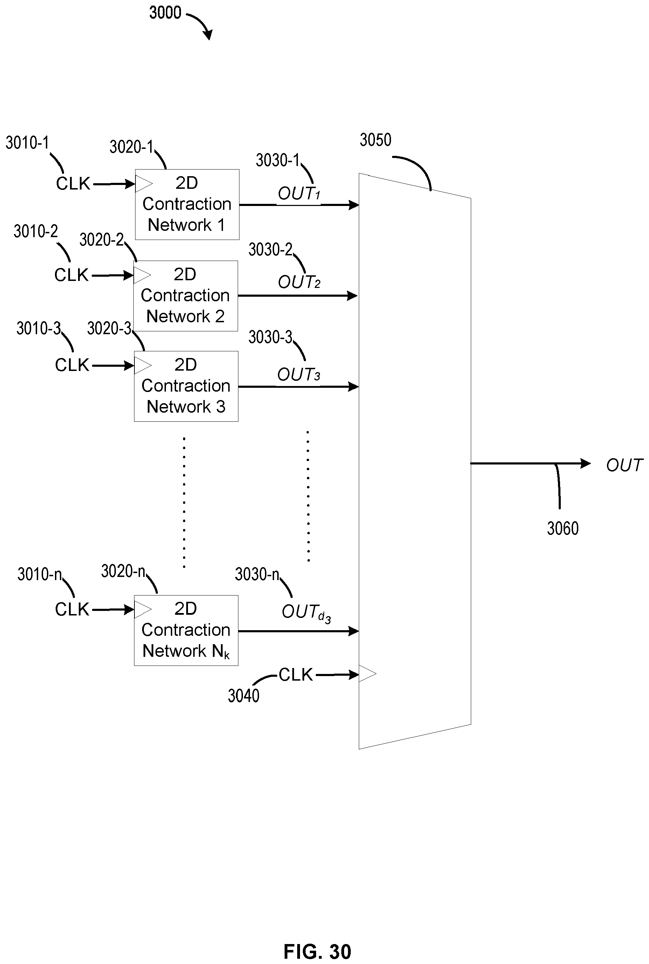

Referring now to FIG. 30, shown therein is an example embodiment of an output data arbitrator 3000 for a three-dimensional network of processing elements. Similar to the output data arbitrator 2900 for a two-dimensional network of processing elements, the output data arbitrator 3000 may include a counter 3040 and may include at least one multiplexer 3050, which may be configured to receive the outputs 3030-1 to 3030-n of each of the two-dimensional network of processing elements, and combine the outputs into an output 3060 of a three-dimensional output tensor.

Each input of the multiplexer 3050 may be connected to an output of a rank 2 multiplexer 3020-1 to 3020-n. Each rank 2 multiplexer may include a counter 3010-1 to 3010-n. The counters 3010-1 to 3010-n may be synchronized with counter 3040. Each rank 2 multiplexer may correspond to a multiplexer such as one described with reference to FIG. 29.

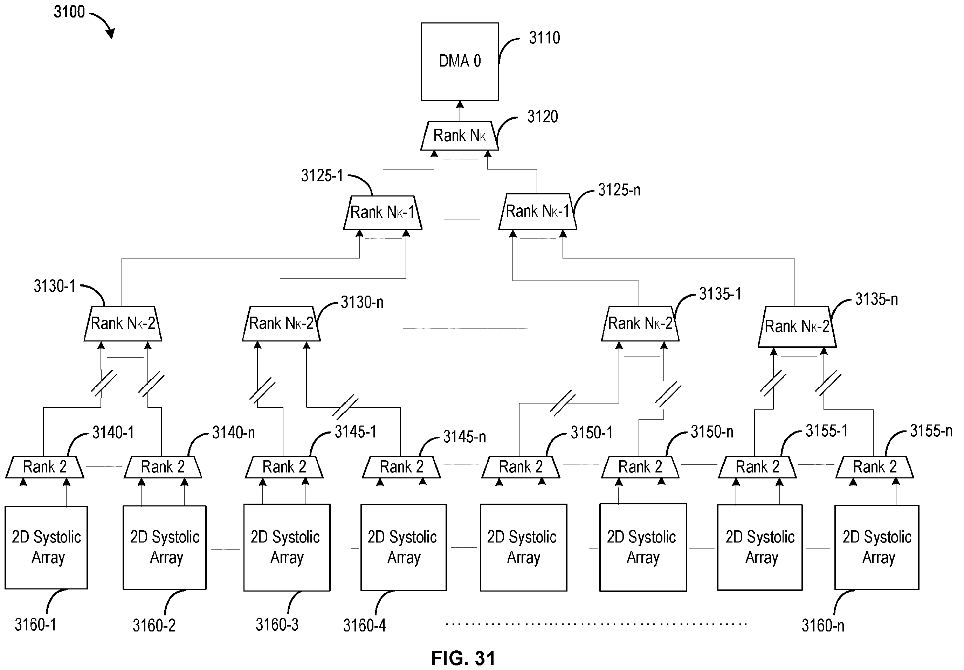

Referring now to FIG. 31, shown therein is a diagram of another example of an output data arbitrator block 3100. The output data arbitrator block 3100 may correspond to output data arbitrator block 126. Output data arbitrator 3100 may be in communication with the processing system 110 via a controller 3110. Output data arbitrator 3100 may be configured to perform the reverse functions of input data arbitrator 1600.

For example, in at least one embodiment, as described above, the tensor contraction system can contract tensors of rank higher than 2. In such embodiments, an output arbitrator block may include a collection of multiplexers arranged in a tree-like fashion.

Similar to the demultiplexers of input arbitrator block 122, each multiplexer in the output data arbitrator block may be associated with its own counter module.

Analogously to input arbitrator block, the system 100 may be configured to include and instantiate one multiplexer for every two-dimensional array of processing elements 3060-1 to 3060-n. For example, for a network of arrays of processing elements that contains 3 arrays of processing elements, three multiplexers may be instantiated. The number of two-dimensional arrays instantiated may correspond to the dimensions of the output tensor.

In at least one implementation, the outputs of the arrays of processing elements 3060 are transmitted serially to the controller. For example, the output of the first processing element in the first array of processing elements 3060-1 may be transmitted to the first rank 2 multiplexer 3140-1, which may, in turn be connected to multiplexer 3130-1, which may in turn be connected to 3125-1, in turn connected to 3120, which may transmit output data to the controller 3110, such that the output of the first processing element in the first array of processing elements 3060-1 can be transmitted to the controller 3110. Multiplexer 3140-1 may be configured to then receive the output of the second processing element in the first array of processing elements 3060-1. This process may be repeated until all data from the first array of processing elements 3060-1 has been transmitted to the controller 3110. The rank 3 multiplexer may then route its inputs such that data from the second rank 2 multiplexer is transmitted. This process may be repeated until all outputs from all processing elements have been transmitted to the controller 3110.

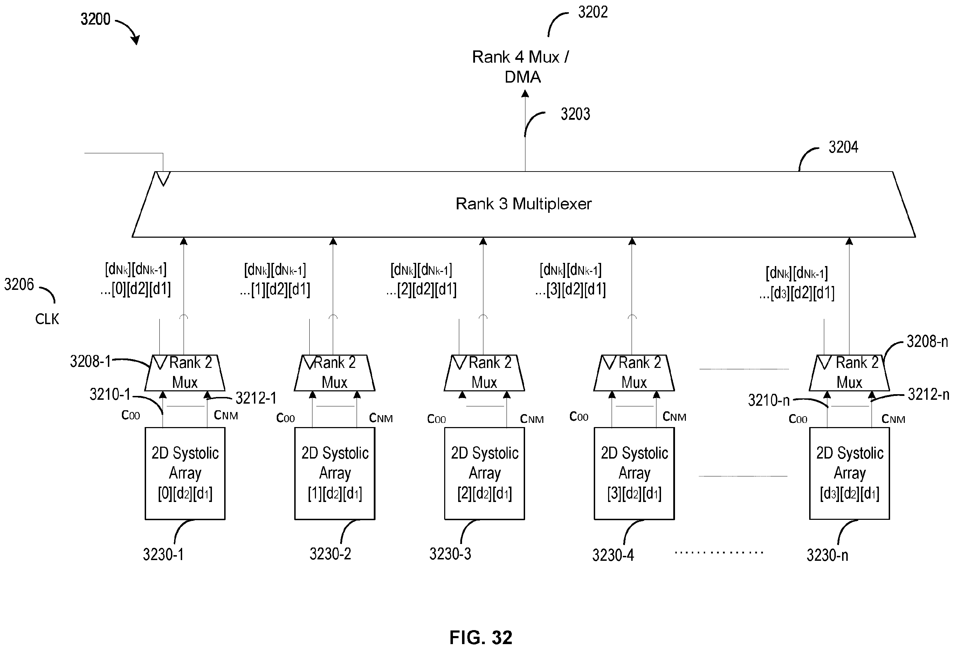

Referring now to FIG. 32, shown therein is a diagram of an example embodiment of a rank 3 multiplexer 3204 of an output data arbitrator. The rank 3 multiplexer may, for example, correspond to a multiplexer $N_{k-2}$ shown in FIG. 31. Alternatively, multiplexer 3204 may correspond to multiplexer 3050 shown in FIG. 30. The multiplexer 3204 may be the mirror image of demultiplexer 1804.

Similar to the multiplexer shown in FIG. 31, the multiplexer 3204 may be connected to a multiplexer of a higher rank 3202, and may be connected to a plurality of rank 2 multiplexers 3208-1 to 3208-n, which may, in turn, each be connected to a corresponding array of processing elements 3230-1 to 3230-n. A clock 3206 may be connected to each of the rank 2 multiplexers 3208-1 to 1808-n to control the timing. Output processing element connections 3210, 3212 connect the output of the processing elements to a rank 2 multiplexer. The output processing element connections 3210, 3212 are similar to the boundary input connections 1810, 1812.

While FIG. 32 shows a rank 3 multiplexer, the same configuration may be used for a multiplexer of any rank higher than 2.

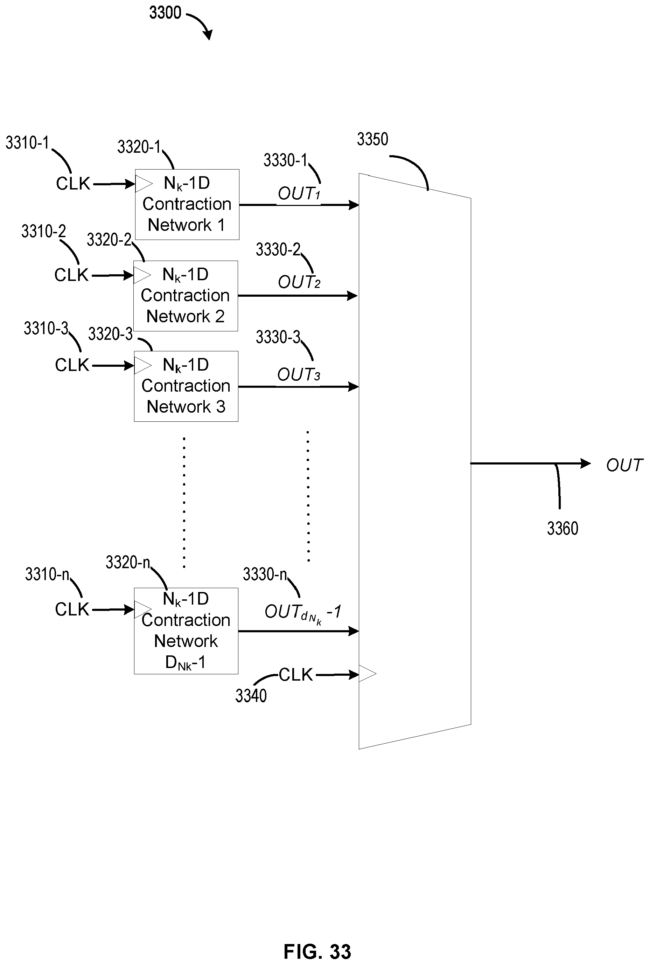

Referring now to FIG. 33, shown therein is a simplified diagram of an output data arbitrator block 3300. The output data arbitrator block 3300 may correspond to output data arbitrator block 126. The output data arbitrator block 3300 may include at least one multiplexer 3350 and a counter 3340 and may be configured to produce an output 3360.

The at least one multiplexer 3350 may be a collection of multiplexers, as shown in FIG. 31. The at least one multiplexer 3350 may receive a plurality of inputs 3330-1 to 3300-n, which may correspond to outputs of a plurality of contraction networks 3320-1 to 3320-n. The contraction networks 3330-1 to 3300-n may correspond to collections of multiplexers, as shown in FIG. 31.

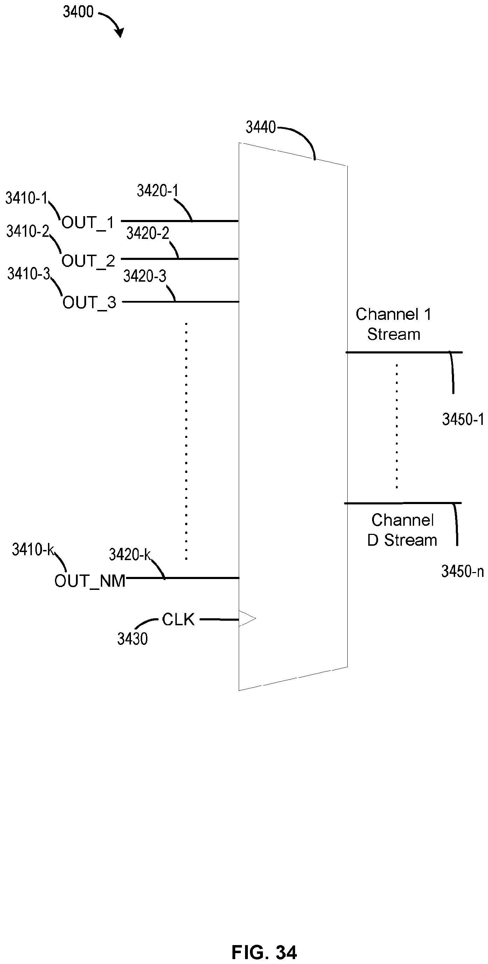

Referring to FIG. 34, shown therein is a simplified view of an example embodiment of an output data arbitrator block 3400. The output data arbitrator block 3400 may correspond to output data arbitrator block 126.

Output data arbitrator block 3400 may correspond to a simplified view of any of output data arbitrator blocks 2900, 3300, 3100, 3200 and 3300.

The output data arbitrator block 3400 may include a counter 3430 and a multiplexing block 3440, which may include one of a multiplexer or a collection of multiplexers. The output data arbitrator block may include a plurality of inputs 3420-1 to 3420-k. The inputs may be connected to, for example, processing elements in an array of processing elements. Alternatively, the inputs may be connected to a multiplexer of a lower rank as shown in FIGS. 30-33. The multiplexing block 3440 may be connected to several controllers 3450-1 to 3450-n. For example, the multiplexing block 3440 may transmit data to the controllers in a serial manner. For example, the multiplexing block 3440 may be connected to a first controller 3450-1, and may transmit output tensor data to the first controller 3450-1. Once the transfer of data has been completed, the first controller 3450-1 may be disconnected from the multiplexing block 3440 and a second controller 3450-n may be connected to the multiplexing block 3440. The controller connection and data transmission operations may be repeated until all output tensor data has been transmitted.

Alternatively, the multiplexer may transmit output tensor data to the plurality of controllers in a parallel fashion. For example, if the tensor elements are represented as 16-bit words and the controller stream width is 32 bits, the output values from two processing elements can be concatenated and then streamed in one clock cycle.

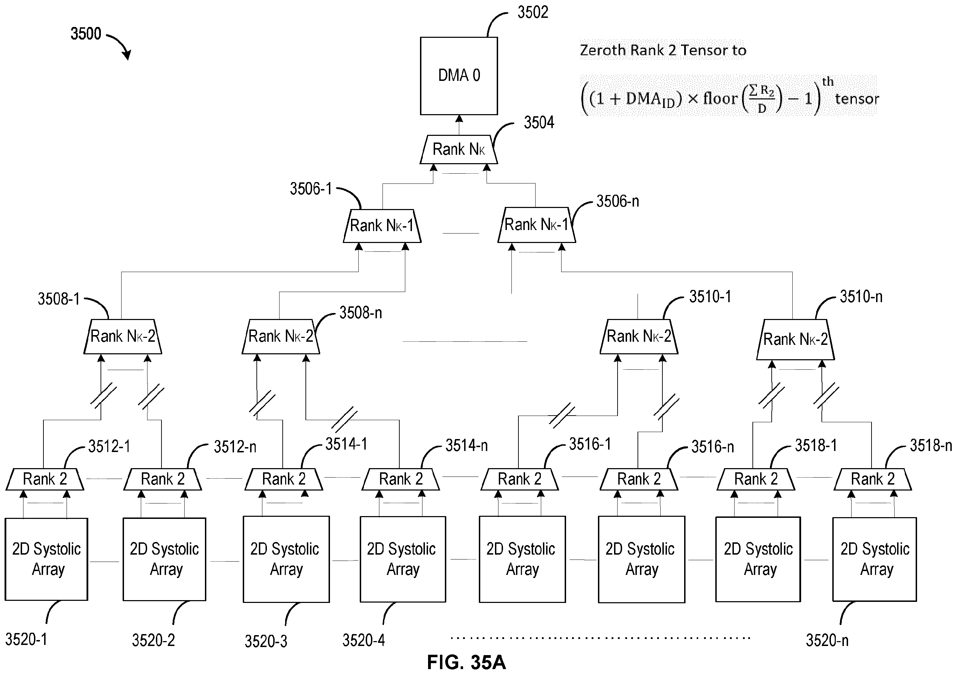

Referring now to FIGS. 35A-35D, shown therein are diagrams of another example of an output data arbitrator block 3500. Output data arbitrator block 3500 may correspond to the output data arbitrator block 126. In at least one embodiment, the output data arbitrator may be in communication with the processing system 110 via several controllers 3502, 3522, 3542, 3562. Though only four controllers are illustrated, it should be understood that any number of controllers may be used by the system 100. Similar to the input data arbitrator shown in FIGS. 17A-17D, each of the arrays of processing elements may be connected to a collection of multiplexers, arranged in a tree-like fashion, and the collection of multiplexers may be connected to a controller 3502 through the output of a multiplexer 3504.

Similar to the demultiplexers, each of the multiplexers may operate independently of each other. Similarly, the collections of multiplexers may operate independently of each other.

Each of 3500A, 3500B, 3500C, 3500D may operate in substantially the same manner as output data arbitrator block 3100.

However, each controller 3502, 3522, 3542, 3562 may transmit a portion of the output tensor to the processing system 110. As described with reference to FIG. 26, the output tensor may be divided into several arrays, and each array may be transmitted by a different controller.

The output tensor may be divided in a similar manner to the input tensor, as described above with reference to FIGS. 17A-17D. For example, each of the controllers may receive the following tensors:

First controller 3502: Zeroth tensor to $\left(\left(1 + DMA_{ID}\right)x\ floor\ \left(\frac{\sum R_2}{D} - 1\right)\right)^{\text{th}}$ tensor;

Second controller 3522: $\left(\left(1 + DMA_{ID}\right)x\ floor\ \left(\frac{\sum R_2}{D}\right)\right)^{\text{th}}$ tensor to $\left(\left(1 + DMA_{ID}\right)x\ floor\ \left(\frac{\sum R_2}{D} - 1\right)\right)^{\text{th}}$ tensor;

Third controller 3542: $\left(\left(1 + DMA_{ID}\right)x\ floor\ \left(\frac{\sum R_2}{D}\right)\right)^{\text{th}}$ tensor to $\left(\left(1 + DMA_{ID}\right)x\ floor\ \left(\frac{\sum R_2}{D} - 1\right)\right)^{\text{th}}$ tensor;

Last controller 3562: $\left((DMA_{ID})x\ floor\ \left(\frac{\sum R_2}{D}\right)\right)^{th}$ tensor to $((\sum R_2) - 1)^{th}$ tensor where $DMA_{ID}$ corresponds to the number assigned to the controller, $\sum R_2$ corresponds to the number of rank 2 tensors to be transmitted, D corresponds to the number of controllers available, and floor corresponds to the function rounding down the value of the argument to the nearest integer value.

Though FIGS. 35A-35D show four controllers, it will be understood that any number of controllers may be used, depending on the configuration of the system 100 and the hardware used.

Alternatively, similar to input arbitrator 1700, controllers 3502, 3522, 3542, and 3562 may be the same controller, and data may be transmitted serially as described with reference to FIG. 34. For example, the controller may first be connected to multiplexer 3504, and multiplexer 3504 may transmit a first set of tensor data to the controller. Once the data transfer is completed, the controller may be disconnected from multiplexer 3502 and connected to multiplexer 3524, which may receive a second set of tensor data. The process may be repeated with multiplexers 3544 and 3564, until all tensor data has been transmitted.

Alternatively, multiplexers 3504, 3524, 3544, and 3564 may be the same multiplexer, and the multiplexer may be connected to controllers 3502, 3522, 3542, and 3562 in a serial manner. For example, multiplexer 3504 may be connected to a first controller 3502, which may transmit tensor input data to the multiplexer. Once the transfer of data has been completed, the first controller 3502 may be disconnected from the multiplexer 3504 and a second controller 3522 may be connected to the multiplexer 3504. The controller connection and data transmission operations may be repeated until output tensor data has been transmitted.

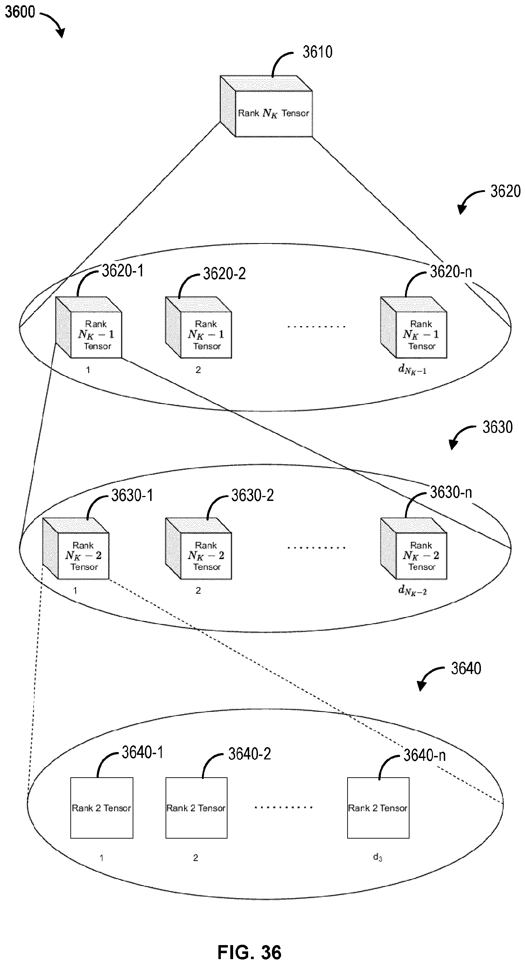

Referring now to FIG. 36, shown therein is a diagram 3600 of a higher order tensor 3610 expressed as a collection of rank 2 tensors. A rank $N_K$ tensor 3610 can be decomposed recursively until all rank 2 tensors have been extracted therefrom. For example, a rank $N_K$ tensor 3610 can be decomposed into a collection of rank $N_{K-1}$ tensors 3620. Each of the rank $N_{K-1}$ tensors may then be decomposed into a collection of rank $N_{K-2}$ tensors 3630. This decomposition process may be continued until a collection of rank 2 tensors 3640 is obtained.

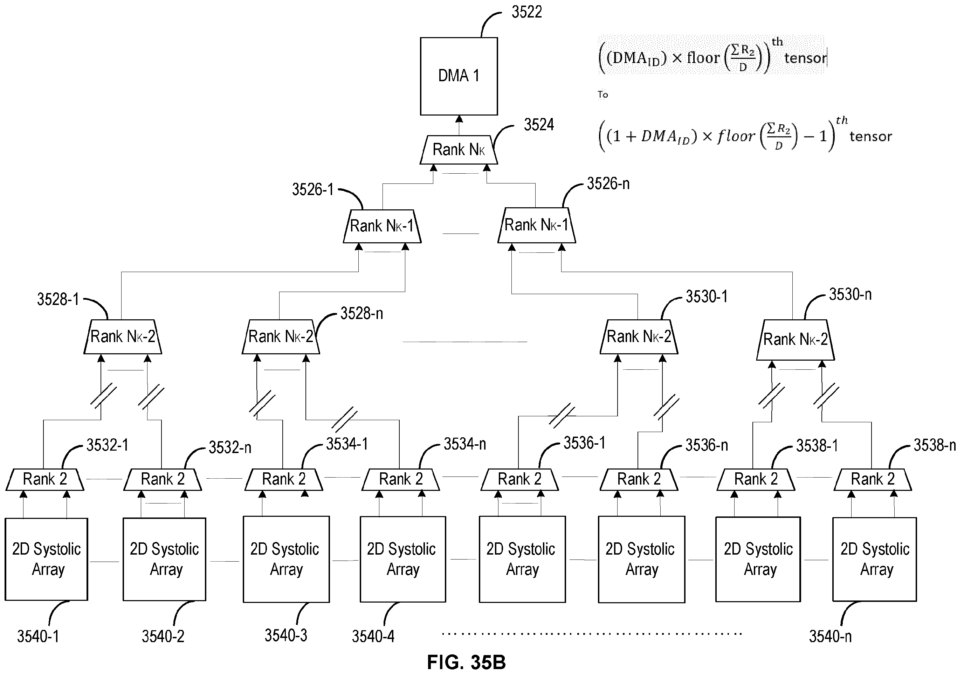

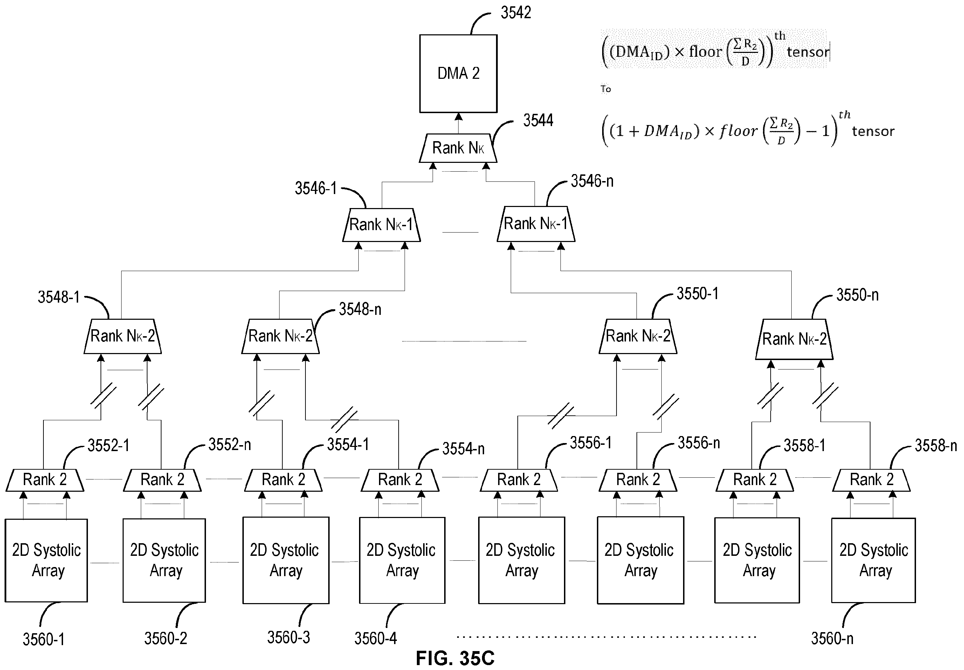

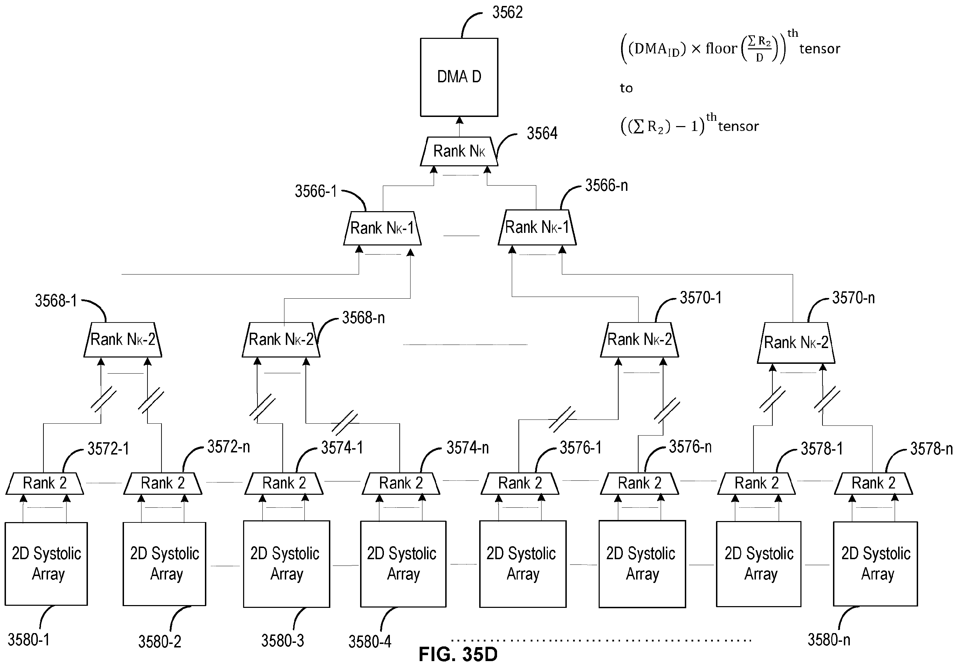

Referring to FIG. 37, shown therein is a network 3700 of arrays of processing elements. As described above, in at least one embodiment, the system 100 can contract higher rank tensors by using a network of arrays of processing elements. For example, each array of processing elements can be used to contract a rank 2 tensor of a higher rank tensor. Though FIG. 35 shows a first array 3510 and a second array 3512, it will be understood that the network of arrays may be an N-dimensional array, where N corresponds to the rank of the output tensor. Each of the arrays of processing elements may function independently, and the dimensions of each array in the network may correspond to the dimensions of the rank 2 tensors formed from decomposing a rank N tensor into a series of rank 2 tensors.

While the applicant's teachings described herein are in conjunction with various embodiments for illustrative purposes, it is not intended that the applicant's teachings be limited to such embodiments as the embodiments described herein are intended to be examples. On the contrary, the applicant's teachings described and illustrated herein encompass various alternatives, modifications, and equivalents, without departing from the embodiments described herein, the general scope of which is defined in the appended claims.

## Claims

**1.** A system for performing tensor contractions comprising:

a processing system, the processing system comprising:

a processing unit; and
a memory for storing tensors; and

a programmable logic in communication with the processing system via at least one controller, the programmable logic comprising:

an input data arbitrator for routing a first input tensor and a second input tensor from the at least one controller to a tensor contraction block;
the tensor contraction block comprising a network of arrays of processing elements for performing matrix multiplication operations on the first input tensor and the second input tensor; and
an output data arbitrator for routing an output of the tensor contraction block to the processing system.

**2.** The system of claim 1, wherein the processing unit is configured to:
process each of the first input tensor and the second input tensor to obtain a corresponding first flattened array and a second flattened array.

**3.** The system of claim 2, wherein the processing unit is further configured to:
insert at least one buffer zero in each of the first flattened array and the second flattened array.

**4.** The system of claim 2, wherein the processing unit is further configured to interleave the first flattened array and the second flattened array to obtain an interleaved array; and the routing the first input tensor and the second input tensor from the at least one controller to the tensor contraction block comprises transmitting the interleaved array to the tensor contraction block.

**5.** The system of claim 1, wherein the processing unit is configured to:

determine whether the programmable logic is configured;
when the programmable logic is not configured, provide first instructions for configuring the programmable logic, where the first instructions are based on at least one of dimensions of the output tensor, and a data width of each element of each of the first input tensor and the second input tensor; and
when the programmable logic is configured, provide second instructions for partially reconfiguring the programmable logic using an archive of pre-generated instructions or generating new instructions, based on dimensions of the first input tensor and the second input tensor.

**6.** The system of claim 5, wherein the input data arbitrator is configured to:

instantiate a demultiplexer for each array of processing elements in the network of arrays of processing elements; and
wherein the routing the first input tensor and the second input tensor from the at least one controller to the tensor contraction block comprises:
operating the demultiplexer to transmit one element of each of the first input tensor and the second input tensor to the corresponding array of processing elements at each clock cycle.

**7.** The system of claim 6, wherein the input arbitrator is further configured to:

instantiate a zero generator for each array of processing elements in the network of processing elements; and
operate the zero generator to generate at least one buffer zero when transmitting each of the first input tensor and the second input tensor to the tensor contraction block.

**8.** The system of claim 7, wherein the routing the output of the tensor contraction block to the processing system comprises:

instantiating a multiplexer for each array of processing elements in the network of arrays of processing elements;
transmitting the output of the tensor contraction block to the multiplexer at each clock cycle; and
transmitting an output of the multiplexer to the processing system.

**9.** The system of claim 1, wherein the network of arrays of processing elements comprises NK arrays of processing elements, where NK corresponds to a rank of the output of the tensor contraction block.

**10.** The system of claim 1, wherein the processing unit is configured to:

divide at least one of the first input tensor and the second input tensor into at least two arrays; and
assign each of the at least two arrays to a separate controller of the at least one controller.

**11.** A method of performing tensor contractions, the method comprising:

routing, by an input data arbitrator, a first input tensor and a second input tensor from at least one controller to a tensor contraction block;
performing matrix multiplication operations, by a tensor contraction block comprising a network of arrays of processing elements, on the first input tensor and the second input tensor; and

routing, by an output data arbitrator, an output of the tensor contraction block to a processing system.

12. The method of claim 11, further comprising:
processing, by the processing system, each of the first input tensor and the second input tensor to obtain a corresponding first flattened array and second flattened array.

13. The method of claim 12, further comprising:
inserting, by the processing system, at least one buffer zero in each of the first flattened array and the second flattened array.

14. The method of claim 12, further comprising interleaving, by the processing system, the first flattened array and the second flattened array to obtain an interleaved array; and wherein the routing the output of the tensor contraction block to the processing system comprises transmitting the interleaved array to the tensor contraction block.

15. The method of claim 11, further comprising:

determining, by the processing system, whether the programmable logic is configured;
when the programmable logic is not configured, providing, by the processing system, first instructions for configuring the programmable logic, where the first instructions are based on at least one of dimensions of the output tensor, and a data width of each element of each of the first input tensor and the second input tensor; and
when the programmable logic is configured, providing, by the processing system, second instructions for partially reconfiguring the programmable logic using an archive of pre-generated instructions or generating new instructions, based on dimensions of the first input tensor and the second input tensor.

EP 4 202 732 A1

**FIG. 1**

FIG. 2

300

330                                          332

MMU          Processing
                Core

Cache

GIC          336        334

Processing Unit

**FIG. 3**

**FIG. 4**

500

502

Route two input tensors to a corresponding array of processing elements

504

Perform matrix multiplication operations on the input tensors

506

Route a plurality of outputs to the processing unit

**FIG. 5**

**FIG. 6**

700

701

Start

702

704

Full
Configuration
PL

Partial
Reconfiguration
PL

Generate
Tensor
Stream
without zeros

706

Send Tensor
Stream to PL

708

Black Box
Function

Perform
Contraction

710

716

Send
Contracted
Tensor to PS
Memory

712

714

Compute another
contraction?

Yes

No

End

**FIG. 7**

800

Start

802

Using 32 bit
representation?

804

Using 8 bit
representation?

806
Use first 4 bits to
represent integer
part of decimal
using two's
complement
encoding

814
Load next
tensor
element

816
Use first 8 bits to
represent integer
part of decimal
using two's
complement
encoding

824
Use first 16 bits to
represent integer part
of decimal using two's
complement encoding

808
Use final 4 bits to
represent fractional
part of decimal using
unsigned fractional
encoding

818
Use final 8 bits to
represent fractional
part of decimal using
unsigned fractional
encoding

826
Use final 16 bits to
represent fractional
part of decimal using
unsigned fractional
encoding

810
Converted 4 tensor
elements?

No

No

820
Converted 4 tensor
elements?

Yes

812
Concatenate 8-bit
binary strings in
groups of 4 to create a
32 bit string

Yes

822
Concatenate 16-bit
binary strings in
groups of 2 to create a
32 bit string

828
Convert a 32-bit binary strings into decimal and store
each decimal value in an unsigned integer array

Finish

FIG. 8

900A — 910

$$A_{m,n} = \begin{bmatrix} a_{00} \longrightarrow a_{01} & a_{02} \\ a_{10} & a_{11} & a_{12} \\ a_{20} & a_{21} \longrightarrow a_{22} \end{bmatrix}$$

Strings with Zeros

912 → $(a_{00}, 0, 0), (a_{01}, a_{10}, 0), (a_{02}, a_{11}, a_{20}), (0, a_{12}, a_{21}), (0, 0, a_{22})$

Strings without Zeros

914 → $a_{00}, a_{01}, a_{10}, a_{02}, a_{11}, a_{20}, a_{12}, a_{21}, a_{22}$

**FIG. 9A**

900B — 920

$$B_{m,n} = \begin{bmatrix} b_{00} & b_{01} & b_{02} \\ b_{10} & b_{11} & b_{12} \\ b_{20} & b_{21} & b_{22} \end{bmatrix}$$

String with Zeros

922 → $(b_{00}, 0, 0), (b_{10}, b_{01}, 0), (b_{20}, b_{11}, b_{02}), (0, b_{21}, b_{12}), (0, 0, b_{22})$

String without Zeros

924 → $b_{00}, b_{10}, b_{01}, b_{20}, b_{11}, b_{02}, b_{21}, b_{12}, b_{22}$

**FIG. 9B**

**FIG. 10A**

FIG. 10B

1100

```
                    ┌─────────────┐
                    │    Start    │
                    └─────────────┘
                           │
                           ▼
    ┌──────────────────────────────────────────┐   1101
    │  Initialise unsigned integer array of      │
    │  length which is equal to the length of Δ  │
    └──────────────────────────────────────────┘
                           │
                           ▼
    ┌──────────────────────────────────────────┐   1103
    │  Initialise index ROW = 0; COL = 0;        │
    │  COUNTER = 0; ZEROS = 0;                    │
    └──────────────────────────────────────────┘
                           │
                           ▼
    ┌──────────────────────────────────────────┐   1105
    │  Append value @ [ROW][COL] to array        │
    └──────────────────────────────────────────┘
                           │
                           ▼
                                1107
                        ◇ N==1? ◇────── Yes ──────▶ [2]
                           │
                           No    1109
                        ◇ M==1? ◇────── Yes ──────▶ [1]
                           │
                           No
                    ┌────────────┐   1111
                    │ Append Zero │
                    └────────────┘
                           │
                           ▼
                    ┌────────────┐   1113
                    │   ZEROS++   │
                    └────────────┘
                           │
                           ▼
                                1115
          No ────── ◇ ZEROS == M-1? ◇
                           │
                          Yes
                          [3]
```

**FIG. 11A**

**FIG. 11B**

FIG. 11C

**FIG. 11D**

**FIG. 11E**

1200

```
                    ┌─────────┐
                    │  Start  │
                    └─────────┘
                         │
                         ▼
```

1202

Initialise unsigned integer array of length which
is equal to the number of elements in tensor B

1204

Append value @ [ROW][COL] to array

1206

N==1? — Yes

No

1208

M==1? — Yes

No

1210

ROW++

1212

Append value @ [ROW][COL] to array

F

1214

Store current values of ROW and COL in
ROW_old and COL_old respectively

1216

COL++

1218

ROW--

E

D

1220

ROW++

1222

Append value
@ [ROW][COL]
to array

1224

No — ROW == M

Yes

End

**FIG. 12A**

1260 — COL++

1262 — Append value @ [ROW][COL] to array

1264 — COL == N
- Yes → End
- No → (loop back)

D

E

1232 — Append value @ [ROW][COL] to array

1234 — COL==N||ROW==0?
- No → F
- Yes →

1236 — ROW==M-1?
- Yes → 1238 — ROW++ → 1240 — Append value @ [ROW][COL] to array → End
- No →

1242 — Load old values of ROW and COL
ROW = ROW_old
COL = COL_old

1244 — ROW == M
- Yes → 1246 — COL++ → F
- No → 1248 — ROW++ → (to COL++)

**FIG. 12B**

44

1300

**FIG. 13A**

**FIG. 13B**

**FIG. 13C**

**FIG. 13D**

7a

9a

Append value @ [ROW][COL] to array ⌐1387

Append Zero ⌐1394

ZEROS++ ⌐1395

Append Zero ⌐1389

ZEROS++ ⌐1391

ZEROS == COL? ⌐1396

No

ZEROS ==N-1 ⌐1392

No

Yes

Yes

Append value @ [ROW][COL] to array ⌐1397

COL ==N ⌐1393

No

8a

Yes

ROW == M && COL == N ⌐1398

No

End

10a

Yes

End

**FIG. 13E**

**FIG. 14**

**FIG. 15**

FIG. 16

Zeroth Rank 2 Tensor to

$$\left(\left(1+DMA_{ID}\right)\times floor\left(\tfrac{\Sigma\,R_2}{D}\right)-1\right)^{th} tensor$$

**FIG. 17A**

DMA 1 — 1722

$$\left((DMA_{ID}) \times floor\left(\frac{\sum R_2}{D}\right)\right)^{th} \text{tensor}$$

To

Rank N$_K$ — 1724

$$\left((1 + DMA_{ID}) \times floor\left(\frac{\sum R_2}{D}\right) - 1\right)^{th} \text{tensor}$$

1726-1 — Rank N$_K$-1     Rank N$_K$-1 — 1726-n

1728-1 — Rank N$_K$-2     Rank N$_K$-2 — 1728-n     Rank N$_K$-2 — 1730-1     Rank N$_K$-2 — 1730-n

Rank 2 — 1732-1     Rank 2 — 1732-n     Rank 2 — 1734-1     Rank 2 — 1734-n     Rank 2 — 1736-1     Rank 2 — 1736-n     Rank 2 — 1738-1     Rank 2 — 1738-n

2D Systolic Array     2D Systolic Array     2D Systolic Array     2D Systolic Array     2D Systolic Array     2D Systolic Array     2D Systolic Array     2D Systolic Array

1740-1     1740-2     1740-3     1740-4     1740-n

**FIG. 17B**

$$\left( (DMA_{ID}) \times floor\left(\frac{\sum R_2}{D}\right) \right)^{th} tensor$$

To

$$\left( (1 + DMA_{ID}) \times floor\left(\frac{\sum R_2}{D}\right) - 1 \right)^{th} tensor$$

**FIG. 17C**

DMA D — 1762

$$\left(\left(DMA_{ID}\right) \times floor\left(\frac{\sum R_2}{D}\right)\right)^{th} tensor$$

to

$$\left(\left(\sum R_2\right) - 1\right)^{th} tensor$$

Rank $N_K$ — 1764

1766-1 — Rank $N_K$-1          Rank $N_K$-1 — 1766-n

1768-1 — Rank $N_K$-2     Rank $N_K$-2 — 1768-n          Rank $N_K$-2 — 1770-1     Rank $N_K$-2 — 1770-n

1772-1 — Rank 2     Rank 2 — 1772-n     1774-1 — Rank 2     Rank 2 — 1774-n     1776-1 — Rank 2     Rank 2 — 1776-n     1778-1 — Rank 2     Rank 2 — 1778-n

| 2D Systolic Array | 2D Systolic Array | 2D Systolic Array | 2D Systolic Array | 2D Systolic Array | 2D Systolic Array | 2D Systolic Array | 2D Systolic Array |

1780-1          1780-2          1780-3          1780-4    ··································    1780-n

**FIG. 17D**

EP 4 202 732 A1

1800

1802

Rank 4 Demux /
DMA

1803

1804

Rank 3 Demultiplexer

1806

CLK

$[d_{Nk}][d_{Nk-1}]$
$...[0][d2][d1]$

$[d_{Nk}][d_{Nk-1}]$
$...[1][d2][d1]$

$[d_{Nk}][d_{Nk-1}]$
$...[2][d2][d1]$

$[d_{Nk}][d_{Nk-1}]$
$...[3][d2][d1]$

$[d_{Nk}][d_{Nk-1}]$
$...[d_3][d2][d1]$

1808-1

1808-n

Rank 2
Demux

Rank 2
Demux

Rank 2
Demux

Rank 2
Demux

Rank 2
Demux

1810-1

1812-1

1810-n

1812-n

$a_{MO}$

$b_{ON}$

$a_{MO}$

$b_{ON}$

$a_{MO}$

$b_{ON}$

$a_{MO}$

$b_{ON}$

$a_{MO}$

$b_{ON}$

2D Systolic
Array
$[0][d_2][d_1]$

2D Systolic
Array
$[1][d_2][d_1]$

2D Systolic
Array
$[2][d_2][d_1]$

2D Systolic
Array
$[3][d_2][d_1]$

2D Systolic
Array
$[d_3][d_2][d_1]$

1830-1

1830-2

1830-3

1830-4

1830-n

**FIG. 18**

FIG. 19

**FIG. 20**

**FIG. 21**

```
Input: Clock Signal
Output: Selection

FOR i1 to NK
        FOR i2 to NK-1
                ...
                        FOR iNK-2 to value of rank 3 dimension
                                selection[d3] <- selection[0] + 1
                                FOR iNK-1 to M+N
                                        selection[d2] <- ROW index value of incoming tensor element
                                        selection[d1] <- COL index value of incoming tensor element
                                END FOR
                        END FOR
                selection[dNK-1]
        END FOR
        selection[dNK]
END FOR
```

**FIG. 22**

FIG. 23

2400

2402

N_WIDTH

2414

N_WIDTH

2404

CLK

2412

2416

2406

N_WIDTH

N_WIDTH

2410

N_WIDTH

2408

**FIG. 24**

2500

Transmit
Tensor — 2510

Remove
Encoding — 2520

**FIG. 25**

2600

Split rank $N_R$
output tensor C
by D — 2610

Transmit
Tensor — 2620-1

Transmit
Tensor — 2620-2

Transmit
Tensor — 2620-3

Transmit
Tensor — 2620-n

Append
Output
Arrays — 2630

Remove
Encoding — 2640

**FIG. 26**

2700

```
                              ┌─────────┐
                              │  Start  │
                              └─────────┘
                                   │
                                   ▼
   ┌───────────────────────────────────────────────┐        ┌──┐
   │                Initialisation        2702      │        │ I│
   │   ROW = 0      COL = 0;      FULL = 0;          │        └──┘
   └───────────────────────────────────────────────┘
                         │
                         ▼                2704
                    ╱ FULL == ╲         Yes
                  ╱ 32/DATA_WIDTH ╲ ──────────────────────┐
                    ╲           ╱                          │
                      ╲       ╱                            ▼
                         │ No            2706    ┌──────────────────────┐   2722
                         ▼                       │ Store value @ [ROW][COL]│
   ┌──────────────────────────┐                  │ in last DATA_WIDTH bits │
   │ Store value @ [ROW][COL] in│                │      of OUT register    │
   │ positioned determined by FULL│              └──────────────────────┘
   └──────────────────────────┘                            │
                         │                                  ▼           2724
                         ▼           2708              ╱ COL==N ╲    No
                    ┌─────────┐                       ╲         ╱ ──────────┐
                    │ FULL++  │                          │ Yes              │
                    └─────────┘                          ▼      2726   2730 │
   2712                 │                           ╱ ROW==M ╲  No  ┌──────┐│
┌──────┐               ▼           2710           ╲         ╱ ────▶│ROW++ ││
│ COL++│◀── No    ╱ COL==N ╲                         │ Yes         └──────┘│
└──────┘         ╲         ╱                         ▼      2728       │    │
   ▲                │ Yes          ┌──────────────────┐         2732   │    │
   │                ▼      2714    │ Transmit 32 bit  │      ┌──────┐  │    │
   │   2716    ╱ ROW==M ╲  No      │     value        │      │ COL++│◀─┘    │
┌──────┐     ╲         ╱ ──────┐   └──────────────────┘      └──────┘       │
│ ROW++│◀──     │ Yes          │            │                   │     2734  │
└──────┘        ▼      2718     │            ▼                   ▼           │
   ▲       ┌──────────────┐     │        ┌───────┐         ┌────────┐       │
   └───────│Fill remaining │     │        │  End  │         │ FULL=0 │       │
           │ bits with zeros│    │        └───────┘         └────────┘       │
           └──────────────┘     │                              │            │
                  │     2720     │                              ▼            │
                  ▼              │                            ┌──┐           │
           ┌──────────────┐      │                            │ I│           │
           │ Transmit 32 bit│    │                            └──┘           │
           │     value     │     │                                          │
           └──────────────┘      │                                          │
                  │              │                                          │
                  ▼              │                                          │
              ┌───────┐          │                                          │
              │  End  │          │                                          │
              └───────┘          │                                          │
```

**FIG. 27**

2800

2810

$$C_{m,n} = \begin{bmatrix} c_{00} \rightarrow c_{01} \rightarrow c_{02} \\ c_{10} \rightarrow c_{11} \rightarrow c_{12} \\ c_{20} \rightarrow c_{21} \rightarrow c_{22} \end{bmatrix}$$

Output Stream

2820 $\longrightarrow$ $c_{00}, c_{01}, c_{02}, c_{10}, c_{11}, c_{12}, c_{20}, c_{21}, c_{22}$

FIG. 28

**FIG. 29**

3000

3010-1    3020-1                3030-1            3050

CLK ——→ ▷ 2D
           Contraction    OUT₁ ——————→
           Network 1

3010-2   3020-2              3030-2

CLK ——→ ▷ 2D
           Contraction    OUT₂ ——————→
           Network 2

3010-3   3020-3            3030-3

CLK ——→ ▷ 2D
           Contraction    OUT₃ ——————→
           Network 3

OUT ——→ OUT

3060

3010-n   3020-n            3030-n

CLK ——→ ▷ 2D
           Contraction    OUT$_{d_3}$ ——————→
           Network N$_k$

           CLK ——→ ▷

3040

**FIG. 30**

68

**FIG. 31**

EP 4 202 732 A1

EP 4 202 732 A1

3200

3202

Rank 4 Mux /
DMA

3203

3204

Rank 3 Multiplexer

3206

CLK

$[d_{Nk}][d_{Nk-1}]$
$...[0][d2][d1]$

$[d_{Nk}][d_{Nk-1}]$
$...[1][d2][d1]$

$[d_{Nk}][d_{Nk-1}]$
$...[2][d2][d1]$

$[d_{Nk}][d_{Nk-1}]$
$...[3][d2][d1]$

$[d_{Nk}][d_{Nk-1}]$
$...[d3][d2][d1]$

3208-1 — Rank 2 Mux

Rank 2 Mux

Rank 2 Mux

Rank 2 Mux

Rank 2 Mux — 3208-n

3210-1 — | — 3212-1

3210-n — | — 3212-n

$C_{00}$   $C_{NM}$

$C_{00}$   $C_{NM}$

$C_{00}$   $C_{NM}$

$C_{00}$   $C_{NM}$

$C_{00}$   $C_{NM}$

2D Systolic
Array
$[0][d_2][d_1]$

2D Systolic
Array
$[1][d_2][d_1]$

2D Systolic
Array
$[2][d_2][d_1]$

2D Systolic
Array
$[3][d_2][d_1]$

2D Systolic
Array
$[d_3][d_2][d_1]$

3230-1

3230-2

3230-3

3230-4

3230-n

**FIG. 32**

3300

3310-1     3320-1      3330-1      3350

CLK ⟶ | $N_k$-1D Contraction Network 1 | ⟶ $OUT_1$ ⟶

3310-2    3320-2      3330-2

CLK ⟶ | $N_k$-1D Contraction Network 2 | ⟶ $OUT_2$ ⟶

3310-3    3320-3      3330-3

CLK ⟶ | $N_k$-1D Contraction Network 3 | ⟶ $OUT_3$ ⟶

3310-n    3320-n      3330-n

CLK ⟶ | $N_k$-1D Contraction Network $D_{Nk}$-1 | ⟶ $OUT_{d_{N_k}}$ -1 ⟶

CLK ⟶

3340

⟶ OUT

3360

**FIG. 33**

3400

3440

3410-1  OUT_1  3420-1

3410-2  OUT_2  3420-2

3410-3  OUT_3  3420-3

Channel 1
Stream

3450-1

3410-k  3420-k

OUT_NM

Channel
D Stream

3450-n

CLK

3430

FIG. 34

$$\text{Zeroth Rank 2 Tensor to}$$

$$\left( (1 + DMA_{ID}) \times \text{floor}\left(\frac{\sum R_2}{D}\right) - 1 \right)^{th} \text{tensor}$$

FIG. 35A

EP 4 202 732 A1

$$\left((DMA_{ID}) \times floor\left(\frac{\sum R_2}{D}\right)\right)^{th} tensor$$

To

$$\left((1 + DMA_{ID}) \times floor\left(\frac{\sum R_2}{D}\right) - 1\right)^{th} tensor$$

**FIG. 35B**

EP 4 202 732 A1

$$\left( (DMA_{ID}) \times floor\left(\frac{\sum R_2}{D}\right) \right)^{th} tensor$$

To

$$\left( (1 + DMA_{ID}) \times floor\left(\frac{\sum R_2}{D}\right) - 1 \right)^{th} tensor$$

**FIG. 35C**

**FIG. 35D**

3600

3610

Rank $N_K$ Tensor

3620

3620-1    3620-2    3620-n

Rank
$N_K - 1$
Tensor
1

Rank
$N_K - 1$
Tensor
2

. . . . . . . . .

Rank
$N_K - 1$
Tensor
$d_{N_K - 1}$

3630

3630-1    3630-2    3630-n

Rank
$N_K - 2$
Tensor
1

Rank
$N_K - 2$
Tensor
2

. . . . . . . . .

Rank
$N_K - 2$
Tensor
$d_{N_K - 2}$

3640

3640-1    3640-2    3640-n

Rank 2 Tensor
1

Rank 2 Tensor
2

. . . . . . . . .

Rank 2 Tensor
$d_3$

FIG. 36

**FIG. 37**

Europäisches
Patentamt
European
Patent Office
Office européen
des brevets

# EUROPEAN SEARCH REPORT

Application Number

EP 21 38 3209

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 073 816 B1 (LU CHIEN-PING [US] ET AL) 11 September 2018 (2018-09-11) * column 4; figures 2, 3, 6, 7A, 7B, 8A-8C * | 1-15 | INV. G06F17/16 |
| A | CHO HYUNGMIN HYUNGMIN CHO@SKKU EDU: "RiSA: A Reinforced Systolic Array for Depthwise Convolutions and Embedded Tensor Reshaping", ACM TRANSACTIONS ON EMBEDDED COMPUTING SYSTEMS, ACM, NEW YORK, NY, US, vol. 20, no. 5s, 22 September 2021 (2021-09-22), pages 1-20, XP058621967, ISSN: 1539-9087, DOI: 10.1145/3476984 * figures 6, 7 * | 1-15 | |
| A | ZHOU YANGJIE ET AL: "Characterizing and Demystifying the Implicit Convolution Algorithm on Commercial Matrix-Multiplication Accelerators", 2021 IEEE INTERNATIONAL SYMPOSIUM ON WORKLOAD CHARACTERIZATION (IISWC), IEEE, 7 November 2021 (2021-11-07), pages 214-225, XP034065151, DOI: 10.1109/IISWC53511.2021.00029 [retrieved on 2022-01-03] * figures 6-8, 10 * | 1-15 | TECHNICAL FIELDS SEARCHED (IPC) G06F |
| A | US 2017/323224 A1 (BRUESTLE JEREMY [US] ET AL) 9 November 2017 (2017-11-09) * [22]; claim 1 * | 5 | |

The present search report has been drawn up for all claims

| Place of search | Date of completion of the search | Examiner |
|---|---|---|
| Berlin | 9 June 2022 | Virnik, Elena |

EPO FORM 1503 03.82 (P04C01)

## ANNEX TO THE EUROPEAN SEARCH REPORT
## ON EUROPEAN PATENT APPLICATION NO.

EP 21 38 3209

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2022

| Patent document cited in search report | | Publication date | Patent family member(s) | | Publication date |
|---|---|---|---|---|---|
| US 10073816 | B1 | 11-09-2018 | CN | 108874745 A | 23-11-2018 |
| | | | CN | 108875958 A | 23-11-2018 |
| | | | US | 10073816 B1 | 11-09-2018 |
| | | | US | 10169298 B1 | 01-01-2019 |
| | | | US | 10216704 B1 | 26-02-2019 |
| | | | US | 10223334 B1 | 05-03-2019 |
| US 2017323224 | A1 | 09-11-2017 | CN | 109478257 A | 15-03-2019 |
| | | | EP | 3452961 A1 | 13-03-2019 |
| | | | US | 2017323224 A1 | 09-11-2017 |
| | | | US | 2021049508 A1 | 18-02-2021 |
| | | | WO | 2017196693 A1 | 16-11-2017 |

EPO FORM P0459

For more details about this annex : see Official Journal of the European Patent Office, No. 12/82